(19) Europäisches Patentamt
European Patent Office
Office européen des brevets

(11) **EP 4 380 129 B1**

(12) **EUROPEAN PATENT SPECIFICATION**

(45) Date of publication and mention
of the grant of the patent:
**01.10.2025 Bulletin 2025/40**

(21) Application number: **22860517.6**

(22) Date of filing: **23.08.2022**

(51) International Patent Classification (IPC):
*H04L 45/16* (2022.01)    *H04L 45/02* (2022.01)
*H04L 45/48* (2022.01)    *H04L 45/00* (2022.01)
*H04L 45/745* (2022.01)    *H04L 69/22* (2022.01)

(52) Cooperative Patent Classification (CPC):
**H04L 45/745; H04L 45/02; H04L 45/16;**
**H04L 45/34; H04L 45/48;** H04L 69/22

(86) International application number:
**PCT/CN2022/114357**

(87) International publication number:
**WO 2023/025171 (02.03.2023 Gazette 2023/09)**

(54) **COMMUNICATION METHOD AND DEVICE**

KOMMUNIKATIONSVERFAHREN UND -VORRICHTUNG

PROCÉDÉ ET DISPOSITIF DE COMMUNICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.08.2021 CN 202110977642**

(43) Date of publication of application:
**05.06.2024 Bulletin 2024/23**

(73) Proprietor: **Huawei Technologies Co., Ltd.**
**Shenzhen, Guangdong 518129 (CN)**

(72) Inventors:
• **MENG, Rui**
  **Shenzhen, Guangdong 518129 (CN)**
• **WAN, Junjie**
  **Shenzhen, Guangdong 518129 (CN)**
• **WANG, Chuang**
  **Shenzhen, Guangdong 518129 (CN)**

(74) Representative: **MERH-IP Matias Erny Reichl**
**Hoffmann**
**Patentanwälte PartG mbB**
**Paul-Heyse-Straße 29**
**80336 München (DE)**

(56) References cited:
**EP-A1- 3 751 805**     **WO-A1-2017/168203**
**CN-A- 101 534 205**    **CN-A- 112 422 438**
**CN-A- 112 511 444**    **US-A1- 2015 049 760**
**US-A1- 2018 091 473**

• **MARIO KOLBERG ; JOHN BUFORD: "Application**
**Layer Multicast extensions to RELOAD",**
**CONSUMER COMMUNICATIONS AND**
**NETWORKING CONFERENCE (CCNC), 2011**
**IEEE, IEEE, 9 January 2011 (2011-01-09), pages**
**1083 - 1087, XP031865847, ISBN:**
**978-1-4244-8789-9, DOI: 10.1109/**
**CCNC.2011.5766334**

**Description**

This application claims priority to Chinese Patent Application No. 202110977642.7, filed with the China National Intellectual Property Administration on August 24, 2021, and entitled "COMMUNICATION METHOD AND APPARATUS".

**TECHNICAL FIELD**

This application relates to the communication field, and in particular, to a communication method and an apparatus.

**BACKGROUND**

Multicast (multicast) means that same data is sent to a plurality of specific receive ends by using a packet sent by a transmit end. In an initial implementation, the transmit end duplicates data in a packet into a plurality of copies based on a quantity of the receive ends, separately encapsulates the copies, and sends the copies to the receive ends respectively. Consequently, the packet is repeatedly transmitted on some links. This reduces utilization of network resources and increases a possibility of network congestion.

To resolve the foregoing problems, a series of multicast technologies are proposed in the industry. The most typical multicast technology is protocol independent multicast-sparse mode (protocol independent multicast-sparse mode, PIM-SM). In the PIM-SM, a multicast forwarding information base (multicast forwarding information base, MFIB) table needs to be maintained for each multicast flow in a network, and this has a serious scalability problem. Other multicast communication methods are disclosed in the patent publications EP3751805A1 and WO2017/168203A1.

**SUMMARY**

This invention is defined by the appended claims. This application discloses a communication method and an apparatus, to improve packet scalability.

To achieve the foregoing objective, the following technical solutions are used in this application.

According to a first aspect, a communication method is provided. The method includes: A first node receives a first packet from a second node, and parses the first packet. The first packet includes multicast routing information of the second node, and the first node is a child node of the second node in a multicast tree. A multicast routing identifier of a node is used by a non-leaf child node of the node in the multicast tree to determine multicast routing information of the non-leaf child node, and multicast routing information of a node includes a multicast routing identifier of the node and multicast routing information of a non-leaf child node of the node in the multicast tree.

It may be learned from the method in the first aspect that: (1) The multicast routing information is embedded into a packet, for example, the first packet. The multicast routing information of a tree recursive structure included in the packet may describe packet forwarding information of a multicast tree or a subtree of the multicast tree. Scalability is good. In addition, a forwarding path may be conveniently planned and specified as required. (2) A tree recursive structure in a packet sent by a node to each child node is the same, for example, is a tree recursive structure of the multicast routing information of the second node, so that the node may send only one packet through each corresponding egress port, to avoid a redundant packet and improve communication efficiency. (3) Multicast routing information of each non-leaf child node does not need to be determined by an upstream node, for example, the second node, but may be determined by the non-leaf child node, to save processing resources of the upstream node and improve operation efficiency.

In a possible design solution, the first node is a non-leaf child node of the second node, a third node is a child node of the first node, and that a first node parses the first packet includes: The first node generates a second packet based on the first packet. The second packet includes multicast routing information of the first node or multicast routing information of the third node, and the multicast routing information of the first node includes any one of the following: a multicast routing identifier of the first node and the multicast routing information of the third node, the multicast routing identifier of the first node, or the multicast routing identifier of the first node and a multicast routing identifier of the third node. In this way, after the first node parses the first packet, the method in the first aspect may further include: The first node sends the second packet to the third node. It may be learned that the first node may process the first packet flexibly. For example, if the third node supports the third node in determining the multicast routing information of the third node, the first node may perform an operation similar to that of the second node, to be specific, sending the second packet including the multicast routing information of the first node to the third node, to avoid a redundant packet. In addition, this saves processing resources of the first node, and improves operation efficiency. If the third node does not support the third node in determining the multicast routing information of the third node, the first node may further determine the multicast routing information of the third node after determining the multicast routing information of the first node, and send, to the third node, the second packet that includes only the multicast routing information of the third node, to ensure that the third node can normally process the second packet, and ensure communication reliability.

Optionally, that the first node generates a second packet based on the first packet may include: The first node determines the multicast routing information of the first node based on a multicast routing identifier of the second node, and performs packet encapsulation based on the multicast routing information of the second node, to obtain the second packet. Alternatively, that the first node generates a second packet based on the first packet may include: The first node determines the multicast routing information of the first node based on a multicast routing identifier of the second node; determines the multicast routing information of the third node based on the multicast routing identifier of the first node in the multicast routing information of the first node; and performs packet encapsulation based on the multicast routing information of the third node, to obtain the second packet.

Further, that the first node determines the multicast routing information of the first node based on a multicast routing identifier of the second node may include: The first node determines a location of the first node in a first node set based on the multicast routing identifier of the second node. The first node set is a node set corresponding to the second node. The first node set includes some or all potential child nodes of the second node. The first node determines the multicast routing information of the first node based on the location of the first node in the first node set.

Further, the multicast routing identifier of the second node includes N first fields, N is a quantity of nodes in the first node set, and that the first node determines a location of the first node in a first node set based on the multicast routing identifier of the second node includes: The first node determines a location of a first field corresponding to the first node in the N first fields. The location of the first field corresponding to the first node indicates the location of the first node in the first node set.

Further, the multicast routing information of the second node further includes an addressing field of the second node, and that the first node determines the multicast routing information of the first node based on a multicast routing identifier of the second node may include: The first node determines the multicast routing information of the first node based on the multicast routing identifier of the second node and the addressing field of the second node.

It may be understood that, if a length of multicast routing information of each non-leaf child node of the second node is the same, the first node can also determine the multicast routing information of the first node based on only the location of the first node in the first node set. In this case, the multicast routing information of the second node may not include the addressing field of the second node, to reduce communication overheads and improve communication efficiency. If the multicast routing information of the second node includes the addressing field of the second node, the first node can determine the multicast routing information of the first node regardless of whether the length of the multicast routing information of each non-leaf child node of the second node is the same, so that the length of the multicast routing information of each non-leaf child node may be flexibly set. Therefore, this solution is applicable to more scenarios.

Further, the addressing field of the second node indicates lengths of multicast routing information of child nodes of the second node. In this way, bit (bit) overheads of the addressing field may be reduced, and communication efficiency may be improved. Alternatively, the addressing field of the second node indicates start locations or end locations of multicast routing information of child nodes of the second node, so that the first node quickly determines the multicast routing information of the first node, to improve multicast efficiency. Alternatively, the addressing field of the second node includes a plurality of delimitation fields, and multicast routing information of child nodes of the second node is separated by the plurality of delimitation fields.

Optionally, the first node and the third node are nodes in a first network, the second packet further includes a first header and a second header, the first header includes the multicast routing information of the third node or the multicast routing information of the first node, and the second header includes unicast/multicast information of a second network. From a perspective of packet forwarding, cross-network forwarding of the second packet may be implemented by encapsulating the unicast/multicast information, so that forwarding is no longer restricted. From a perspective of device deployment, nodes (referred to as new multicast nodes below) that support forwarding of the multicast routing information: the first node and the third node, and nodes (referred to as ordinary nodes below) that support forwarding of only the unicast/multicast information may be deployed in a mixed manner. For example, a small quantity of new multicast nodes may be deployed in the ordinary nodes in a scattered manner, so that a quantity of new multicast nodes to be deployed can be reduced, to reduce deployment difficulty and deployment costs.

Further, the first node has a correspondence between the multicast routing identifier of the first node or the multicast routing identifier of the third node and the unicast/multicast information of the second network.

Further, the first node is a node in the second network. To be specific, the first node is not only a new multicast node that supports forwarding of the multicast routing information, but also an ordinary node that supports forwarding of the unicast/multicast information. Therefore, during deployment, new multicast may be enabled on an ordinary node, so that the ordinary node becomes a new multicast node that supports forwarding of multicast routing information. Therefore, a new multicast node does not need to be independently deployed, to further reduce the deployment costs.

In another possible design solution, the first node is a leaf child node of the second node, and that a first node parses the first packet may include: The first node generates a third packet based on the first packet. The third packet includes unicast/multicast information of a first device. In this way, after the first node parses the first packet, the method in the first aspect may further include: The first node sends the third packet to the first device.

Optionally, the first packet includes a multicast routing identifier of the first node, and the multicast routing identifier of the first node indicates that a destination device is the first device, so that the first node can determine, based on only the multicast routing identifier of the first node, that the third packet needs to be sent to the first device. An inner header of the first packet does not need to be decapsulated, to improve processing efficiency.

In a possible design solution, the first node and the second node are nodes in the first network, the first packet further includes a third header and a fourth header, the third header includes the multicast routing information of the second node, and the fourth header includes unicast/multicast information of a third network. From a perspective of packet forwarding, cross-network forwarding of the first packet may be implemented by encapsulating the unicast/multicast information, so that forwarding is no longer restricted. From a perspective of device deployment, new multicast nodes: the first node and the second node, and ordinary nodes may be deployed in a mixed manner. For example, a small quantity of new multicast nodes may be deployed in the ordinary nodes in a scattered manner, so that a quantity of new multicast nodes to be deployed can be reduced, to reduce deployment difficulty and deployment costs.

Optionally, the second node is a node in the third network. To be specific, the second node is not only a new multicast node that supports forwarding of the multicast routing information, but also an ordinary node that supports forwarding of the unicast/multicast information. Therefore, during deployment, new multicast may be enabled on an ordinary node, so that the ordinary node becomes a new multicast node that supports forwarding of multicast routing information. Therefore, a new multicast node does not need to be independently deployed, to further reduce the deployment costs.

In a possible design solution, the unicast/multicast information may include any one of the following: internet protocol IP unicast/multicast information, multi-protocol label switching MPLS label information, or bit string information. Therefore, this solution is applicable to more scenarios.

According to a second aspect, a communication method is provided. The method includes: A second node obtains a first packet, and sends the first packet to a first node. The first node is a child node of the second node in a multicast tree, the first packet includes multicast routing information of the second node, a multicast routing identifier of a node is used by a non-leaf child node of the node in the multicast tree to determine multicast routing information of the non-leaf child node, and multicast routing information of a node includes a multicast routing identifier of the node and multicast routing information of a non-leaf child node of the node in the multicast tree.

In a possible design solution, the first node and the second node are nodes in a first network, the first packet may further include a third header and a fourth header, the third header includes the multicast routing information of the second node, and the fourth header includes unicast/multicast information of a third network.

Optionally, the second node is a node in the third network.

Optionally, the unicast/multicast information may include any one of the following: internet protocol IP unicast/multicast information, multi-protocol label switching MPLS label information, or bit string information.

In addition, for a technical effect of the method in the second aspect, refer to the technical effect of the method in the first aspect. Details are not described herein again.

According to a third aspect, a communication method is provided. The method includes: A fourth node obtains a fourth packet, and sends a fifth packet to a fifth node based on the fourth packet. The fourth node is a node in a fourth network, the fourth packet includes a fifth header, and the fifth header includes bit string information of a fifth network. The fifth node is a node in the fourth network, the fifth packet includes the fifth header and a sixth header, and the sixth header includes bit string information of the fifth node.

It may be learned from the method in the third aspect that, because the bit string information of the fifth node is encapsulated in the fifth packet, before being sent to the fifth network, the fifth packet may be first forwarded across a network, for example, forwarded to the fifth node across the fourth network, so that forwarding is no longer restricted.

In a possible design solution, the fourth node is configured with a first entry and a second entry. The first entry includes the bit string information of the fifth network, and the second entry includes the string bit information of the fifth node, so that the fourth node can accurately determine the string bit information of the fifth node by traversing the entries.

In a possible design solution, that a fourth node sends a fifth packet to a fifth node based on the fourth packet includes: The fourth node encapsulates the sixth header in the fourth packet, to obtain the fifth packet, and sends the fifth packet to the fifth node.

According to a fourth aspect, a communication method is provided. The method includes: A fifth node receives a fifth packet from a fourth node, and parses the fifth packet. The fourth node and the fifth node are nodes in a fourth network, a fourth packet includes a fifth header and a sixth header, the fifth header includes bit string information of a fifth network, and the sixth header includes bit string information of the fifth node.

In a possible design solution, after the fifth node parses the fifth packet, the method in the fourth aspect may further include: The fifth node removes the sixth header from the fifth packet to obtain the fourth packet, and sends the fourth packet to the fifth network, to implement cross-network forwarding of the packet, so that forwarding is no longer restricted.

In addition, for a technical effect of the method in the fourth aspect, refer to the technical effect of the method in the third aspect. Details are not described herein again.

According to a fifth aspect, a first node is provided. The first node includes a transceiver module and a processing module. The transceiver module is configured to receive a first packet from a second node. The processing module is configured to parse the first packet. The first packet includes multicast routing information of the second node, the first node is a child node of the second node in a multicast tree, a multicast routing identifier of a node is used by a non-leaf child node of the node in the multicast tree to determine multicast routing information of the non-leaf child node, and multicast routing information of a node includes a multicast routing identifier of the node and multicast routing information of a non-leaf child node of the node in the multicast tree.

In a possible design solution, the first node is a non-leaf child node of the second node. The processing module is further configured to generate a second packet based on the first packet. The transceiver module is further configured to send the second packet to a third node. The second packet includes multicast routing information of the first node or multicast routing information of the third node, and the multicast routing information of the first node includes any one of the following: a multicast routing identifier of the first node and the multicast routing information of the third node, the multicast routing identifier of the first node, or the multicast routing identifier of the first node and a multicast routing identifier of the third node.

Optionally, the processing module is further configured to: determine the multicast routing information of the first node based on a multicast routing identifier of the second node, and perform packet encapsulation based on the multicast routing information of the second node, to obtain the second packet. Alternatively, the processing module is further configured to: determine, the multicast routing information of the first node based on a multicast routing identifier of the second node; determine the multicast routing information of the third node based on the multicast routing identifier of the first node in the multicast routing information of the first node; and perform packet encapsulation based on the multicast routing information of the third node, to obtain the second packet.

Further, the processing module is further configured to: determine a location of the first node in a first node set based on the multicast routing identifier of the second node, and determine the multicast routing information of the first node based on the location of the first node in the first node set. The first node set is a node set corresponding to the second node, and the first node set includes some or all potential child nodes of the second node.

Further, the multicast routing identifier of the second node includes N first fields, where N is a quantity of nodes in the first node set, and the processing module is further configured to determine a location of a first field corresponding to the first node in the N first fields. The location of the first field corresponding to the first node indicates the location of the first node in the first node set.

Further, the multicast routing information of the second node further includes an addressing field of the second node. The processing module is further configured to determine the multicast routing information of the first node based on the multicast routing identifier of the second node and the addressing field of the second node.

Further, the addressing field of the second node indicates lengths of multicast routing information of child nodes of the second node. Alternatively, the addressing field of the second node indicates start locations or end locations of multicast routing information of child nodes of the second node. Alternatively, the addressing field of the second node includes a plurality of delimitation fields, and multicast routing information of child nodes of the second node is separated by the plurality of delimitation fields.

Optionally, the first node and the third node are nodes in a first network. The second packet further includes a first header and a second header, the first header includes the multicast routing information of the third node or the multicast routing information of the first node, and the second header includes unicast/multicast information of a second network.

Further, the first node has a correspondence between the multicast routing identifier of the first node or the multicast routing identifier of the third node and the unicast/multicast information of the second network.

Further, the first node is a node in the second network.

In another possible design solution, the first node is a leaf child node of the second node. The processing module is further configured to generate a third packet based on the first packet. The third packet includes unicast/multicast information of a first device. The transceiver module is further configured to send the third packet to the first device.

Optionally, the first packet includes a multicast routing identifier of the first node, and the multicast routing identifier of the first node indicates that a destination device is the first device.

In a possible design solution, the first node and the second node are nodes in a first network, the first packet further includes a third header and a fourth header, the third header includes the multicast routing information of the second node, and the fourth header includes unicast/multicast information of a third network.

Optionally, the second node is a node in the third network.

In a possible design solution, the unicast/multicast information includes any one of the following: internet protocol IP unicast/multicast information, multi-protocol label switching MPLS label information, or bit string information.

Optionally, the transceiver module may alternatively include a sending module and a receiving module. The sending module is configured to implement a sending function of the node in the fifth aspect, and the receiving module is configured to implement a receiving function of the node in the fifth aspect.

Optionally, the node in the fifth aspect may further include a storage module. The storage module stores a program or instructions. When the processing module executes the program or the instructions, the node is enabled to perform the method in the first aspect.

It should be noted that, the node in the fifth aspect may be a terminal or a network device, may be a chip (system) or another part or component that may be disposed in the terminal or the network device, or may be an apparatus including the terminal or the network device. This is not limited in this application.

In addition, for a technical effect of the node in the fifth aspect, refer to the technical effect of the method in the first aspect. Details are not described herein again.

According to a sixth aspect, a second node is provided. The second node includes a processing module and a transceiver module. The processing module is configured to obtain a first packet. The transceiver module is configured to send the first packet to a first node. The first node is a child node of the second node in a multicast tree. The first packet includes multicast routing information of the second node, a multicast routing identifier of a node is used by a non-leaf child node of the node in the multicast tree to determine multicast routing information of the non-leaf child node, and multicast routing information of a node includes a multicast routing identifier of the node and multicast routing information of a non-leaf child node of the node in the multicast tree.

In a possible design solution, the first node and the second node are nodes in a first network, the first packet further includes a third header and a fourth header, the third header includes the multicast routing information of the second node, and the fourth header includes unicast/multicast information of a third network.

Optionally, the second node is a node in the third network.

Optionally, the unicast/multicast information includes any one of the following: internet protocol IP unicast/multicast information, multi-protocol label switching MPLS label information, or bit string information.

Optionally, the transceiver module may alternatively include a sending module and a receiving module. The sending module is configured to implement a sending function of the node in the sixth aspect, and the receiving module is configured to implement a receiving function of the node in the sixth aspect.

Optionally, the node in the sixth aspect may further include a storage module. The storage module stores a program or instructions. When the processing module executes the program or the instructions, the node is enabled to perform the method in the second aspect.

It should be noted that, the node in the sixth aspect may be a terminal or a network device, may be a chip (system) or another part or component that may be disposed in the terminal or the network device, or may be an apparatus including the terminal or the network device. This is not limited in this application.

In addition, for a technical effect of the node in the sixth aspect, refer to the technical effect of the method in the second aspect. Details are not described herein again.

According to a seventh aspect, a fourth node is provided. The fourth node includes a processing module and a transceiver module. The transceiver module is configured to obtain a fourth packet. The processing module is configured to control, based on the fourth packet, the transceiver module to send a fifth packet to a fifth node. The fourth node is a node in a fourth network, the fourth packet includes a fifth header, and the fifth header includes bit string information of a fifth network. The fifth node is a node in the fourth network, the fifth packet includes the fifth header and a sixth header, and the sixth header includes bit string information of the fifth node.

In a possible design solution, the fourth node is configured with a first entry and a second entry. The first entry includes the bit string information of the fifth network. The second entry includes the bit string information of the fifth node.

In a possible design solution, the processing module is further configured to encapsulate the sixth header in the fourth packet, to obtain the fifth packet, so as to control the transceiver module to send the fifth packet to the fifth node.

Optionally, the transceiver module may alternatively include a sending module and a receiving module. The sending module is configured to implement a sending function of the node in the seventh aspect, and the receiving module is configured to implement a receiving function of the node in the seventh aspect.

Optionally, the node in the seventh aspect may further include a storage module. The storage module stores a program or instructions. When the processing module executes the program or the instructions, the node is enabled to perform the method in the third aspect.

It should be noted that, the node in the seventh aspect may be a terminal or a network device, may be a chip (system) or another part or component that may be disposed in the terminal or the network device, or may be an apparatus including the terminal or the network device. This is not limited in this application.

In addition, for a technical effect of the node in the seventh aspect, refer to the technical effect of the method in the third aspect. Details are not described herein again.

According to an eighth aspect, a fifth node is provided. The fifth node includes a transceiver module and a processing module. The transceiver module is configured to receive a fifth packet from a fourth node. The processing module is configured to parse the fifth packet. The fourth node and the fifth node are nodes in a fourth network, a fourth packet includes a fifth header and a sixth header, the fifth header includes bit string information of a fifth network, and the sixth header includes bit string information of the fifth node.

In a possible design solution, the processing module is further configured to: after parsing the fifth packet, remove the sixth header from the fifth packet, to obtain the fourth packet, so as to control the transceiver module to send the fourth packet to the fifth network.

Optionally, the transceiver module may alternatively include a sending module and a receiving module. The sending module is configured to implement a sending function of the node in the eighth aspect, and the receiving module is configured to implement a receiving function of the node in the eighth aspect.

Optionally, the node in the eighth aspect may further include a storage module. The storage module stores a program or instructions. When the processing module executes the program or the instructions, the node is enabled to perform the method in the fourth aspect.

It should be noted that, the node in the eighth aspect may be a terminal or a network device, may be a chip (system) or another part or component that may be disposed in the terminal or the network device, or may be an apparatus including the terminal or the network device. This is not limited in this application.

In addition, for a technical effect of the node in the eighth aspect, refer to the technical effect of the method in the fourth aspect. Details are not described herein again.

According to a ninth aspect, a communication apparatus is provided. The apparatus includes a processor. The processor is configured to perform the method in any one of the first aspect to the fourth aspect.

In a possible design solution, the apparatus in the ninth aspect may further include a transceiver. The transceiver may be a transceiver circuit or an interface circuit. The transceiver may be used by the apparatus to communicate with another apparatus.

In a possible design solution, the apparatus in the ninth aspect may further include a memory. The memory may be integrated with the processor, or may be disposed separately. The memory may be configured to store a computer program and/or data related to the method in any one of the first aspect to the fourth aspect.

In this application, the apparatus in the ninth aspect may be a terminal or a network device, a chip (system) or another part or component that may be disposed in the terminal or the network device, or an apparatus including the terminal or the network device.

In addition, for a technical effect of the apparatus in the ninth aspect, refer to the technical effect of the method in any one of the first aspect to the fourth aspect. Details are not described herein again.

According to a tenth aspect, a communication apparatus is provided. The apparatus includes a processor and a memory. The memory is configured to store computer instructions. When the processor executes the instructions, the apparatus is enabled to perform the method in any one of the first aspect to the fourth aspect.

In a possible design solution, the apparatus in the tenth aspect may further include a transceiver. The transceiver may be a transceiver circuit or an interface circuit. The transceiver may be used by the apparatus to communicate with another apparatus.

In this application, the apparatus in the tenth aspect may be a terminal or a network device, a chip (system) or another part or component that may be disposed in the terminal or the network device, or an apparatus including the terminal or the network device.

In addition, for a technical effect of the apparatus in the tenth aspect, refer to the technical effect of the method in any one of the first aspect to the fourth aspect. Details are not described herein again.

According to an eleventh aspect, a communication apparatus is provided. The apparatus includes a logic circuit and an input/output interface. The input/output interface is configured to receive code instructions and transmit the code instructions to the logic circuit. The logic circuit is configured to run the code instructions, to perform the method in any one of the first aspect to the fourth aspect.

In a possible design solution, the apparatus in the eleventh aspect may further include a transceiver. The transceiver may be a transceiver circuit. The transceiver may be used by the apparatus to communicate with another apparatus.

In a possible design solution, the apparatus in the eleventh aspect may further include a memory. The memory may be integrated with the processor, or may be disposed separately. The memory may be configured to store a computer program and/or data related to the method in any one of the first aspect to the fourth aspect.

In this application, the apparatus in the eleventh aspect may be a terminal or a network device, a chip (system) or another part or component that may be disposed in the terminal or the network device, or an apparatus including the terminal or the network device.

In addition, for a technical effect of the apparatus in the eleventh aspect, refer to the technical effect of the method in any one of the first aspect to the fourth aspect. Details are not described herein again.

According to a twelfth aspect, a communication apparatus is provided. The apparatus includes a processor and a transceiver. The transceiver is used by the communication apparatus to exchange information with another apparatus. The processor executes program instructions, to perform the method in any one of the first aspect to the fourth aspect.

In a possible design solution, the apparatus in the twelfth aspect may further include a memory. The memory may be integrated with the processor, or may be disposed separately. The memory may be configured to store a computer program and/or data related to the method in any one of the first aspect to the fourth aspect.

In this application, the apparatus in the twelfth aspect may be a terminal or a network device, a chip (system) or another part or component that may be disposed in the terminal or the network device, or an apparatus including the terminal or the network device.

In addition, for a technical effect of the apparatus in the twelfth aspect, refer to the technical effect of the method in any one of the first aspect to the fourth aspect. Details are not described herein again.

According to a thirteenth aspect, a communication system is provided. The communication system includes one or more terminals or network devices, such as a first node, a second node, a third node, a fourth node, or a fifth node. The terminal or the network device is configured to perform the method in any one of the first aspect to the fourth aspect.

According to a fourteenth aspect, a computer-readable storage medium is provided, and includes a computer program. When the computer program is run on a computer, the computer is enabled to perform the method in any one of the first aspect to the fourth aspect.

According to a fifteenth aspect, a computer program product is provided, and includes a computer program. When the computer program is run on a computer, the computer is enabled to perform the method in any one of the first aspect to the fourth aspect.

**BRIEF DESCRIPTION OF DRAWINGS**

FIG. 1A is a schematic diagram 1 of a structure of a multicast tree;
FIG. 1B is a schematic diagram of structures of nodes and entities;
FIG. 2 is a schematic diagram 2 of a structure of a multicast tree;
FIG. 3A is a schematic diagram of a forwarding procedure of a multicast packet;
FIG. 3B is a schematic diagram of a structure of nodes and child nodes;
FIG. 4 is a schematic diagram of an architecture of a network;
FIG. 5 is a schematic diagram 3 of structures of multicast trees;
FIG. 6 is a schematic diagram of an IP multicast scenario;
FIG. 7 is a schematic diagram of a BIER multicast scenario;
FIG. 8 is a schematic flowchart 1 of a communication method according to an embodiment of this application;
FIG. 9 is a schematic diagram 1 of a structure of multicast routing information according to an embodiment of this application;
FIG. 10 is a schematic diagram 2 of a structure of multicast routing information in a communication method according to an embodiment of this application;
FIG. 11 is a schematic diagram 3 of a structure of multicast routing information in a communication method according to an embodiment of this application;
FIG. 12 is a schematic diagram 4 of a structure of multicast routing information in a communication method according to an embodiment of this application;
FIG. 13 is a schematic diagram 1 of structures of a multicast routing identifier in a communication method according to an embodiment of this application;
FIG. 14 is a schematic diagram of mapping relationships of multicast routing identifiers in a communication method according to an embodiment of this application;
FIG. 15 is a schematic diagram 2 of structures of a multicast routing identifier in a communication method according to an embodiment of this application;
FIG. 16 is a schematic diagram 5 of a structure of multicast routing information in a communication method according to an embodiment of this application;
FIG. 17 is a schematic diagram 6 of structures of multicast routing information in a communication method according to an embodiment of this application;
FIG. 18 is a schematic diagram 7 of a structure of multicast routing information in a communication method according to an embodiment of this application;
FIG. 19 is a schematic diagram 1 of a structure of a packet in a communication method according to an embodiment of this application;
FIG. 20 is a schematic diagram of an architecture of a multicast tree in a communication method according to an embodiment of this application;
FIG. 21 is a schematic diagram 2 of a structure of a packet in a communication method according to an embodiment of this application;
FIG. 22 is a schematic diagram 3 of a structure of a packet in a communication method according to an embodiment of this application;

FIG. 23 is a schematic diagram 4 of a structure of a packet in a communication method according to an embodiment of this application;

FIG. 24 is a schematic flowchart 2 of a communication method according to an embodiment of this application;

FIG. 25(a) to FIG. 25(f) are a schematic diagram 6 of a structure of a packet in a communication method according to an embodiment of this application;

FIG. 26 is a schematic flowchart 3 of a communication method according to an embodiment of this application;

FIG. 27 is a schematic diagram of a BIER multicast scenario in a communication method according to an embodiment of this application;

FIG. 28 is a schematic diagram 7 of a structure of a packet in a communication method according to an embodiment of this application;

FIG. 29 is a schematic diagram 1 of a structure of a communication apparatus according to an embodiment of this application; and

FIG. 30 is a schematic diagram 2 of a structure of a communication apparatus according to an embodiment of this application.

## DESCRIPTION OF EMBODIMENTS

The following describes technical terms in embodiments of this application.

1. Multicast

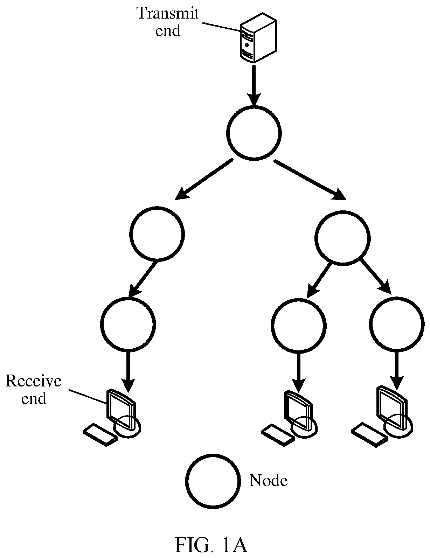

The multicast is a point-to-multipoint transmission technology. For example, as shown in FIG. 1A, a transmit end, for example, a server, may send, by using a packet, same data to a plurality of receive ends, for example, clients. The packet is also referred to as a multicast packet. After being sent by the transmit end, the multicast packet may arrive at the plurality of receive ends via a plurality of multicast nodes (nodes for short).

2. Node

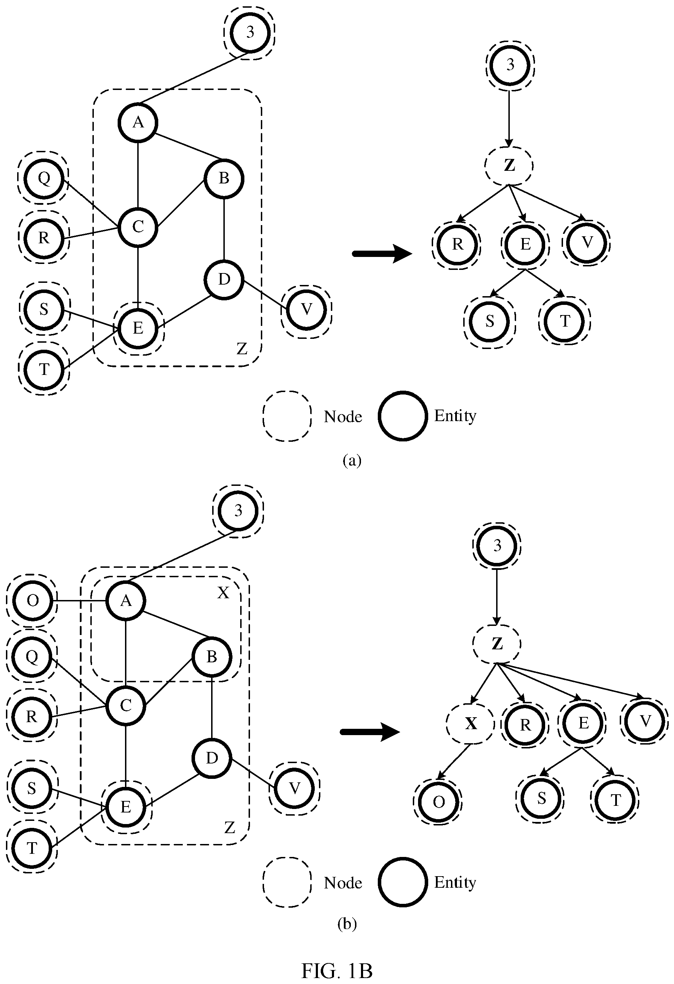

The node is capable of forwarding a multicast packet, for example, forwarding the multicast packet directly, or forwarding the multicast packet after encapsulation. One node may include one or more entities. One entity may belong to only one node, or may belong to a plurality of nodes. For example, as shown in (a) in FIG. 1B and (b) in FIG. 1B, a network topology of entities is shown on the left, and a multicast tree is shown on the right. As shown in (a) in FIG. 1B, a node Z includes a plurality of entities, such as an entity A, an entity B, an entity C, an entity D, and an entity E. A node E includes one entity, for example, the entity E. It may be learned that the entity E belongs to both the node Z and the node E. As shown in (b) in FIG. 1B, a node X includes a plurality of entities, such as the entity A and the entity B. It may be learned that the entity A and the entity B belong to both the node Z and the node X.

It should be noted that, for ease of description, in embodiments of this application, if one entity belongs to only one node, the node and the entity use a same identifier. In this case, an address of the entity may also be described as an address of the node, and an action performed by the node is an action performed by the entity. Therefore, when an address of a node is mentioned below, the address refers to an address of an entity in the node. For example, a node including only the entity A is referred to as a node A. In this case, an address of the node A is equivalent to an address of the entity A. A node including only the entity B is referred to as a node B. In this case, an address of the node B is equivalent to an address of the node entity B.

In this application, the entity may also be referred to as a functional entity. The entity may be a physical entity or a virtual entity. The physical entity may be, for example, a router, a switch, a server, a host, a network adapter, a line card, a chip, a die (DIE) of the chip, a terminal (for example, a mobile terminal), or an internal module of a device. The virtual entity may be, for example, a virtual machine, a container, a process, or a thread. When the entity is a physical entity, the node may also be referred to as a multicast device. For ease of understanding, the node is used as an example below for description.

3. Multicast tree

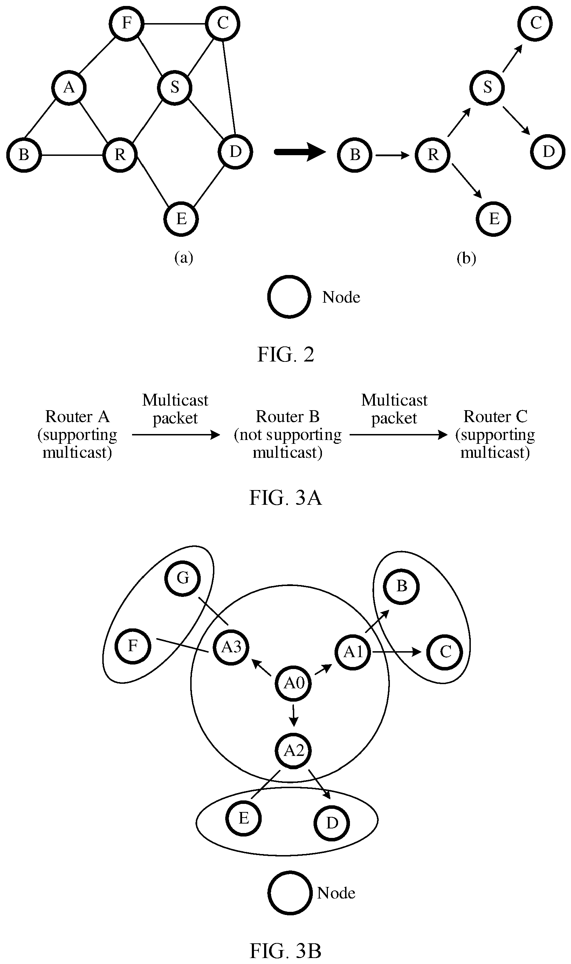

The multicast tree is based on a specific network topology, and is generated for a combination of a specific source node and specific destination nodes by using a routing protocol, for example, protocol independent multicast (protocol independent multicast, PIM) or interior gateway protocol (interior gateway protocol, IGP), or by using another method, for example, manual configuration or controller calculation. The multicast tree is a path from the source node to all the destination nodes. This path is of a tree structure in which the source node is used as a root node and the destination nodes are used as leaf nodes, and is referred to as a multicast tree. The multicast tree may also be referred to as a multicast distribution tree (multicast distribution tree, MDT), and all nodes in the multicast tree support a same type of multicast. For example, FIG. 2 is a schematic diagram of a multicast tree. (a) on the left in FIG. 2 is a network topology diagram. If a source node is a node B, and destination nodes are a node C, a node D, and a node E, an example of a multicast tree generated for a combination of the source node and the destination nodes may be shown in (b) in FIG. 2.

It should be noted that the foregoing transmit end and/or receive ends may be nodes in the multicast tree, or may not be nodes in the multicast tree. If the transmit end and the receive ends are nodes in the multicast tree, the source node may be the transmit end, and the destination nodes may be the receive ends. If the receive ends are not nodes in the multicast tree, after data arrives at a leaf node, the leaf node continues to send the data to a receive end connected to the leaf node. For ease of description, unless otherwise specified, in embodiments of this application, a method provided in embodiments of this application is described by using an example in which both a transmit end (the following second node) and a receive end (the following first node or the following third node) are nodes in a multicast tree.

4. Child node

A child node of a node refers to a node that is in the multicast tree and at which a packet of the node may arrive through one-hop multicast, for example, through one-time multicast forwarding. The one-hop multicast means that a multicast forwarding table is searched once. For example, in (b) in FIG. 2, a node R is a child node of the node B, a node S is a child node of the node R, and the node E is a child node of the node R. It should be noted that, if a multicast packet sent by a previous node supporting multicast in the multicast tree arrives at a next node supporting multicast in the multicast tree via one or more other nodes (nodes not in the multicast tree) that do not support multicast, the next node supporting multicast is a child node of the previous node supporting multicast. That is, the multicast packet arrives at the next node supporting multicast from the previous node supporting multicast through one-hop multicast. For example, FIG. 3A is a schematic diagram of a forwarding procedure of routers. As shown in FIG. 3A, a router A and a router C are routers supporting multicast and are nodes in a multicast tree, and a router B is a router that does not support multicast. If the router A sends a multicast packet to the router C, the router C is a child node of the router A, and the router B is not a child node of the router A.

In addition, when a child node of a node is a leaf node in the multicast tree, the child node may be referred to as a leaf child node of the node; or when a child node of a node is not a leaf node in the multicast tree, the child node may be referred to as a non-leaf child node of the node.

In the descriptions of this application, unless otherwise specified, a child node of a node mentioned below in this application refers to a child node of the node in the multicast tree. The child node may also have another name, for example, a multicast child node. This is not limited in this application.

In addition, a module other than a network adapter in a device may be considered as a node (assumed to be a node a), and a network adapter in a server may be considered as another node (assumed to be a node b). In this case, the node b may be considered as a child node of the node a. A module other than a line card in a router may be considered as a node (assumed to be a node c), and the line card in the router may be considered as another node (assumed to be a node d). In this case, the node d may be considered as a child node of the node c. For example, as shown in FIG. 3B, A is a router, a node A0 is a module other than a line card in the router, and a node A1, a node A2, and a node A3 are three line cards in the router. The router may send multicast packets to a node B, a node C, a node D, a node E, a node F, and a node G respectively through interfaces on the three line cards. In this case, the node A1, the node A2, and the node A3 may be child nodes of the node A0. A may alternatively be a server. In this case, a node A1, a node A2, and a node A3 are three network adapters in the server. A may send multicast packets to a node B, a node C, a node D, a node E, a node F, and a node G respectively through network interfaces on the three network adapters.

5. Potential child node

A potential child node of a node refers to a node at which a packet of the node may arrive through one-hop multicast. For example, the node R and the node A in FIG. 2 are both potential child nodes of the node B, and the node F, the node R, the node C, and the node D are all potential child nodes of the node S. It may be understood that a potential child node of a node includes a child node of the node in the multicast tree. When a potential child node of a node is located in the multicast tree, the potential child node is a child node of the node in the multicast tree. The potential child node may also have another name, for example, a multicast object or a standby child node. This is not limited in this application.

6. Network

The network may be divided into different areas: different network areas (domains for short) or different network layers, to carry different services.

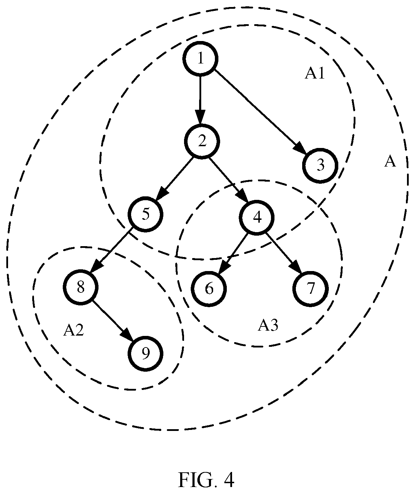

A network may include all nodes of a multicast tree, and the network may also be considered as a virtual node including all the nodes. For example, FIG. 4 is a schematic diagram of a structure of a multicast tree. As shown in FIG. 4, the multicast tree includes a node 1 to a node 9. The node 1 is a source node, and the node 6, the node 7, and the node 9 are destination nodes. The node 1 to the node 9 may form a network, for example, a network A. A network may include a plurality of sub-networks or a plurality of sub-network areas. The sub-networks may be obtained through division by using a routing protocol, for example, the PIM or the IGP, or by using another method, for example, manual configuration or controller calculation. Each sub-network may include some nodes in a multicast tree. In the multicast tree, a node that is not located at an edge of the sub-network may be referred to as a non-edge node or a non-boundary node, and a node located at an edge of the sub-network may be referred to as an edge node or a boundary node. The non-edge node may be configured to forward a packet within the sub-network, and the edge node may be configured to forward a packet between sub-networks, for example, receive a packet from a previous sub-network, or send a packet to a next sub-network. That is, an edge node of a sub-network may serve as an ingress node or an egress node of the sub-network. Two adjacent sub-networks may share a same edge node, or each may have an exclusive edge node. If the same edge node is shared, the edge node serves as both the egress node of the previous sub-network and the ingress node of the next sub-network. If the adjacent sub-networks each have the exclusive edge node, the edge node either serve as the egress node of the sub-network in which the edge node is located or serve as the ingress node of the sub-network in which the edge node is located. For example, as shown in FIG. 4, the network A includes a sub-network A1, a sub-network A2, and a sub-network A3. The sub-network A1 is used as an example. The sub-network A1 includes the node 1, the node 2, the node 3, the node 4, and the node 5. The node 2 is a non-edge node, and the other nodes are all edge nodes. To be specific, the node 1, the node 3, the node 4, and the node 5 are edge nodes. The node 1 is an exclusive edge node of the sub-network A1, and is an ingress node of the sub-network A1. The node 3 and the node 5 are also exclusive edge nodes of the sub-network A1, and are egress nodes of the sub-network A1. The node 4 is an edge node shared by the sub-network A1 and the sub-network A3. To be specific, the node 4 is both an egress node of the sub-network A1 and an ingress node of the sub-network A3.

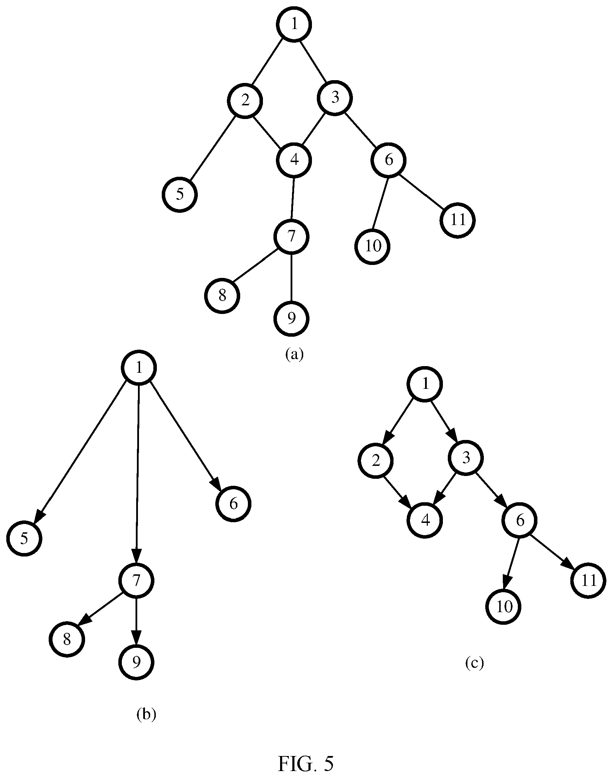

It should be understood that, if nodes support different multicast modes, the nodes form different networks, or the nodes belong to different networks. For a same node, if the node simultaneously supports a plurality of multicast modes, the node may belong to a plurality of networks. For example, as shown in (a) in FIG. 5, a network topology structure includes a node 1 to a node 11. The node 1, the node 5, the node 6, the node 7, the node 8, and the node 9 support one type of multicast, for example, internet protocol (internet protocol, IP) multicast. The node 1, the node 2, the node 3, the node 4, the node 6, the node 10, and the node 11 support another type of multicast, for example, a multi-protocol label switching (multi-protocol label switching, MPLS) point-to-multipoint (point-to-multipoint, P2MP) tunnel. In this case, as shown in (b) in FIG. 5, the node 1, the node 5, the node 6, the node 7, the node 8, and the node 9 may form a multicast tree, for example, a multicast tree T1, and the multicast tree T1 belongs to a network, for example, a network B. As shown in (c) in FIG. 5, the node 1, the node 2, the node 3, the node 4, the node 6, the node 10, and the node 11 may form another multicast tree, for example, a multicast tree T2, and the multicast tree T2 belongs to another network, for example, a network C. The node 1 and the node 6 both belong to two networks: the network B and the network C.

7. Unicast packet and multicast packet

First definitions of the unicast packet and the multicast packet:

A packet is classified based on a processing behavior of a node on the packet. In this case, whether a packet is a unicast packet or a multicast packet is relative. Details are as follows.

For a node, if the node does not need to perform multicast forwarding based on multicast routing information in the packet, needs to perform unicast forwarding based on only unicast encapsulation in the packet without needing to search a multicast forwarding table based on the multicast routing information for forwarding, searches a unicast forwarding table based on the unicast encapsulation for forwarding, or consumes the packet, that is, processes the packet without forwarding, the packet is a unicast packet for the node. Conversely, if the node needs to perform multicast forwarding based on the multicast routing information in the packet, or needs to search the multicast forwarding table based on the multicast routing information for forwarding, the packet is a multicast packet for the node.

For example, a node A and a node B have a topology connection, and the node B and a node C have a topology connection. If the node B forwards a packet from the node A to the node C through multicast, and the node C consumes the packet after receiving the packet, the packet is a unicast packet for B, is a multicast packet for the node B, and is a unicast packet for the node C. For another example, the node A and the node B have a topology connection. If the node A sends a packet to the node B through unicast, the packet is a unicast packet for the node B.

Second definitions of the unicast packet and the multicast packet:

A packet is classified based on a structure of the packet. Specifically, a packet whose outermost header is a unicast header is a unicast packet, and a packet whose outermost header is a multicast header is a multicast packet. An IP header whose destination IP address is a unicast address or a media access control (media access control, MAC) header whose destination MAC address is the unicast address is a unicast header. An IP header whose destination IP address is a multicast address, a MAC header whose destination MAC address is the multicast address, or a multi-protocol label switching (multi-protocol label switching, MPLS) header whose destination address is an MPLS point-to-multipoint (point-to-multipoint, P2MP) tunnel label is a multicast header. In addition, the multicast routing information mentioned below in this application is also a multicast header. For a specific implementation, refer to the following descriptions. Details are not described herein.

Based on the two definitions of the unicast packet and two definitions of the multicast packet, to make a method provided in embodiments of this application clearer, the method provided in embodiments of this application is described by using the second definitions in this application. In this application, the method provided in embodiments of this application is described by using the first definitions. When the second definitions are used in this application, whether a packet is a unicast packet or a multicast packet may be determined based on a specific structure of the packet. For example, in the following descriptions, a second node sends a first packet to a first node. If the outermost header of the first packet is a unicast header, when the second definitions are used for description, the first packet may be understood as a unicast packet.

In addition, the unicast encapsulation in the packet in this application may be internet protocol IP version 4 (IPv4 for short) unicast encapsulation, IP version 6 (IPv6 for short) unicast encapsulation, or any other possible encapsulation form. In this application, unicast encapsulation in any possible form may be performed on a packet including multicast routing information, or the unicast encapsulation may not be performed. The unicast encapsulation of the packet enables the packet to traverse a network between two nodes (or to be transmitted between the two nodes) in a unicast form. The multicast routing information mentioned in the explanations of the unicast packet and the multicast packet refers to the multicast routing information defined below in this application.

It should be noted that, in embodiments of this application, when the multicast packet is an IP packet, to be specific, the multicast packet includes an IP header, and a destination IP address in the IP header is a unicast IP address, the IP header of the multicast packet is unicast encapsulation of the multicast packet. It should be noted that, if the multicast packet in this application is an IP packet, in the descriptions of this application, a destination address refers to a destination IP address.

In the following descriptions in this application, if a node receives a multicast packet and the multicast packet is an IP packet, the node first determines whether a destination address in an IP header of the multicast packet is an address of the node. If the destination address is the address of the node, the node parses multicast information after the IP header in the multicast packet, and forwards the multicast packet based on the multicast information. In addition, for a process in which the node generates a multicast packet and sends the multicast packet to another node, the node may first determine multicast routing information and data that need to be sent to the another node, and determine an address of a next hop (namely, an address of the another node). Then, the node may fill the address of the another node into a destination address field in the IP header, and encapsulate the multicast routing information and the data in the IP header to generate the multicast packet, so as to send the multicast packet to the another node. In the following descriptions of this application, for brevity, this process is not described in detail in each step. A unified description is provided herein. Details are not described below again.

8. Forwarding of the multicast packet

Currently, the multicast packet may be forwarded in a plurality of manners, for example, implemented by using the PIM-SM (Solution 1) or bit index explicit replication (bit index explicit replication, BIER) (Solution 2). The solutions are separately described below.

Solution 1:

The PIM-SM is a multicast routing protocol. The PIM-SM is used to establish an MFIB table hop by hop from receive ends to a multicast source (a transmit end or a rendezvous point (rendezvous point, RP)), to finally construct a tree structure in which the multicast source is a root node and the receive ends are leaf nodes, that is, a multicast tree. A multicast packet is duplicated on each router (which may also be referred to as a multicast router) in a direction from the root node in the multicast tree to the leaf nodes until the packet arrives at the receive end. All the receive ends may form a multicast group, and one receive end is a member in the multicast group. A multicast tree in which the RP is the root node and a member in the multicast group is a leaf node is referred to as a rendezvous point tree (RP tree, RPT). A multicast tree in which the transmit end is the root node and a member in the multicast group is a leaf node is referred to as a shortest path tree (shortest path tree, SPT). A forwarding procedure for the RPT is basically the same as that for the SPT. The SPT is used as an example. After the SPT is constructed, each router stores an MFIB table, and the MFIB table stores a group address (group address) and a port list (port list). When receiving a multicast packet whose destination address is the group address, a router sends the multicast packet through a port in the port list.

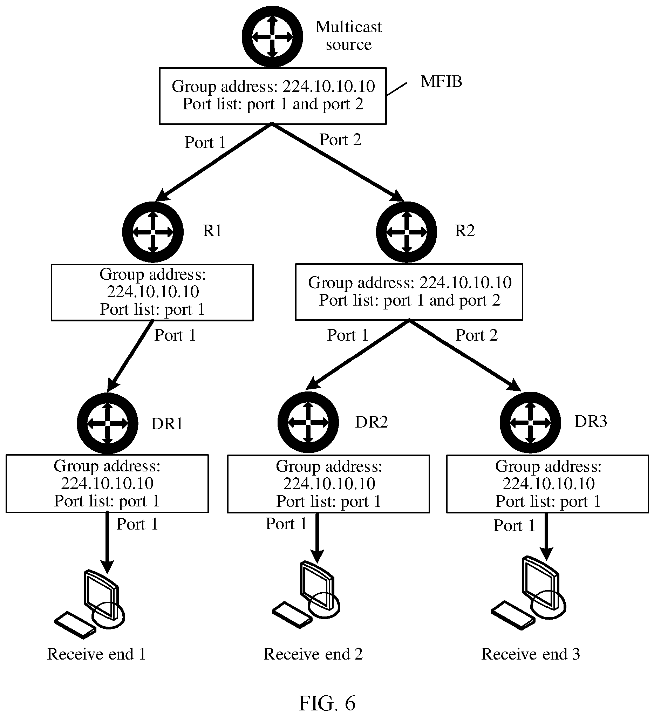

For ease of understanding, a multicast tree shown in FIG. 6 is used as an example below to describe joining and forwarding in the PIM-SM.

As shown in FIG. 6, if a receive end 1 wants to join a multicast group, the receive end 1 may send an IGMP message to DR1. "DR" may represent a designated router, to be specific, a router that sends a multicast packet to a member in the multicast group. The IGMP message may include: an address of the multicast group, for example, 224.10.10.10, a source address of the receive end 1, for example, 1.1.1.1, and a same destination address corresponding to all routers in a multicast tree, for example, 224.0.0.2.

After receiving the IGMP message from the receive end 1, DR1 may generate a join (join) message based on the IGMP message, and send the join message to R1. The join message may include: an upstream neighbor of DR1 or a previous-hop device of DR1, for example, an address of R1, the address of the multicast group, and the source address of the receive end 1. An address of the upstream neighbor of DR1 may be recorded in an MFIB table preconfigured on DR1, and "R" may represent an ordinary router. In addition, DR1 may further search the MFIB table of DR1 based on the IGMP message. If the search misses, DR1 may establish an MFIB table. In the MFIB table of DR1, a group address may be the address of the foregoing multicast group, for example, 224.10.10.10, and an egress port list includes an ingress port through which DR1 receives the join message, for example, a port 1. If a match is found, DR1 may maintain the MFIB table, to be specific, check whether an egress port list in the MFIB table of DR1 includes the foregoing ingress port. If the ingress port is not included, DR1 may add the ingress port to the port list.

After receiving the join message from DR1, R1 may modify the address of the upstream neighbor of DR1 in the join message, for example, an address of R1, to an address of an upstream neighbor of R1, for example, the address of the multicast source, so as to send the join message to the multicast source. The address of the upstream neighbor of R1 may be recorded in an MFIB table preconfigured on R1. Similarly, R1 may also search the MFIB table of R1 based on the join message. If the search misses, R1 may establish an MFIB table. In the MFIB table of R1, a group address may be the address of the foregoing multicast group, for example, 224.10.10.10, and an egress port list includes an ingress port through which R1 receives the join message, for example, a port 1. If a match is found, R1 may maintain the MFIB table, to be specific, check whether an egress port list in the MFIB table of R1 includes the foregoing ingress port. If the ingress port is not included, R1 may add the ingress port to the port list.

After receiving the join message from R1, the multicast source may search the MFIB table of R1 based on the join message. If the search misses, the multicast source may establish an MFIB table. In the MFIB table of the multicast source, a group address may be the address of the foregoing multicast group, for example, 224.10.10.10, and an egress port list includes an ingress port through which the multicast source receives the join message, for example, a port 1. If a match is found, the multicast source may maintain the MFIB table, to be specific, check whether an egress port list in the MFIB table of the multicast source includes the foregoing ingress port. If the ingress port is not included, the multicast source may add the ingress port to the port list. In this way, a multicast path from the receive end 1 to the multicast source is established.

It should be understood that, a procedure used by a receive end 2 and a receive end 3 to join the multicast group is similar to that used by the receive end 1. Details are not described herein again. After the receive end 2 and the receive end 3 also join the multicast group, an MFIB table maintained by each router in the multicast group may be shown in FIG. 6. On this basis, if the multicast source wants to send a multicast packet, and a destination address of the multicast packet is 224.10.10.10, the multicast source may search the MFIB table of the multicast source, to determine that egress ports of the multicast packet include the port 1 and a port 2, so as to send one copy of multicast packet to each of the two ports. After receiving the multicast packet from the multicast source, R1 may search the MFIB table of R1, to determine that an egress port of the multicast packet includes the port 1, so as to forward the multicast packet to the port 1. After receiving the multicast packet from the multicast source, R2 may search the MFIB table of R2 to determine that egress ports of the multicast packet include the port 1 and a port 2. Then, R2 may duplicate the multicast packet into one copy, to send one copy of multicast packet to each of the two ports. In this way, the receive end 1, the receive end 2, and the receive end 3 may all receive the same multicast packets.

In conclusion, it may be learned from the foregoing related descriptions of Solution 1 that the PIM-SM is implemented by constructing and maintaining the MFIB table. That is, in the PIM-SM, the MFIB table needs to be maintained for each multicast flow in the network. However, a quantity of entries in the MFIB table maintained on each router is limited. If there are an excessively large quantity of multicast trees or multicast flows, the router cannot expand the MFIB table accordingly. As a result, scalability of the multicast trees is poor. In addition, the multicast tree in the PIM-SM is constructed by establishing the MFIB table hop by hop from the receive ends to the multicast source. Therefore, the multicast tree is completely fixed, and a forwarding path cannot be actively controlled based on planning. In addition, only a previous-hop node of a leaf node learns that the leaf node joins or leaves the multicast tree, and the multicast source is unaware. In other words, the multicast source is unaware of existence of a user. Manageability is poor.

Solution 2:

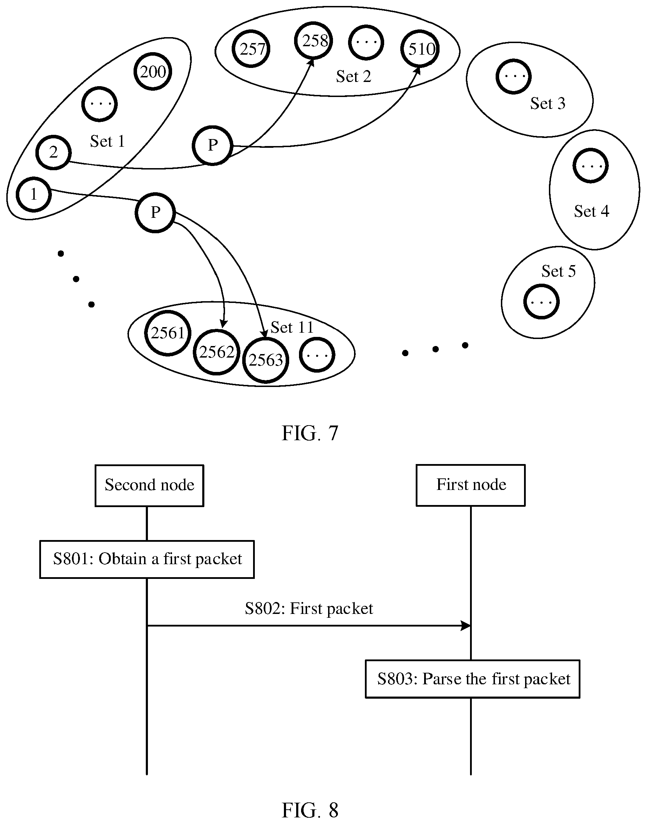

The BIER is a stateless multicast routing protocol. A router supporting the BIER is referred to as a BFR (Bit-forwarding router), a domain ingress router supporting the BIER is referred to as a BFIR (Bit-forwarding ingress router), and a domain egress router supporting the BIER is referred to as a bit-forwarding egress router (bit-forwarding egress router, BFER). According to the BIER, a unique identifier (ID) is assigned to each BFER, and is referred to as a BFRID. A typical value ranges from 1 to 65536. FIG. 7 is a schematic diagram of set division of BFERs in the BIER. As shown in FIG. 7, if all BFERs are divided into several sets (sets), each set has one set identifier (set identifier, SI), and a typical value ranges from 0 to 255. Each set includes a maximum of 256 BFERs. Each set occupies BFRIDs of SI*256+1 to (SI+1)*256, where "*" represents "multiply".

It is specified in the BIER protocol that an SI and a bit string (bit string) that are carried in a header of a multicast packet indicate specific BFERs to which the packet is multicast. The bit string is a bitmap (bitmap) whose length is 256 bits (bits), and each bit corresponds to one BFER. For example, when a value of a bit corresponding to a BFER is 1, it indicates that the packet needs to be multicast to the BFER. One multicast packet can carry only one SI and one bit string. Therefore, the packet can be multicast to only one set. For example, refer to FIG. 7. A BFER whose ID is 2 in a set 1 sends a multicast packet to BFERs whose IDs are 258 and 510 in a set 2 via a node P (namely, a node within an operator network). The multicast packet includes one SI and one bit string. The SI is 2, bits corresponding to the BFERs whose IDs are 258 and 510 in the bit string are 1, and other bits are 0. In addition, each BFER maintains a bit index forwarding table (bit index forwarding table, BIFT), and the BIFT is a multicast routing table defined by the BIER. The BFER may forward the multicast packet based on the maintained BIFT and the SI and the bit string that are carried in a header of the multicast packet.

In conclusion, it may be learned from the related descriptions of Solution 2 that, because one multicast packet can carry only one SI and one bit string, the packet can be multicast to only one set. This means that if there are 50 sets in total, and the multicast packet needs to be sent to BFERs in the 50 sets, 50 copies of multicast packets need to be sent. An excessively large quantity of packets results in poor multicast efficiency. In addition, the BIFT in the BIER is fixed, that is, each node has a fixed next hop. Therefore, path routing cannot be planned or specified.

To resolve the problems in Solution 1 and Solution 2, this application provides a communication method, which is applicable to communication between at least two nodes, for example, communication between a first node and a second node. Refer to FIG. 8, the method includes the following steps.

S801: The second node obtains a first packet.

The second node may be any node having a child node in a multicast tree, and may be specifically a source node in the multicast tree, or may be a non-leaf child node of the source node or of a node. This is not limited. If the second node is the source node, that the second node obtains a first packet may include generating the first packet. If the second node is a non-leaf child node of a node, that the second node obtains a first packet may include receiving the first packet from the node. For ease of understanding, this application is described by using an example in which the second node is the source node.

The first packet is a multicast packet corresponding to the multicast tree. To be specific, the first packet includes multicast routing information of a node in the multicast tree or of a node in a subtree of the multicast tree. Multicast routing information of a node includes: a multicast routing identifier of the node and multicast routing information of a non-leaf child node of the node in the multicast tree. For a specific implementation of the multicast routing identifier, refer to the following related descriptions in S802 and S803. Details are not described herein. Multicast routing information of a non-leaf child node in multicast routing information of a node may be a multicast routing information list. The list may be arranged sequentially, in a chain manner, or in another possible manner. This is not limited in this application. It may be understood that, if a node does not have a non-leaf child node, multicast routing information of the node does not include multicast routing information of the non-leaf child node, and includes only a multicast routing identifier of the node, or may not include the multicast routing identifier of the node. This is not limited. Therefore, for the second node, the first packet includes multicast routing information of the second node. The multicast routing information of the second node includes a multicast routing identifier of the second node and multicast routing information of a non-leaf child node of the second node. The multicast routing information of the non-leaf child node includes: a multicast routing identifier of the non-leaf node and multicast routing information of a non-leaf child node of the non-leaf node, and so on. It may be learned that multicast routing information in the first packet is of a tree recursive structure, and multicast routing information of a non-leaf child node of the second node in the first packet may be considered as a recursive unit in the recursive structure. For ease of description, in a part of the following descriptions in this application, multicast routing information of a non-leaf child node of a node is recorded as a recursive unit. Assuming that a quantity of non-leaf child nodes of a node is M, multicast routing information of the $(m+1)^{th}$ non-leaf child node of the node is recorded as a recursive unit m of the node, where m is an integer greater than or equal to 0 and less than M. It may be understood that multicast routing information of each non-leaf child node of the second node further includes a plurality of recursive units (where each recursive unit is multicast routing information of a non-leaf child node of the non-leaf child node), and so on. Therefore, the multicast routing information included in the first packet may describe packet forwarding information of a multicast tree or a subtree of the multicast tree.

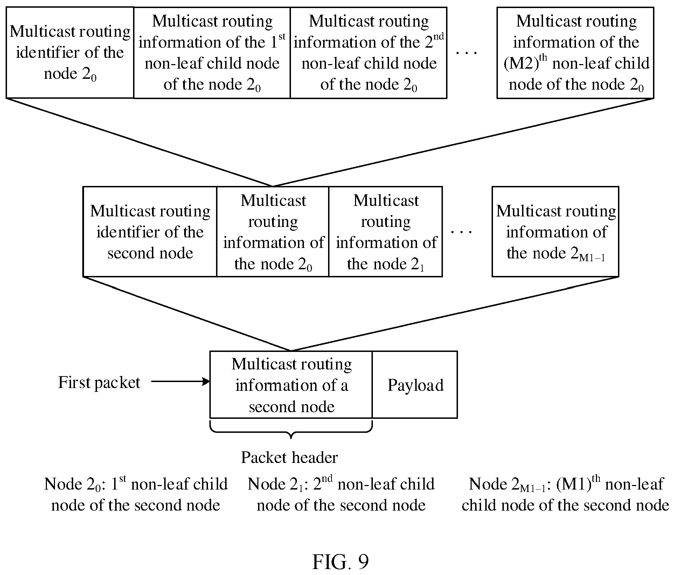

For example, as shown in FIG. 9, assuming that the second node has M1 non-leaf child nodes, which are respectively denoted as a node $2_0$, a node $2_1$, a node $2_2$, ..., and a node $2_{M1-1}$, the first packet includes the multicast routing information of the second node. Multicast information of the second node includes the multicast routing identifier of the second node, and multicast routing information of the node $2_0$, the node $2_1$, the node $2_2$, ..., and the node $2_{M1-1}$. Further, the multicast routing information of each of the node $2_0$, the node $2_1$, the node $2_2$, ..., and the node $2_{M1-1}$ further includes multicast routing information of a non-leaf child node of the node. For example, assuming that the node $2_0$ has M2 non-leaf child nodes, the multicast routing information of the node $2_0$ includes a multicast routing identifier of the node $2_0$ and multicast routing information of the 1st non-leaf child node, the 2nd non-leaf child node, ..., and the $(M2)^{th}$ non-leaf child node of the node $2_0$. Each non-leaf child node of the node $2_0$ further includes multicast routing information of a non-leaf child node of the non-leaf child node, and so on. Cases of the node $2_1$, the node $2_2$, ..., and the node $2_{M1-1}$ are similar to that of the node $2_0$.

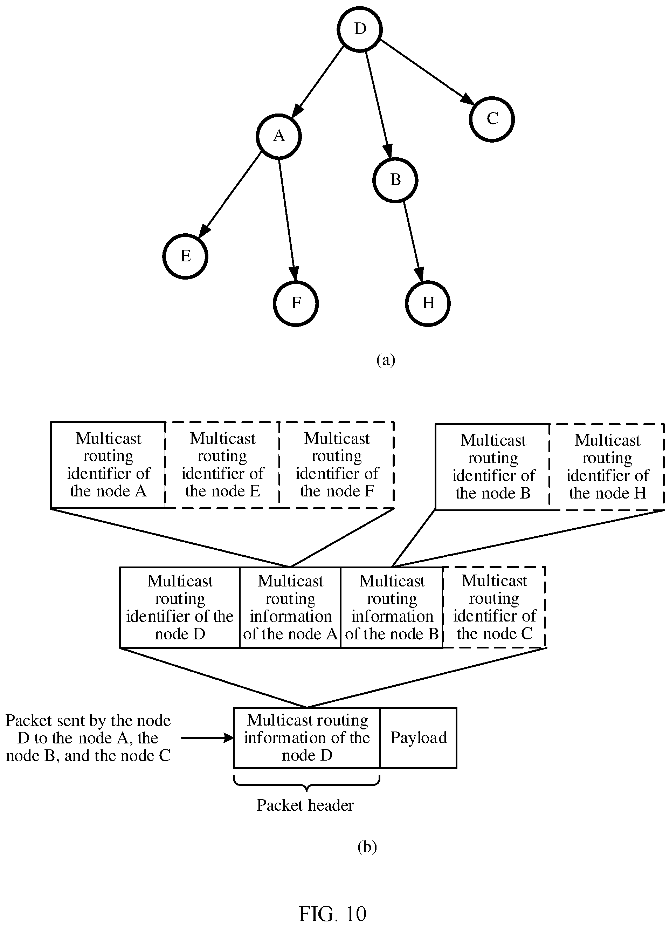

For example, as shown in FIG. 10, assuming that the multicast tree is shown in (a) in FIG. 10, as shown in (b) in FIG. 10, multicast routing information of a node D may include multicast routing information of a node A and multicast routing information of a node B, and optionally, may further include a multicast routing identifier of a node C (a leaf child node of the node D). The multicast routing information of the node A may include a multicast routing identifier of the node A, and optionally, may further include a multicast routing identifier of a node E (a leaf child node of the node A) and a multicast routing identifier of a node F (a leaf child node of the node A). The multicast routing information of the node B may include a multicast routing identifier of the node B, and optionally, may further include a multicast routing identifier of a node H (a leaf child node of the node B).

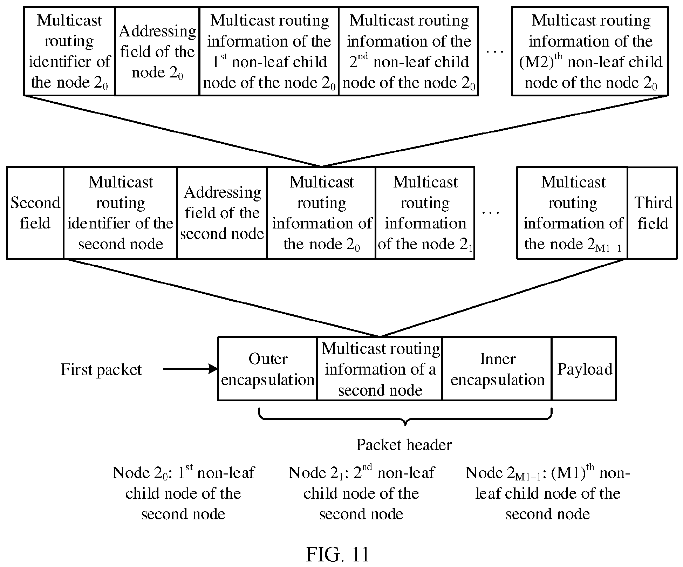

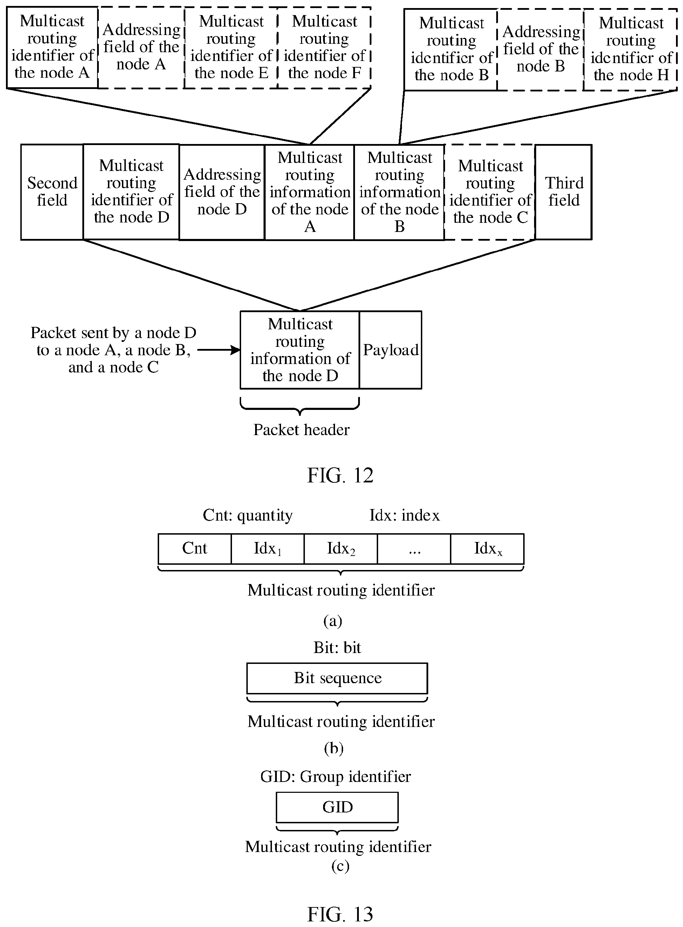

Optionally, multicast routing information of a node further includes an addressing field of the node. The addressing field of the node is used by a non-leaf child node of the node in the multicast tree to determine multicast routing information of the non-leaf child node. For example, as shown in FIG. 11, the multicast routing information of the second node includes an addressing field of the second node, and the multicast routing information of the node $2_0$ includes an addressing field of the node $2_0$. Cases of other nodes are similar to that of the node $2_0$. For example, as shown in FIG. 12, the multicast routing information of the node D includes an addressing field of the node D. Optionally, if the multicast routing information of the node A includes the multicast routing identifier of the node E (the leaf child node of the node A) and/or the multicast routing identifier of the node F (the leaf child node of the node A), the multicast routing information of the node A may further include an addressing field of the node A. In this case, the addressing field of the node A is used by the node E to determine the multicast routing identifier of the node E, and/or is used by the node F to determine the multicast routing identifier of the node F. Optionally, if the multicast routing information of the node B includes the multicast routing identifier of the node H (the leaf child node of the node B), the multicast routing information of the node B may further include an addressing field of the node B. In this case, the addressing field of the node B is used by the node H to determine the multicast routing identifier of the node H.

It should be noted that multicast routing information of a non-leaf child node of a node may be statically configured in the node in addition to being indicated by an addressing field. For example, if a quantity of child nodes of a node is fixed, and child nodes of these child nodes are all leaf nodes, multicast routing information of these child nodes includes only multicast routing identifiers of these child nodes, and lengths of the multicast routing identifiers are fixed. In this case, the lengths of the multicast routing information of these child nodes may be statically maintained in the node. In this case, multicast routing information of the node may not include an addressing field of the node. In addition, for a specific implementation of the addressing field of the second node, refer to the following related descriptions in S803. Details are not described herein.

Optionally, the first packet further includes a second field. The second field indicates a total length of multicast routing information of non-leaf child nodes of the second node, and optionally, further indicates a sum of the total length of the multicast routing information of the non-leaf child nodes of the second node and a length of one or more of the following items. The following one or more items include: a length of the second field, a length of the addressing field of the second node, and a length of the multicast routing identifier of the second node. That is, the second field indicates a length of the multicast routing information of the second node, a total length of the multicast routing information of the second node and the second field, or the total length of the multicast routing information of the non-leaf child nodes in the multicast routing information of the second node. These lengths may be represented by using bits, bytes, and the like. The second field may further include a reserved field for subsequent function expansion. The second field may be a field of a fixed length, for example, 1 byte (namely, 8 bits). For example, refer to FIG. 11. The multicast information of the second node further includes the second field. For example, refer to FIG. 12. If the second node is the node D, the multicast packet sent by the node D to the node A, the node B, and the node C further includes the second field.

Optionally, the multicast information of the second node further includes a third field. The third field is used to align bytes of the multicast information of the second node. The third field may also be referred to as a padding (padding) field. For example, refer to FIG. 11. The multicast information of the second node further includes the third field. For example, refer to FIG. 12. If the second node is the node D, the multicast packet sent by the node D to the node A, the node B, and the node C further includes the third field. It should be noted that, when byte alignment is performed, the byte alignment may be single-byte alignment. In this case, the third field enables a quantity of bits of the entire multicast information to be exactly divided by 8. Alternatively, byte alignment may be 4-byte alignment. In this case, the third field enables a quantity of bits of the entire multicast information to be exactly divided by 32. Alternatively, byte alignment may be 8-byte alignment. In this case, the third field enables a quantity of bits of the entire multicast information to be exactly divided by 64. A specific length of the third field may be determined based on a quantity of bytes that need to be aligned. It may be understood that, if the third field does not exist, and bytes of the multicast routing information of the second node are already aligned, the third field is not required. For ease of description, the following uses an example in which the byte alignment is the single-byte alignment to describe the method provided in embodiments of this application.

The second field and the third field may be added to the first packet by the second node. In addition, for ease of description, the second field, the third field, and the multicast routing information of the second node are all referred to as multicast information of the second node. In other words, the multicast information of the second node includes the second field, the third field, and the multicast routing information of the second node.

S802: The second node sends the first packet to the first node, and the first node receives the first packet from the second node.

The first node may be a non-leaf child node of the second node. For a node, a multicast routing identifier of the node indicates the node to send a multicast packet to a child node of the node. That is, the multicast routing identifier of the second node indicates the second node to send the first packet to the first node. A multicast routing identifier of a node may be implemented in Manner 11, Manner 12, or Manner 13.

Manner 11:

A multicast routing identifier of a node includes a fourth field and X fifth fields. The fourth field indicates that a quantity of child nodes of the node is X, and a fifth field indicates an identifier of a child node of the node. An identifier (ID) of the node may be, for example, an index of the node, an IP address of the node, or another identifier of the node. For example, the identifier of the node is an index of the node. As shown in (a) in FIG. 13, the fourth field is denoted as Cnt (namely, an abbreviation of Count), indicating the quantity of nodes, and the fifth field is denoted as Idx (namely, an abbreviation of Index), indicating an index. $Idx_i$ is the index of the $i^{th}$ child node of the node, and $Idx_1$ to $Idx_x$ form an Idx sequence, where i is an integer greater than 0 and less than or equal to X.

Nodes in a node set corresponding to a node may have consecutive numbers such as 0, 1, 2, ..., the node set may include all or some potential child nodes of the node, and an index of a node may be the number of the node. A node may determine, based on indexes that are of nodes and that are carried in a multicast routing identifier of the node in a received multicast packet, the nodes to which the multicast packet needs to be sent (that is, determine the nodes being child nodes of the node). During actual implementation, the numbers of the nodes in the node set corresponding to the node may alternatively be consecutive values (where the indexes of the nodes in the node set corresponding to the node are 1, 2, 3, ...) starting from another value (for example, 1), or may be discrete values. This is not limited in this application. When nodes in a node set corresponding to a node are numbered from 0, a bit width W of the fifth field is $\lceil \log_2 N \rceil$, where N is a quantity of the nodes in the node set corresponding to the node. The bit width of the fifth field may alternatively be a fixed bit width, for example, 1 byte. When a value of the fourth field is a natural number, a bit width of the fourth field may be $\lceil \log_2(N+1) \rceil$; or when a value of the fourth field is N-1 (where if the value of the fourth field is 0, it indicates that N is 1; if the value of the fourth field is 1, it indicates that N is 2, and so on), the bit width of the fourth field may be $\lceil \log_2 N \rceil$. The bit width of the fourth field may alternatively be fixed, for example, 1 byte. In this case, a maximum length of the fifth field is also fixed. The fourth field may also be referred to as a Cnt field or a Count field. The fifth field may also be referred to as an Idx field or an Index field. In the following descriptions, the fourth field in Manner 11 is referred to as the Cnt field, and the fifth field is referred to as the Idx field.

For example, as shown in FIG. 10, assuming that a node set corresponding to the node D includes the node A, the node B, and the node C, it indicates that the node D has three potential child nodes, and numbers of the three potential child nodes are respectively 0, 1, and 2. If the value of the Cnt field is N-1, the Cnt field and the Idx field each may be 2 bits. Because the node D has three child nodes: the node A, the node B, and the node C, there are three Idx fields. To be specific, the multicast routing identifier of the node D has 8 bits. Because the node set has three nodes in total (that is, N=3), the value of the Cnt field may be 11. Among the three Idx fields, the value of the $1^{st}$ Idx field is 10, indicating that the node (namely, the node A) whose number is 0 is a child node of the node D; the value of the $2^{nd}$ Idx field is 11, indicating that the node (namely, the node B) whose number is 1 is a child node of the node D; and the value of the $3^{rd}$ Idx field is 01, indicating that the node (namely, the node C) whose number is 2 is a child node of the node D. In this case, the multicast routing identifier of the node D may be 11101101.

Each node may store a multicast forwarding table (which is also referred to as a multicast routing table, a routing forwarding table, or another name). The multicast forwarding table includes a correspondence between an index of a node in a node set corresponding to the node and information about a next hop (next hop) (for example, an egress interface to the next hop or an address of the next hop). A node may determine a node index based on an Idx field in a multicast routing identifier, search the multicast forwarding table to obtain information about a next hop, and forward the multicast packet to the next hop. For the second node, the second node may search a multicast forwarding table of the second node based on an Idx field of the first node in the multicast routing identifier of the second node, to determine an address of the first node, and send the first packet to the first node through an egress port corresponding to the address of the first node.

For example, based on the example shown in FIG. 10, for an example of the multicast forwarding table of the node D, refer to Table 1.

**Table 1**

| Node index | Address of the next hop |
|---|---|
| 0 | Address of the node A |
| 1 | Address of the node B |
| 2 | Address of the node C |

Manner 12:

A multicast routing identifier of a node includes N first fields, N is a quantity of nodes in a node set corresponding to the node, and a first field indicates whether a node in the node set is a child node of the node in the multicast tree. The second node is used as an example. The multicast routing identifier of the second node may include N first fields, and a first field indicates whether a node in a first node set is a child node of the second node in the multicast tree. N is a quantity of nodes in the first node set, the first node set is a node set corresponding to the second node, and the first node set includes some or all potential child nodes of the second node.

One first field may be 1 bit. That is, a multicast routing identifier of a node (where the second node is used as an example) includes N bits. As shown in (b) in FIG. 13, the N bits form a bit sequence (bit sequence). The N bits are in a one-to-one correspondence with the nodes in the first node set corresponding to the second node, and 1 bit indicates whether a node corresponding to the bit in the first node set is a child node of the second node. Specifically, when a value of 1 bit is 1 (or may be 0), the bit indicates that a node corresponding to the bit in the first node set is a child node of the second node. For ease of description, the method provided in this application is described below by using an example in which the value 1 of the bit indicates that a node corresponding to the bit is a corresponding child node. The multicast routing identifier in Manner 12 is referred to as a bit sequence below.

For example, based on the example shown in FIG. 10, the node set corresponding to the node D includes the node A, the node B, and the node C, and the three nodes respectively correspond to the $1^{st}$ bit, the $2^{nd}$ bit, and the $3^{rd}$ bit in the 3 bits. If a node whose corresponding bit value is 1 in the node set is a child node of the node D, a bit sequence of the node D may be 111. A node set corresponding to the node A includes the node D, the node E, and the node F. The three nodes respectively correspond to the $1^{st}$ bit, the $2^{nd}$ bit, and the $3^{rd}$ bit in the 3 bits. The node E and the node F are child nodes of the node A. If a node whose corresponding bit value is 1 in the node set is a child node of the node A, a bit sequence of the node A may be 011.

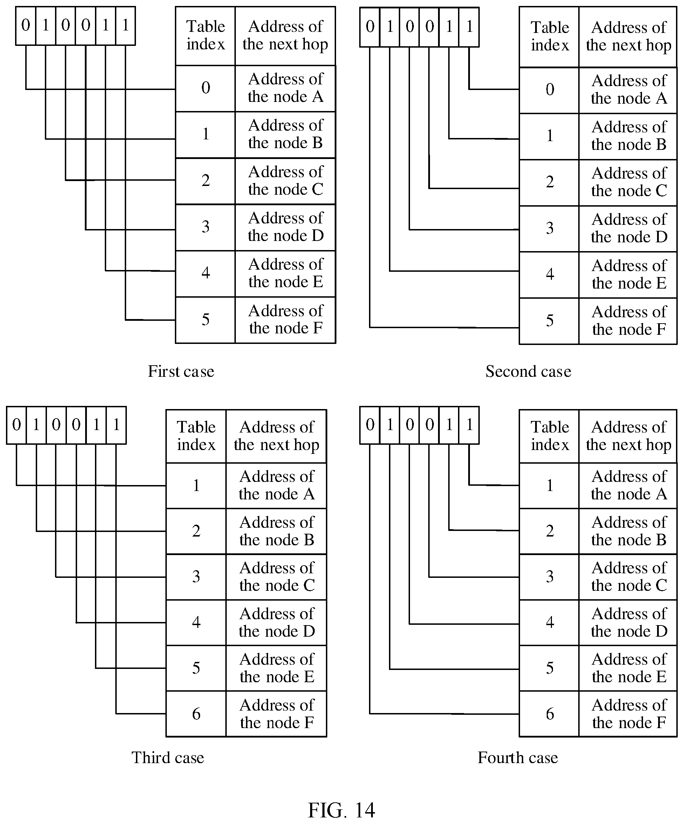

Each node may store a multicast forwarding table. The multicast forwarding table includes a correspondence between a bit in a bit sequence and information about a next hop (for example, an egress interface to a next hop or an address of the next hop). A node may determine information about a next hop based on a location of a bit in the bit sequence in the multicast forwarding table, and further forward the packet to the next hop. The correspondence between a bit in a bit sequence and information about a next hop may include four cases. As shown in FIG. 14, in a first case, the leftmost (leftmost) bit in the bit sequence is the $1^{st}$ bit, the bits from left to right are sequentially the $1^{st}$ bit, the $2^{nd}$ bit, the $3^{rd}$ bit, ..., and the $j^{th}$ bit in the bit sequence corresponds to an entry whose index is j-1. In a second case, the rightmost bit in the bit sequence is the $1^{st}$ bit, the bits from right to left are sequentially the $1^{st}$ bit, the $2^{nd}$ bit, the $3^{rd}$ bit, ..., and the $j^{th}$ bit in the bit sequence corresponds to an entry whose index is j-1. In a third case, the leftmost bit in the bit sequence is the $1^{st}$ bit, the bits from left to right are sequentially the $1^{st}$ bit, the $2^{nd}$ bit, the $3^{rd}$ bit, ..., and the $j^{th}$ bit in the bit sequence corresponds to an entry whose index is j. In a fourth case, the rightmost bit in the bit sequence is the $1^{st}$ bit, the bits from right to left are sequentially the $1^{st}$ bit, the $2^{nd}$ bit, the $3^{rd}$ bit, ..., and the $j^{th}$ bit in the bit sequence corresponds to an entry whose index is j. j is an integer greater than 0. For example, the bit sequence is 010011. The 6 bits respectively correspond to the node A to the node F. For correspondences between the bits in the bit sequence and addresses of next hops, refer to FIG. 14. In the following descriptions of this application, unless otherwise specified, it is considered that the leftmost bit in the bit sequence is the $1^{st}$ bit, and the bits from left to right are sequentially the $1^{st}$ bit, the $2^{nd}$ bit, the $3^{rd}$ bit, .... It should be noted that, in addition to the four cases, indexes of entries in the multicast forwarding table may alternatively be consecutive numbers or discrete values starting from another value (for example, 2, 3, or 4). This is not limited in this application. For the second node, the second node may search the multicast forwarding table of the second node based on an index corresponding to 1 bit of the first node in the bit sequence of the second node, to determine an address of the first node, and send the first packet to the first node through an egress port corresponding to the address of the first node.

Manner 13:

A multicast routing identifier of a node includes a group identifier, the group identifier indicates a node group corresponding to the node, and all nodes in the node group corresponding to the node are child nodes of the node. The second node is used as an example. The multicast routing identifier of the second node includes a first group identifier, the first group identifier indicates a first node group corresponding to the second node, and all nodes in the first node group are child nodes of the second node.

A node group corresponding to a node is a subset of a node set corresponding to the node. Nodes in a node set corresponding to one node may form at least one node group, and a node in the node set may be located in one node group, or may be located in a plurality of node groups. Nodes included in a node group may be preconfigured. One node group corresponds to one group identifier (Group ID, GID for short). In this case, as shown in (c) in FIG. 13, the multicast routing identifier is a GID, and a node may determine, based on a GID in a multicast routing identifier of the node in a received multicast packet, nodes in a node group corresponding to the GID, and send the multicast packet to these nodes.

For example, based on the example shown in FIG. 2, it is assumed that a node set corresponding to the node R includes the node B, the node A, the node S, and the node E. The four nodes may form three node groups. The 1st node group includes the node A and the node B. The 2nd node group includes the node S and the node E. The 3rd node group includes the node B, the node A, the node S, and the node E. An identifier of the 1st node group is an identifier 1, an identifier of the 2nd node group is an identifier 2, and an identifier of the 3rd node group is an identifier 3. In the multicast tree shown on the right in FIG. 2, the node S and the node E are child nodes of the node R. In this case, a multicast routing identifier of the node R may be the identifier 2.

Similar to Manner 11 and Manner 12, in Manner 13, each node may also store a multicast forwarding table. The multicast forwarding table includes a correspondence between a group identifier of a node group and information about a next hop (for example, an egress interface to the next hop or an address of the next hop). The next hop herein is a node in the node group corresponding to the group identifier. In this case, a node may determine, based on the multicast routing identifier and the correspondence in the multicast forwarding table, nodes to which the multicast packet is forwarded. For the second node, the second node may search the multicast forwarding table based on the first group identifier in the multicast routing identifier of the second node, to determine to send the first packet to child nodes (including the first node) in the first node group.

For example, based on the example shown in FIG. 2, for an example of the multicast forwarding table of the node R, refer to Table 2.

**Table 2**

| Group identifier | Address of the next hop |
|---|---|
| Identifier 1 | Address of the node B |
| | Address of the node A |
| Identifier 2 | Address of the node S |
| | Address of the node E |
| Identifier 3 | Address of the node B |
| | Address of the node A |
| | Address of the node S |
| | Address of the node E |

It may be understood that the multicast routing identifiers in Manner 11, Manner 12, and Manner 13 may be converted to each other. For example, the GID in Manner 13 may be converted into the bit sequence in Manner 12 or the multicast routing identifier in Manner 11. The multicast routing identifiers in Manner 11, Manner 12, and Manner 13 may be respectively referred to as a first-type multicast routing identifier, a second-type multicast routing identifier, and a third-type multicast routing identifier. A length of a multicast routing identifier of a node in Manner 11, Manner 12, and Manner 13 may be statically maintained in the node. A node (for example, a source node) or a controller that generates the 1st multicast packet in the multicast tree may maintain lengths of multicast routing identifiers of all nodes in the multicast tree.

In Manner 11, in a multicast scenario with extremely low density of nodes in the multicast tree, encapsulation efficiency of the multicast packet is optimal. In Manner 12, in a multicast scenario with high density of nodes in the multicast tree, encapsulation efficiency is optimal. In Manner 13, in a multicast scenario with the highest density of nodes in the multicast tree, encapsulation efficiency is optimal.

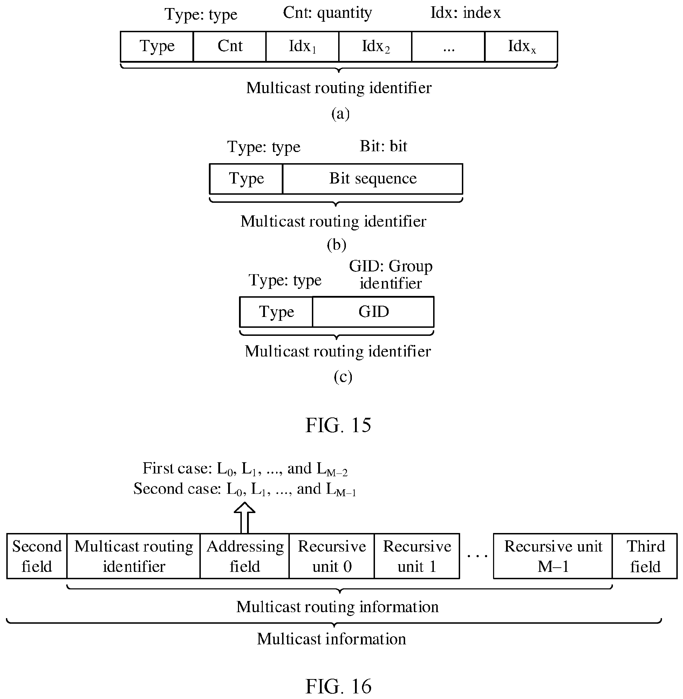

Optionally, a multicast routing identifier of a node further includes a type field, and the type field indicates a type of the multicast routing identifier of the node. The type of the multicast routing identifier includes the first-type multicast routing identifier, the second-type multicast routing identifier, and the third-type multicast routing identifier. In this case, the node that receives the multicast packet may determine, based on the type of the multicast routing identifier, how to identify the multicast routing identifier. For example, when the multicast routing identifier further includes the type field, for the multicast routing identifiers in Manner 11, Manner 12, and Manner 13, refer to (a) in FIG. 15, (b) in FIG. 15, and (c) in FIG. 15. The type field is denoted as "Type" in (a) in FIG. 15, (b) in FIG. 15, and (c) in FIG. 15.

During actual implementation, only one type of multicast routing identifier may be used (where in this case, a type field is not required), or a type of to-be-used multicast routing identifier may be indicated by using a type field. In addition, it should be noted that the type field may be considered as a part of the multicast routing identifier, or may be considered as a field independent of the multicast routing identifier. This is not limited in this application. In a multicast packet, types of multicast routing identifiers of different nodes may be the same or different. This is not limited in this application.

Optionally, a multicast routing identifier of a node further includes a multicast routing identifier length field and/or a node type field. The multicast routing identifier length field indicates a length of the multicast routing identifier. The node type field indicates a node type. The node type includes a single-entity node and a multi-entity node. The single-entity node means that the node includes one entity. The multi-entity node means that the node includes a plurality of entities. Similar to the type field, the multicast routing identifier length field and/or the node type field may be considered as a part of the multicast routing identifier, or may be considered as a field independent of the multicast routing identifier. This is not limited in this application.

The type field, the multicast routing identifier length field, and the node type field may be collectively referred to as a description field or a dscr field. These fields may also have other names. This is not limited in this application.

Optionally, the second node sends the first packet to the first node. A destination address in unicast encapsulation in the first packet is the address of the first node. Specifically, the first packet may be an IP packet. In this case, the destination address in the first packet is the address of the first node, the first packet further includes data, and the multicast information of the second node in the first packet is located between an IP header of the first packet and the data. The unicast encapsulation may include an indication field. The indication field indicates whether unicast-encapsulated information in a multicast packet includes multicast information. After receiving the multicast packet, a node may determine, based on the indication field, whether the unicast-encapsulated information in the multicast packet includes the multicast information. If the unicast encapsulation is IPv4 encapsulation, a "protocol (protocol)" field in an IPv4 header may indicate whether the unicast-encapsulated information in the multicast packet includes the multicast information. If the unicast encapsulation is IPv6 encapsulation, a "next header (Next Header)" field in an IPv6 header may indicate whether the unicast-encapsulated information in the multicast packet includes the multicast information.

It should be noted that, in this embodiment of this application, a source address in unicast encapsulation in a multicast packet sent by a node (for example, the node a) to another node (for example, the node b) may be an address of the node a, or may be an address of the source node in the multicast tree. For example, based on the example shown in FIG. 10, a source address in unicast encapsulation in a multicast packet sent by the node A to the node E may be an address of the node D, or may be an address of the node A.

It should be noted that, when the multicast packet in this application does not include the unicast encapsulation, the node may determine a next-hop node of the multicast packet based on the multicast routing identifier in the multicast packet. For example, a node receives a multicast packet. When a multicast routing identifier of the node is a bit sequence in the following, a node corresponding to a bit whose value is 1 in the multicast routing identifier is a next-hop node of the multicast packet. That is, a child node of the node is the next-hop node of the multicast packet.

S803: The first node parses the first packet.

That the first node parses the first packet may be that the first node generates a second packet based on the first packet. The second packet may include multicast routing information of the first node or multicast routing information of a third node. The third node is a child node of the first node. The multicast routing information of the first node includes any one of the following: a multicast routing identifier of the first node and the multicast routing information of the third node, the multicast routing identifier of the first node, or the multicast routing identifier of the first node and a multicast routing identifier of the third node. If the third node is a non-leaf child node of the first node, the multicast routing information of the first node includes the multicast routing identifier of the first node and the multicast routing information of the third node. If the third node is a leaf child node of the first node, the multicast routing information of the first node may include the multicast routing identifier of the third node, that is, includes the multicast routing identifier of the first node and the multicast routing identifier of the third node, or may not include the multicast routing identifier of the third node. That is, the multicast routing information of the first node may include only the multicast routing identifier of the first node. It may be learned that the first node may process the first packet flexibly. For example, if the third node supports the third node in determining the multicast routing information of the third node, the first node may perform an operation similar to that of the second node, to be specific, sending the second packet including the multicast routing information of the first node to the third node, to avoid a redundant packet. In addition, this saves processing resources of the first node, and improves operation efficiency. If the third node does not support the third node in determining the multicast routing information of the third node, the first node may further determine the multicast routing information of the third node after determining the multicast routing information of the first node, and send, to the third node, the second packet that includes only the multicast routing information of the third node, to ensure that the third node can normally process the second packet, and ensure communication reliability.

For a non-leaf child node of a node in the multicast tree, a multicast routing identifier of the node may be used by the non-leaf child node to determine multicast routing information of the non-leaf child node. To be specific, the first node may determine the multicast routing information of the first node based on the multicast routing identifier of the second node in the first packet, to perform packet encapsulation based on the multicast routing information of the first node, to obtain the second packet. Alternatively, after determining the multicast routing information of the first node, the first node may further determine the multicast routing information of the third node, to perform packet encapsulation based on the multicast routing information of the third node, to obtain the second packet. Implementation of determining the multicast routing information includes Manner 21 and Manner 22, which are separately described below.

Manner 21:

A multicast routing identifier of a node is used by a non-leaf child node of the node in the multicast tree to determine a location of the non-leaf child node in a node set corresponding to the node. The location of the non-leaf child node in the node set corresponding to the node is used by the non-leaf child node to determine multicast routing information of the non-leaf child node. The first node is used as an example. The first node may determine a location of the first node in the first node set based on the multicast routing identifier of the second node, and determine the multicast routing information of the first node based on the location of the first node in the first node set. The following provides descriptions with reference to the foregoing three implementations of the multicast routing identifier.

In Manner 11, a multicast routing identifier of a node includes a Cnt field and X Idx fields. The Cnt field indicates that a quantity of child nodes of the node is X, and an Idx field indicates an identifier of a child node of the node. Therefore, each non-leaf child node of the node in the multicast tree may determine, based on the Cnt field and the X Idx fields, a location of an Idx field corresponding to the non-leaf child node in the X Idx fields. The location may indicate a location of the non-leaf child node in a corresponding node set. The first node is used as an example. The first node determines, based on the Cnt field and the X Idx fields in the multicast routing identifier of the second node, a location of an Idx field corresponding to the first node in the X Idx fields, to determine, based on the location, the multicast routing information of the first node in the multicast routing information of the second node.

Specifically, a node stores, on each non-leaf child node in the multicast tree, a mapping relationship table corresponding to the Cnt field. The mapping relationship table indicates a correspondence between an Idx field corresponding to each non-leaf child node and the non-leaf child node. A location of the Idx field corresponding to each non-leaf child node in the mapping relationship table may indicate a location of the non-leaf child node in a corresponding node set. The first node is used as an example. A first mapping relationship table of the first node indicates a correspondence between an Idx field corresponding to each non-leaf child node (including the first node) and the non-leaf child node. The first node may search the first mapping relationship table based on the multicast routing identifier of the second node, to determine a location of an Idx field corresponding to the first node in the first mapping relationship table. For example, the Idx field corresponding to the first node is a specific Idx field in the first mapping relationship, that is, the location of the first node in the first node set. For example, the first node is a specific child node in the first node set. The location of the first node in the first node set may indicate the location of the multicast routing information of the first node in the multicast routing information of the second node. To be specific, the multicast routing information of the first node is specific multicast routing information in the multicast routing information of the second node, or the recursive unit of the first node is a specific recursive unit in all recursive units included in the second node. When the multicast routing information has equal lengths, the first node may determine the multicast routing information of the first node based on the location of the multicast routing information of the first node in the multicast routing information of the second node.

For example, based on the example shown in FIG. 10, for an example of a mapping relationship table of the node A, the node B, and the node C, refer to Table 3.

**Table 3**

| Idx field | Node |
|-----------|--------|
| 10 | Node A |
| 11 | Node B |
| 01 | Node C |

The multicast routing identifier of the node D is 11101101. In the multicast routing identifier of the node D, a value of the Cnt field is 11, a value of the 1st Idx field is 10, a value of the 2nd Idx field is 11, and a value of the 3rd Idx field is 01. The node A determines, based on the value 11 of the Cnt field, that Table 3 needs to be searched. The node A searches Table 3 based on the value 10 of the 1st Idx field, to determine that the 1st Idx field is an Idx field corresponding to the node A, and determine that the node A is the 1st node in a corresponding node set (including the node A, the node B, and the node C). If the lengths of the multicast routing information of the node A, the node B, and the node C are all 8 bits, the node A may determine that the first 8 bits in the multicast routing information of the node D are the multicast routing information of the node A. Similarly, the node B determines, based on the value 11 of the Cnt field, that Table 3 needs to be searched. The node B searches Table 3 based on the value 10 of the 1st Idx field, to determine that the 1st Idx field is an Idx field corresponding to the node A, but is not an Idx field corresponding to the node B. The node B continues to search Table 3 based on the value 11 of the 2nd Idx field, to determine that the 2nd Idx field is an Idx field corresponding to the node B, and determine that the node B is the 2nd node in the corresponding node set. In this way, the node B may determine that the second 8 bits in the multicast routing information of the node D is the multicast routing information of the node B. Similarly, the node C determines, based on the value 11 of the Cnt field, that Table 3 needs to be searched. The node C searches Table 3 based on the value 10 of the 1st Idx field, to determine that the 1st Idx field is an Idx field corresponding to the node A, but is not an Idx field corresponding to the node C. The node C continues to search Table 3 based on the value 11 of the 2nd Idx field, to determine that the 2nd Idx field is an Idx field corresponding to the node B, but is not an Idx field corresponding to the node C. The node C continues to search Table 3 based on the value 01 of the 3rd Idx field, to determine that the 3rd Idx field is an Idx field corresponding to the node C, and determine that the node C is the 3rd node in the corresponding node set. In this way, the node C may determine that the third 8 bits in the multicast routing information of the node D is the multicast routing information of the node C.

In Manner 12, a bit sequence of a node includes N first fields, N is a quantity of nodes in a node set corresponding to the node, and one first field indicates whether a node in the node set is a child node of the node in the multicast tree. Therefore, each non-leaf child node of the node in the multicast tree may determine, based on the N first fields, a location of a first field corresponding to the non-leaf child node in the N first fields. The location may indicate a location of the non-leaf child node in a corresponding node set. The first node is used as an example. The first node determines, based on the N first fields in the bit sequence of the second node, a location of a first field corresponding to the first node in the N first fields, to determine, based on the location, the multicast routing information of the first node in the multicast routing information of the second node.

Specifically, a node stores, on each non-leaf child node in the multicast tree, a mapping relationship table corresponding to the first fields. The mapping relationship table indicates a correspondence between a first field corresponding to each non-leaf child node and the non-leaf child node. A location of the first field corresponding to each non-leaf child node in the mapping relationship table may indicate the location of the non-leaf child node in the corresponding node set. The first node is used as an example. The first mapping relationship table of the first node indicates a correspondence between an index of a first field corresponding to each non-leaf child node (including the first node) and the non-leaf child node. The first node may search the first mapping relationship table to determine a location of a first field corresponding to the first node in the N first fields. For example, the first field corresponding to the first node is a specific first field in the N first fields, that is, the location of the first node in the first node set. The location of the first node in the first node set may indicate a location of the multicast routing information of the first node in the multicast routing information of the second node. When the multicast routing information has equal lengths, the first node may determine the multicast routing information of the first node based on the location of the multicast routing information of the first node in the multicast routing information of the second node.

For example, based on the example shown in FIG. 10, for an example of a mapping relationship table of the node A, the node B, and the node C, refer to Table 4.

**Table 4**

| Index (bit) | Node |
|---|---|
| 1 | Node A |
| 2 | Node B |
| 3 | Node C |

The bit sequence of the node D is 111. The node A searches Table 4, to determine that a first field corresponding to the node A is the 1st bit in the bit sequence of the node D, and a value of the 1st bit is 1. To be specific, the node A is a child node of the node D, and the multicast routing information of the node D includes the multicast routing information of the node A. If the lengths of the multicast routing information of the node A, the node B, and the node C are all 8 bits, the node A may determine that the first 8 bits in the multicast routing information of the node D are the multicast routing information of the node A. Similarly, the node B searches Table 4, to determine that a first field corresponding to the node B is the 2nd bit in the bit sequence, and a value of the 2nd bit is 1. To be specific, the node B is a child node of the node D, and the multicast routing information of the node D includes the multicast routing information of the node B. In this way, the node B may determine that the second 8 bits in the multicast routing information of the node D is the multicast routing information of the node B. Similarly, the node C searches Table 4, to determine that a first field corresponding to the node C is the 3rd bit in the bit sequence, and a value of the 3rd bit is 1. To be specific, the node C is a child node of the node D, and the multicast routing information of the node D includes the multicast routing information of the node C. In this way, the node C may determine that the third 8 bits in the multicast routing information of the node D is the multicast routing information of the node C. In addition, the index in Table 4 may alternatively start from 0: 0, 1, 2, 3, and the like. This is not limited.

In Manner 13, a multicast routing identifier of a node includes a group identifier, the group identifier indicates a node group corresponding to the node, and all nodes in the node group corresponding to the node are child nodes of the node. Therefore, each non-leaf child node of the node in the multicast tree may determine, based on the group identifier, whether the non-leaf child node is a node in the node group. If the non-leaf child node is a node in the node group, a location of the non-leaf child node in the node group is determined. Because the node group belongs to a node set corresponding to the non-leaf child node, the location of the non-leaf child node in the node group may be considered as a location of the non-leaf child node in the corresponding node set. The first node is used as an example. The first node determines, based on the first group identifier, that the first node is a node in the node group, and determines the location of the first node in the node group, to determine, based on the location, the multicast routing information of the first node in the multicast routing information of the second node.

Specifically, a node stores a mapping relationship table on each non-leaf child node in the multicast tree. The mapping relationship table indicates a correspondence between the group identifier and the node group indicated by the group identifier. The first node is used as an example. A first mapping relationship table of the first node indicates a correspondence between the first group identifier and the first node group indicated by a first identifier. The first node may search the first mapping relationship table based on the first group identifier in the multicast routing information of the second node, to determine that the first node is a node in the first node group, and determine the location of the first node in the first node group. For example, the first node is a specific child node in the first node group. The location of the first node in the first node group may indicate a location of the multicast routing information of the first node in the multicast routing information of the second node. When the multicast routing information has equal lengths, the first node may determine the multicast routing information of the first node based on the location of the multicast routing information of the first node in the multicast routing information of the second node.

For example, based on the example shown in FIG. 10, for an example of a mapping relationship table of the node A, the node B, and the node C, refer to Table 5.

**Table 5**

| Group identifier | Node |
|---|---|
| Identifier 4 | Node A |
| | Node B |
| | Node C |

The group identifier in the multicast routing identifier of the node D is an identifier 4, and a node group indicated by the identifier 4 includes the node A, the node B, and the node C. The node A searches Table 5 based on the identifier 4, to determine that the node A is a node in the node group and is the 1st node. If the lengths of the multicast routing information of the node A, the node B, and the node C are all 8 bits, the node A may determine that the first 8 bits in the multicast routing information of the node D are the multicast routing information of the node A. Similarly, the node B searches Table 5 to determine that the node B is a node in the node group and is the 2nd node. The node B may determine that the second 8 bits in the multicast routing information of the node D is the multicast routing information of the node B. Similarly, the node C searches Table 5 to determine that the node C is a node in the node group and is the 3rd node. The node C may determine that the third 8 bits in the multicast routing information of the node D is the multicast routing information of the node C.

Manner 22: Multicast routing information of a node includes an addressing field of the node. A multicast routing identifier and an addressing field that are of the node are used by a non-leaf child node of the node in the multicast tree to determine multicast routing information of the non-leaf child node. The first node is used as an example. The first node may determine the multicast routing information of the first node based on the multicast routing identifier of the second node and the addressing field of the second node.

An addressing field of a node indicates lengths of multicast routing information of child nodes of the node. Alternatively, an addressing field of a node indicates start locations or end locations of multicast routing information of child nodes of the node. Alternatively, an addressing field of a node includes a plurality of delimitation fields, and multicast routing information of child nodes of the node is separated by the plurality of delimitation fields. The second node is used as an example. The addressing field of the second node indicates lengths of multicast routing information of child nodes of the second node. Alternatively, the addressing field of the second node indicates start locations or end locations of multicast routing information of child nodes of the second node. Alternatively, the addressing field of the second node includes a plurality of delimitation fields, and multicast routing information of child nodes of the second node is separated by the plurality of delimitation fields. The following separately describes the foregoing several indication manners of the addressing field.

In a first design solution, an addressing field of a node indicates a length of multicast routing information of a non-leaf child node of the node.

It is assumed that the node is a node 1, and there are M non-leaf child nodes of the node 1. The addressing field of the node 1 may include M-1 or M fields (where the field is denoted as a sixth field). A sixth field indicates a length (where the length is denoted as Y) of multicast routing information of a non-leaf child node of the node 1. A bit width of the sixth field may be $\lceil \log_2 Y \rceil$ (where in this case, the length indicated by the sixth field is a sum of 1 and a value of the sixth field), $\lceil \log_2 (Y+1) \rceil$ (where in this case, the length indicated by the sixth field is the value of the sixth field), or a fixed bit width (for example, 1 byte or 2 bytes). Multicast information of the node 1 is shown in FIG. 16. A recursive unit m indicates the $(m+1)^{th}$ recursive unit of the node 1 (namely, multicast routing information of the $(m+1)^{th}$ non-leaf child node of the node 1). A length of the recursive unit m (namely, a length of the multicast routing information of the $(m+1)^{th}$ non-leaf child node of the node 1) may be denoted as $L_m$. m is an integer greater than or equal to 0 and less than M.

In some scenarios, the addressing field of the node 1 may indicate lengths of M-1 recursive units of the node 1. The M-1 recursive units may be any M-1 recursive units in the M recursive units. In this case, the other recursive unit in the M recursive units may be obtained through calculation based on a length indicated by the second field. For example, as shown in FIG. 16, the M-1 recursive units are recursive units 0 to M-2. That is, the addressing field of node 1 indicates $L_0$, $L_1$, ..., and $L_{M-2}$. In this case, if the second field indicates a length (denoted as a total length 1) of the multicast routing information of the node 1, length of the recursive unit M-1=total length 1-($L_0+L_1+...+L_{M-2}$)-length of the multicast routing identifier-length of the addressing field. If the second field indicates a total length (denoted as a total length 2) of the M recursive units, length of the recursive unit M-1=total length 2-($L_0+L_1+...+L_{M-2}$).

In some other scenarios, as shown in FIG. 16, the addressing field of the node 1 may indicate lengths of M recursive units of the node 1. That is, the addressing field of the node 1 indicates $L_0$, $L_1$, ..., and $L_{M-1}$.

Assuming that the non-leaf child node of the node 1 is a node 2, the node 2 may determine a start location of the recursive unit 0 based on the second field, the multicast routing identifier, and the length of the addressing field, and determine a start location and/or an end location of each recursive unit based on the lengths of the recursive units, that is, determine a location of each recursive unit. The location mentioned in this application may be an offset relative to a start location of the multicast information, or may be an offset relative to another location in the multicast packet. For example, based on the example shown in FIG. 16, the addressing field of the node 1 indicates the lengths of the M recursive units of the node 1, the second field indicates the total length 1, and the start location of the recursive unit is an offset relative to the start location of the multicast information. In this case, the start location of the recursive unit m is denoted as $offset_m$, and the start location of each recursive unit may be shown in Table 6.

**Table 6**

| Recursive unit | Start location of the recursive unit |
|---|---|
| Recursive unit 0 | $offset_0$=length of the second field+length of the multicast routing identifier+M*length of the sixth field |
| Recursive unit 1 | $offset_1$= $offset_0$+ $L_0$ |
| ... | ... |
| Recursive unit M-1 | $offset_{M-1}$= $offset_{M-2}$+ $L_{M-2}$ |

In a second design solution, an addressing field of a node indicates a start location or an end location of multicast routing information of a child node of the node.

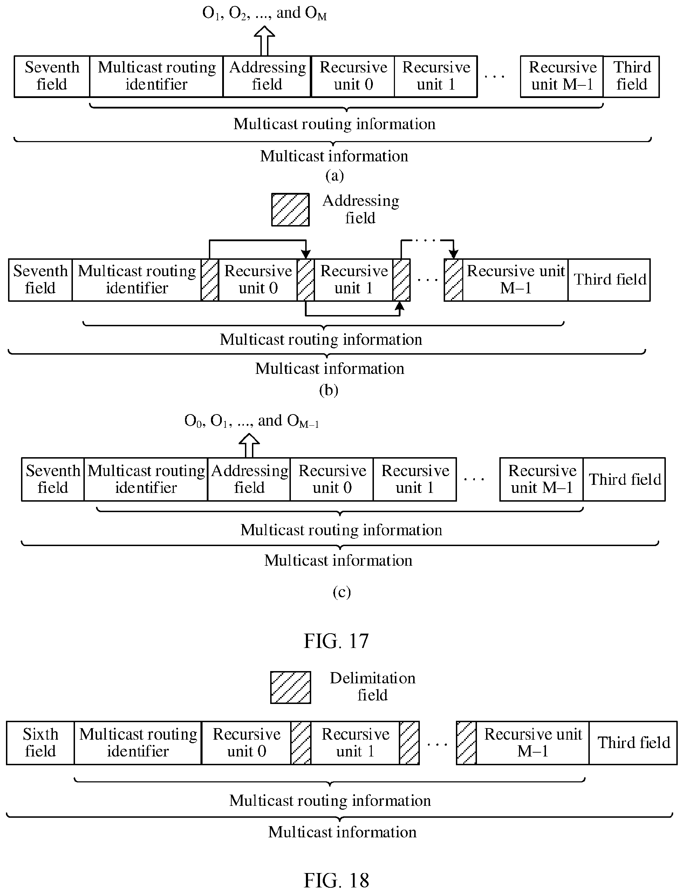

It is assumed that the node is a node 1, and there are M non-leaf child nodes of the node 1. The addressing field of the node 1 may include M-1 or M fields (where the field is denoted as a sixth field), and a sixth field indicates a start location or an end location of multicast routing information of a non-leaf child node of the node 1. The sixth field may be a fixed quantity of bits (for example, 4 bits) or a fixed quantity of bytes (for example, 1 byte). For ease of description, the following describes the first design solution by using an example in which the sixth field indicates the start location. A principle in which the sixth field indicates the end location is similar, refer to the following descriptions for understanding. The multicast information of the node 1 may be shown in (a) in FIG. 17, (b) in FIG. 17, or (c) in FIG. 17. A start location of a recursive unit m (namely, a start location of multicast routing information of the $(m+1)^{th}$ non-leaf child node of the node 1) may be denoted as

$O_m$. In the second design solution, a length of a recursive unit M-1 may be obtained through calculation by using the length indicated by the second field. A calculation method is similar to that in the first design solution. Refer to the first design solution for understanding. Details are not described again. Alternatively, the length of the recursive unit M-1 may be explicitly indicated by a field (denoted as a seventh field). In this case, the second field may or may not exist. If the second field does not exist, the seventh field may be located in a location of the second field, or may be located in another location. This is not limited in this application. For ease of description, an example in which the second field does not exist when the seventh field exists and the seventh field is located in the location of the second field is used in the following for description.

The second design solution may be implemented in the following manner a or manner b.

Manner a: The addressing field of the node 1 indicates start locations of M-1 recursive units of the node 1.

The M-1 recursive units may be a recursive unit 1 to a recursive unit M-1. That is, the addressing field of the node 1 indicates $O_1$, $O_2$, ..., and $O_{M-1}$. In a first possible implementation of Manner a, refer to (a) in FIG. 17. The addressing field of the node 1 indicates $O_1$, $O_2$, ..., and $O_{M-1}$. In a second possible implementation of Manner a, refer to (b) in FIG. 17. There is a sixth field at a location before each recursive unit and adjacent to the recursive unit, and the sixth field indicates a start location of a next recursive unit.

Assuming that a non-leaf child node of the node 1 is the node 2, the node 2 may determine the start location of the recursive unit 0 based on the second field (or the seventh field), the multicast routing identifier, and the length of the addressing field, determine the start locations of the recursive unit 1 to the recursive unit M-1 and lengths of the recursive unit 0 to the recursive unit M-2 based on the addressing field, and determine a length of the recursive unit M-1 based on the second field (or the seventh field), that is, determine a location of each recursive unit. The location mentioned in this application is similar to that in the first design solution. Refer to the first design solution for understanding. Details are not described again. For example, based on the example shown in (b) in FIG. 17, the length of the recursive unit M-1 is determined based on the seventh field. The start location and the length of each recursive unit may be shown in Table 7.

**Table 7**

| Recursive unit | Start location of the recursive unit | Length of the recursive unit |
|---|---|---|
| Recursive unit 0 | $O_0$=length of the seventh field+length of the multicast routing identifier+length of the sixth field | $O_1$-$O_0$-length of the sixth field |
| Recursive unit 1 | $O_1$ | $O_2$-$O_1$-length of the sixth field |
| ... | ... | ... |
| Recursive unit M-1 | $O_{M-1}$ | Indicated by the seventh field |

Manner b: The addressing field of the node 1 indicates start locations of M recursive units of the node 1.

The addressing field of the node 1 indicates $O_0$, $O_1$, ..., and $O_{M-1}$. In this case, assuming that a non-leaf child node of the node 1 is the node 2, the node 2 may determine start locations of the recursive unit 0 to the recursive unit M-1 and lengths of the recursive unit 0 to the recursive unit M-2 based on the addressing field, and determine a length of the recursive unit M-1 based on the second field or the seventh field, that is, determine a location of each recursive unit. The location mentioned in this application is similar to that in the first design solution. Refer to the first design solution for understanding. Details are not described again. For example, based on the example shown in (c) in FIG. 17, the length of the recursive unit M-1 is determined based on the seventh field. The start location and the length of each recursive unit may be shown in Table 8.

**Table 8**

| Recursive unit | Start location of the recursive unit | Length of the recursive unit |
|---|---|---|
| Recursive unit 0 | $O_0$ | $O_1$-$O_0$ |
| Recursive unit 1 | $O_1$ | $O_2$-$O_1$ |
| ... | ... | ... |
| Recursive unit M-1 | $O_{M-1}$ | Indicated by the seventh field |

In a third design solution, an addressing field of a node includes a plurality of delimitation fields, and multicast routing information of a non-leaf child node of the node is separated by the plurality of delimitation fields.

It is assumed that the node is a node 1, and there are M non-leaf child nodes of the node 1. The addressing field of the node 1 may include M-1 delimitation fields, and a length of the delimitation field may be preconfigured. For multicast information of the node 1, refer to FIG. 18. There may be a delimitation field between every two recursive units. In this case, a length of a recursive unit M-1 may be obtained through calculation by using the length indicated by the first field. A calculation method is similar to that in the first design solution. Refer to the first design solution for understanding. Details are not described again. Alternatively, the length of the recursive unit M-1 may be explicitly indicated by a field (denoted as a seventh field). In this case, the second field may or may not exist. If the second field does not exist, the seventh field may be located in a location of the second field, or may be located in another location. This is not limited in this application. For ease of description, an example in which the second field does not exist when the seventh field exists and the seventh field is located in the location of the second field is used in the following for description.

Assuming that a non-leaf child node of the node 1 is the node 2, the node 2 may determine a start location of a recursive unit 0 based on the second field (or the seventh field) and the length of the multicast routing identifier, determine start locations of a recursive unit 1 to the recursive unit M-1 and lengths of the recursive unit 0 to the recursive unit M-2 based on the delimitation fields, and determine the length of the recursive unit M-1 based on the second field (or the seventh field), that is, determine a location of each recursive unit. The location mentioned in this application is similar to that in the first design solution. Refer to the first design solution for understanding. Details are not described again. For example, based on the example shown in FIG. 18, the start location of the recursive unit is an offset relative to a start location of the multicast information, and the length of the recursive unit M-1 is determined based on the sixth field. In this case, a start location of a recursive unit m is denoted as $offset_m$, and the start location and the length of each recursive unit may be shown in Table 9.

**Table 9**

| Recursive unit | Start location of the recursive unit | Length of the recursive unit |
|---|---|---|
| Recursive unit 0 | $offset_0$=length of the seventh field+length of the multicast routing identifier | $offset_1$- $offset_0$-length of the delimitation field |
| Recursive unit 1 | $offset_i$=first bit after the 1st delimitation field | $offset_2$- $offset_1$-length of the delimitation field |
| ... | ... | ... |
| Recursive unit M-1 | $offset_{M-1}$=first bit after the (M-1)th delimitation field | Indicated by the seventh field |

The first node is used as an example. It may be learned from the foregoing descriptions of Manner 21 that the first node may determine the location of the first node in the first node set, that is, determine specific multicast routing information in the multicast routing information of the second node as the multicast routing information of the first node, or the recursive unit of the first node is a specific recursive unit in all recursive units of the second node. In addition, with reference to the foregoing descriptions of the addressing field, it may be learned that the first node may determine the location of each recursive unit based on the addressing field of the second node. In this way, the first node may determine the recursive unit of the first node: the multicast routing information of the first node.

With reference to the foregoing descriptions of Manner 21 and Manner 22, it may be understood that, if a length of multicast routing information of each non-leaf child node of the second node is the same, the first node can also determine the multicast routing information of the first node based on only the location of the first node in the first node set. In this case, the multicast routing information of the second node may not include the addressing field of the second node, to reduce communication overheads and improve communication efficiency. If the multicast routing information of the second node includes the addressing field of the second node, the first node can determine the multicast routing information of the first node regardless of whether the length of the multicast routing information of each non-leaf child node of the second node is the same, so that the length of the multicast routing information of each non-leaf child node may be flexibly set. Therefore, this solution is applicable to more scenarios.

After determining the multicast routing information of the first node, the first node may generate the second packet based on the multicast routing information of the first node. Alternatively, after determining the multicast routing information of the first node, the first node may further determine the multicast routing information of the third node, and generate the second packet based on the multicast routing information of the third node. In this way, the first node may send the second packet to the third node. For determining the multicast routing information of the third node, refer to the related descriptions of determining the multicast routing information of the first node. Details are not described again.

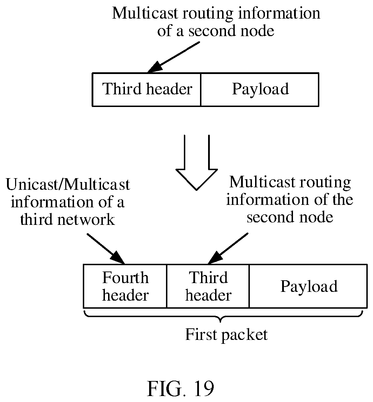

Optionally, with reference to the foregoing embodiments, in a first application scenario, as shown in FIG. 19, the first node and the second node are nodes in a first network. The first packet further includes a third header and a fourth header. The third header includes the multicast routing information of the second node, and optionally, may alternatively include the multicast information of the second node. The fourth header includes unicast/multicast information of a third network. The first network is different from the third network. The first network or the third network may be a complete network, or may be a sub-network in the complete network. This is not limited. For specific implementations of the first network and the third network, refer to the related descriptions in "6. Network". Details are not described herein again. The unicast/multicast information of the third network may include any one of the following: IP unicast/multicast information, MPLS label information, or bit string information. This is not limited. To be specific, when the first packet sent by the second node to the first node is not directly sent to the first node, but needs to be forwarded via an ordinary node, the second node needs to encapsulate, in the first packet, a header of unicast/multicast information supported by a network in which the ordinary node is located, that is, the fourth header including the unicast/multicast information of the third network. The fourth header may be an outermost header of the first packet, so that the ordinary node identifies and forwards the first packet. To encapsulate the unicast/multicast information of the third network, the second node continues to encapsulate the fourth header including the unicast/multicast information of the third network at an outer layer of the third header, and does not remove the third header. The second node can understand or identify the unicast/multicast information of the third network, or cannot understand the unicast/multicast information of the third network. This is not limited. Whether the second node can understand the unicast/multicast information of the third network does not affect encapsulation of the unicast/multicast information of the third network by the second node.

Optionally, the first node and/or the second node may alternatively be nodes/a node in the third network, and may be edge nodes/an edge node in the third network. To be specific, the first node and/or the second node are each/is both a new multicast node that supports forwarding of the multicast routing information and an ordinary node that supports forwarding of the unicast/multicast information. Therefore, during deployment, new multicast may be enabled on an ordinary node, so that the ordinary node becomes a new multicast node that supports forwarding of the multicast routing information. Therefore, a new multicast node does not need to be independently deployed, to further reduce deployment costs.

For example, the second node stores a first forwarding table, and the first forwarding table records a correspondence between the multicast routing identifier of the second node and the unicast/multicast information of the third network. The second node may encapsulate the fourth header in the first packet based on the first forwarding table. Details are described below.

Manner 31: The unicast/multicast information of the third network is IP unicast information, and the first forwarding table records a correspondence between the multicast routing identifier of the second node and the IP unicast information of the third network. It may be understood that there are three implementations of the multicast routing identifier of the second node: Manner 11, Manner 12, and Manner 13. Descriptions are provided below with reference to the three implementations.

In Manner 11, a multicast routing identifier of a node includes a Cnt field and X Idx fields. The second node is used as an example. The Cnt field in the multicast routing identifier of the second node indicates a quantity of child nodes of the second node, and an Idx field in the multicast routing identifier of the second node indicates an identifier of a corresponding child node. The Idx field and the X Cnt fields indicate that the first packet needs to be sent to the X child nodes. On this basis, the first forwarding table may record a correspondence among the Cnt field, IP unicast information of a child node, and an egress port. The second node may search the first forwarding table based on the multicast routing identifier of the second node, to determine X pieces of corresponding IP unicast information and a corresponding egress port. The second node may duplicate the packet into X copies, and encapsulate, in each packet, a fourth header that includes a piece of corresponding IP unicast information, to obtain X first packets. In this way, the second node may send a corresponding first packet to each child node (including the first node) through egress ports corresponding to the X first packets.

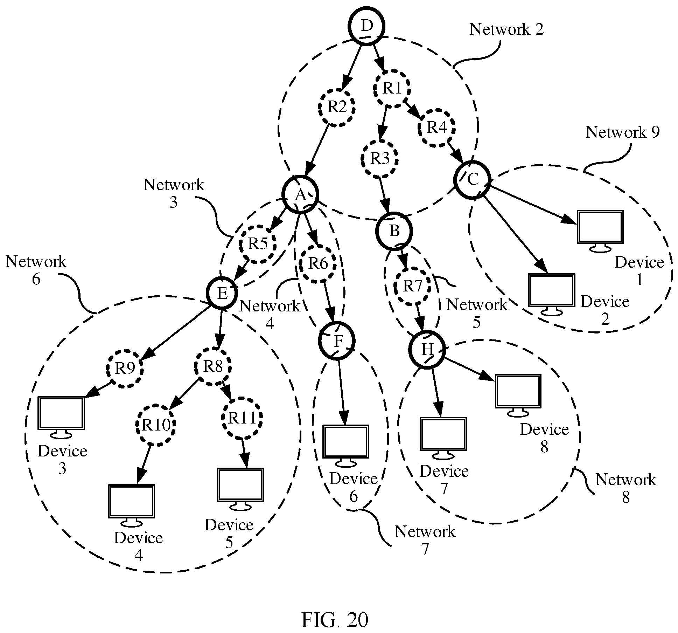

For example, based on an example shown in FIG. 20, a node A to a node H (solid-line nodes) are nodes in a multicast tree, namely, nodes in a network 1, and four ordinary nodes: a node R1, a node R2, a node R3, and a node R4 (dotted-line nodes) that are not in the multicast tree, are further included between the node D and the node A to the node C. The node R1 to the node R4 are nodes in a network 2. Any node in the node A to the node D may be a node in the network 2, or may not be a node in the network 2. An example of a first forwarding table of the node D may be shown in Table 10.

**Table 10**

| Idx field | IP unicast information | Port |
|-----------|----------------------|--------|
| 10 | 10.1.1.1 | Port 1 |
| 11 | 10.1.1.2 | Port 2 |
| 01 | 10.1.1.3 | Port 2 |

The multicast routing identifier of the node D is 11101101. In the multicast routing identifier of the node D, a value of the Cnt field is 11, a value of the 1st Idx field is 10, a value of the 2nd Idx field is 11, and a value of the 3rd Idx field is 01. The node D determines, based on the value 11 of the Cnt field, that Table 10 needs to be searched. The node D searches Table 10 based on the value 10 of the 1st Idx field, to determine that the IP unicast information corresponding to the 1st Idx field is

the IP unicast address 10.1.1.1, and the corresponding port is the port 1. The node D may encapsulate an outer header including the IP unicast address 10.1.1.1 in the packet (denoted as a unicast packet 1), and send the unicast packet 1 to the node A through the port 1. The node D searches Table 10 based on the value 11 of the 2nd Idx field, to determine that the IP unicast information corresponding to the 2nd Idx field is the IP unicast address 10.1.1.2, and the corresponding port is the port 2. The node D may encapsulate an outer header including the IP unicast address 10.1.1.2 in the packet (denoted as a unicast packet 2), and send the unicast packet 2 to the node B through the port 2. The node D searches Table 10 based on the value 01 of the 3rd Idx field, to determine that the IP unicast information corresponding to the 3rd Idx field is the IP unicast address 10.1.1.3, and the corresponding port is the port 2. The node D may encapsulate an outer header including the IP unicast address 10.1.1.3 in the packet (denoted as a unicast packet 3), and send the unicast packet 3 to the node C through the port 2.

In Manner 12, a bit sequence of a node includes N first fields, N is a quantity of nodes in a node set corresponding to the node, and a first field indicates whether the node needs to send the packet to a potential child node corresponding to the first field. For example, a value of the first field is 1, indicating that the node needs to send the packet to the potential child node corresponding to the first field; or a value of the first field is 0, indicating that the node does not need to send the packet to the potential child node corresponding to the first field. The second node is used as an example. A first field indicates whether the second node needs to send the second packet to a potential child node corresponding to the first field. On this basis, the first forwarding table may record a correspondence among the first field, IP unicast information of a potential child node, and an egress port. The second node may search the first forwarding table based on the bit sequence of the second node, to determine corresponding IP unicast information and a corresponding egress port. The second node may duplicate the packet into a corresponding quantity of copies based on a quantity of pieces of the IP unicast information, and encapsulate, in each packet, a fourth header that includes a corresponding piece of IP unicast information, to obtain a corresponding quantity of third packets. In this way, the second node may send a corresponding third packet to each potential child node (including the first node) through an egress port corresponding to the third packet.

For example, based on the example shown in FIG. 20, an example of a first forwarding table of the node D may be shown in Table 11.

**Table 11**

| Index (bit) | IP unicast information | Port |
|---|---|---|
| 1 | 10.1.1.1 | Port 1 |
| 2 | 10.1.1.2 | Port 2 |
| 3 | 10.1.1.3 | Port 2 |

The bit sequence of the node D is 111, a first field corresponding to the node A is the 1st bit in the bit sequence 111, that is, a bit whose index is 1 in Table 11; a first field corresponding to the node B is the 2nd bit in the bit sequence 111, that is, a bit whose index is 2 in Table 11; and a first field corresponding to node C is the 3rd bit in the bit sequence 111, that is, a bit whose index is 3 in Table 11. For the node D, because a value of the 1st bit in the bit sequence 111 is 1, the node D searches Table 11 based on the 1st bit, to determine that the IP unicast information corresponding to the 1st bit is the IP unicast address 10.1.1.1, and the corresponding port is the port 1. The node D may encapsulate an outer header including the IP unicast address 10.1.1.1 in the packet (denoted as a unicast packet 1), and send the unicast packet 1 to the node A through the port 1. Because a value of the 2nd bit in the bit sequence 111 is 1, the node D searches Table 11 based on the 2nd bit, to determine that the IP unicast information corresponding to the 1st bit is the IP unicast address 10.1.1.2, and the corresponding port is the port 2. The node D may encapsulate an outer header including the IP unicast address 10.1.1.2 in the packet (denoted as a unicast packet 2), and send the unicast packet 2 to the node B through the port 2. Because a value of the 3rd bit in the bit sequence 111 is 1, the node D searches Table 11 based on the 3rd bit, to determine that the IP unicast information corresponding to the 3rd bit is the IP unicast address 10.1.1.3, and the corresponding port is the port 2. The node D may encapsulate an outer header including the IP unicast address 10.1.1.3 in the packet (denoted as a unicast packet 3), and send the unicast packet 3 to the node C through the port 2.

In Manner 13, a multicast routing identifier of a node includes a group identifier, and the group identifier indicates a node group corresponding to the node. The second node is used as an example. The first group identifier in the multicast routing identifier of the second node indicates the first node group, and indicates that the first packet needs to be sent to the first node group, that is, needs to be sent to nodes (including the first node) in the first node group. On this basis, the first forwarding table may record a correspondence among the group identifier, IP unicast information of each node in the node group, and an egress port. The second node may search the first forwarding table based on the first group identifier in the multicast routing identifier of the second node, to determine corresponding IP unicast information and a corresponding egress port. The second node may duplicate the packet into a corresponding quantity of copies based on a quantity of pieces of the IP unicast information, and encapsulate, in each packet, a fourth header that includes a corresponding piece of IP unicast information, to obtain a corresponding quantity of first packets. In this way, the second node may send a corresponding first packet to each node (including the first node) in the first node group through an egress port corresponding to the first packet.

For example, based on the example shown in FIG. 20, an example of a first forwarding table of the node D may be shown in Table 12.

**Table 12**

| Group identifier | IP unicast information | Port |
|---|---|---|
| Identifier 4 | 10.1.1.1 | Port 1 |
| | 10.1.1.2 | Port 2 |
| | 10.1.1.3 | Port 2 |
| Identifier 5 | 10.1.1.2 | Port 2 |
| | 10.1.1.3 | Port 2 |

The group identifier in the multicast routing identifier of the node D is the identifier 4. The node D searches Table 12 based on the identifier 4, to determine that the IP unicast information corresponding to the identifier 4 includes the IP unicast address 10.1.1.1, the IP unicast address 10.1.1.2, and the IP unicast address 10.1.1.3, and the corresponding ports include the port 0 and the port 1. The node D may encapsulate an outer header including the IP unicast address 10.1.1.1 in the packet (denoted as a unicast packet 1), and send the unicast packet 1 to the node A through the port 1. The node D may encapsulate an outer header including the IP unicast address 10.1.1.2 in the packet (denoted as a unicast packet 2), and send the unicast packet 2 to the node B through the port 2. The node D may encapsulate an outer header including the IP unicast address 10.1.1.3 in the packet (denoted as a unicast packet 3), and send the unicast packet 3 to the node C through the port 2.

Manner 32: The unicast/multicast information of the third network is IP multicast information, and the first forwarding table records a correspondence between the multicast routing identifier of the second node and the IP multicast information of the third network. It may be understood that there are three implementations of the multicast routing identifier of the second node: Manner 11, Manner 12, and Manner 13. Descriptions are provided below with reference to the three implementations.

In Manner 11, the first forwarding table may record a correspondence among the entire multicast routing identifier of the second node, including the Cnt field and the X Idx fields, the IP multicast information, and an egress port, to indicate that the first packet needs to be sent to a multicast group (including the first node) corresponding to the IP multicast information. The second node may search the first forwarding table based on the multicast routing identifier of the second node, to determine corresponding IP multicast information and a corresponding egress port. The second node may encapsulate, in the packet, the fourth header including the IP multicast information, to obtain the first packet. The second node may send the first packet to the multicast group (including the first node) through the egress port corresponding to the first packet.

For example, based on the example shown in FIG. 20, an example of a first forwarding table of the node D may be shown in Table 13.

**Table 13**

| Idx field+X Idx fields | IP multicast information | Port |
|---|---|---|
| 11101101 | 224.1.1.1 | Port 1 and Port 2 |

The multicast routing identifier of the node D is 11101101. The node D searches Table 13 based on the multicast routing identifier 11101101, to determine that the corresponding IP multicast information is the IP multicast address 224.1.1.1 and the corresponding port is the port 1. The node D may encapsulate the IP multicast address 224.1.1.1 in an outer header of the packet (denoted as a multicast packet 1), and send the multicast packet 1 to the multicast group (including the node A, the node B, and the node C) through the port 1 and the port 2.

In Manner 12, the first forwarding table may record a correspondence among the bit sequence of the second node, the IP multicast information, and an egress port, to indicate that the first packet needs to be sent to a multicast group (including the first node) corresponding to the IP multicast information. The second node may search the first forwarding table based on the bit sequence of the second node, to determine corresponding IP multicast information and a corresponding egress port. The second node may encapsulate, in the packet, the fourth header including the IP multicast information, to obtain the first packet. The second node may send the first packet to the multicast group (including the first node) through the egress port corresponding to the first packet.

For example, based on the example shown in FIG. 20, an example of a first forwarding table of the node D may be shown in Table 14.

**Table 14**

| Bit sequence | IP multicast information | Port |
|---|---|---|
| 111 | 224.1.1.1 | Port 1 and Port 2 |

The bit sequence of the node D is 111. The node D searches Table 14 based on the bit sequence 111, to determine that the corresponding IP multicast information is the IP multicast address 224.1.1.1 and the corresponding port is the port 1. The node D may encapsulate the IP multicast address 224.1.1.1 in an outer header of the packet (denoted as a multicast packet 1), and send the multicast packet 1 to the multicast group (including the node A, the node B, and the node C) through the port 1 and the port 2.

In Manner 13, the first forwarding table may record a correspondence among the group identifier, the IP multicast information, and an egress port, to indicate that the packet needs to be sent to a multicast group (including the first node) corresponding to the IP multicast information. The second node may search the first forwarding table based on the first group identifier in the multicast routing identifier of the second node, to determine corresponding IP multicast information and a corresponding egress port. The second node may encapsulate, in the packet, the fourth header including the IP multicast information, to obtain the first packet. The second node may send the first packet to the multicast group (including the first node) through the egress port corresponding to the first packet.

For example, based on the example shown in FIG. 20, an example of a first forwarding table of the node F may be shown in Table 15.

**Table 15**

| Group identifier | IP multicast information | Port |
|---|---|---|
| Identifier 4 | 224.1.1.1 | Port 1 and Port 2 |
| Identifier 5 | 224.1.1.2 | Port 2 |

The group identifier in the multicast routing identifier of the node D is the identifier 4. The node D searches Table 15 based on the identifier 4, to determine that the corresponding IP multicast information is the IP multicast address 224.1.1.1 and the corresponding port is the port 1. The node D may encapsulate the IP multicast address 224.1.1.1 in an outer header of the packet (denoted as a multicast packet 1), and send the multicast packet 1 to the multicast group (including the node A, the node B, and the node C) through the port 1 and the port 2.

Manner 33: The unicast/multicast information of the third network is MPLS label information, and the first forwarding table records a correspondence between the multicast routing identifier of the second node and the MPLS label information. It may be understood that there are three implementations of the multicast routing identifier of the second node: Manner 11, Manner 12, and Manner 13. Descriptions are provided below with reference to the three implementations.

In Manner 11, the first forwarding table may record a correspondence among the entire multicast routing identifier of the second node, including the Cnt field and the X Idx fields, the MPLS label information, and an egress port. A specific implementation is similar to that in Manner 32. Refer to Manner 32 for understanding. Details are not described again.

For example, based on the example shown in FIG. 20, an example of a first forwarding table of the node D may be shown in Table 16.

**Table 16**

| Idx field+X Idx fields | Label list | Port |
|---|---|---|
| 11101101 | 100 | Port 1 |
| | 001 | Port 2 |
| | 101 | Port 2 |

The multicast routing identifier of the node D is 11101101. The node D searches Table 16 based on the multicast routing identifier 11101101, to determine that a corresponding label list includes the MPLS label 100, the MPLS label 001, and the MPLS label 101, and corresponding ports include the port 1 and the port 2. The node D may encapsulate the MPLS label 100 in an outer header of the packet (denoted as a tunnel packet 1), and send the tunnel packet 1 to the node A through the port 1. The node D may encapsulate the MPLS label 001 in an outer header of the packet (denoted as a tunnel packet 2), and send the tunnel packet 2 to the node B through the port 2. The node D may encapsulate the MPLS label 101 in an outer header of the packet (denoted as a tunnel packet 3), and send the tunnel packet 3 to the node C through the port 2.

In Manner 12, the first forwarding table may record a correspondence among the bit sequence of the second node, the MPLS label information, and an egress port. A specific implementation is similar to that in Manner 32. For understanding, refer to Manner 32. Details are not described again.

For example, based on the example shown in FIG. 20, an example of a first forwarding table of the node D may be shown in Table 17.

**Table 17**

| Bit sequence | Label list | Port |
|---|---|---|
| 111 | 100 | Port 1 |
| | 001 | Port 2 |
| | 101 | Port 2 |

The bit sequence of the node D is 111. The node D searches Table 17 based on the bit sequence 111, to determine that a corresponding label list includes the MPLS label 100, the MPLS label 001, and the MPLS label 101, and corresponding ports include the port 1 and the port 2. The node D may encapsulate the MPLS label 100 in an outer header of the packet (denoted as a tunnel packet 1), and send the tunnel packet 1 to the node A through the port 1. The node D may encapsulate the MPLS label 001 in an outer header of the packet (denoted as a tunnel packet 2), and send the tunnel packet 2 to the node B through the port 2. The node D may encapsulate the MPLS label 101 in an outer header of the packet (denoted as a tunnel packet 3), and send the tunnel packet 3 to the node C through the port 2.

In Manner 13, the first forwarding table may record a correspondence among the group identifier, the MPLS label information, and an egress port. A specific implementation is similar to that in Manner 32. For understanding, refer to Manner 32. Details are not described again.

For example, based on the example shown in FIG. 20, an example of a first forwarding table of the node D may be shown in Table 18.

**Table 18**

| Group identifier | Label list | Port |
|---|---|---|
| Identifier 4 | 100 | Port 1 |
| | 001 | Port 2 |
| | 101 | Port 2 |
| Identifier 5 | 001 | Port 2 |
| | 101 | Port 2 |

The group identifier in the multicast routing identifier of the node D is the identifier 4. The node D searches Table 18 based on the identifier 4, to determine that a corresponding label list includes the MPLS label 100, the MPLS label 001, and the MPLS label 101, and corresponding ports include the port 1 and the port 2. The node D may encapsulate the MPLS label 100 in an outer header of the packet (denoted as a tunnel packet 1), and send the tunnel packet 1 to the node A through the port 1. The node D may encapsulate the MPLS label 001 in an outer header of the packet (denoted as a tunnel packet 2), and send the tunnel packet 2 to the node B through the port 2. The node D may encapsulate the MPLS label 101 in an outer header of the packet (denoted as a tunnel packet 3), and send the tunnel packet 3 to the node C through the port 2.

Manner 34: The unicast/multicast information of the third network is bit string information, that is, the third network supports BIER multicast, and the first forwarding table records a correspondence between the multicast routing identifier of the second node and the MPLS label information. It may be understood that there are three implementations of the multicast routing identifier of the second node: Manner 11, Manner 12, and Manner 13. Descriptions are provided below with reference to the three implementations.

In Manner 11, the first forwarding table may record a correspondence among the entire multicast routing identifier of the second node, including the Cnt field and the X Idx fields, the bit string information, and a neighboring device. The second node may search the first forwarding table based on the multicast routing identifier of the second node, to determine corresponding bit string information and a corresponding neighboring device. The second node may encapsulate, in the packet, the fourth header including the bit string information, to obtain the first packet. The second node may send the first packet to the first node through an egress port corresponding to the neighboring device.

For example, based on the example shown in FIG. 20, an example of a first forwarding table of the node D may be shown in Table 19.

**Table 19**

| Idx field+X Idx fields | Bit string information | Neighboring device |
|---|---|---|
| 11101101 | 100 | R2 |
| | 011 | R1 |
| | 011 | R1 |

The multicast routing identifier of the node D is 11101101. The node D searches Table 19 based on the multicast routing identifier 11101101, to determine that the corresponding bit string information includes the bit string information 100 and the bit string information 011. A neighboring device corresponding to the bit string information 100 is the node R2, indicating that the multicast packet sent to the node A needs to pass through the node R2, and a neighboring device corresponding to the bit string information 011 is the node R1, indicating that multicast packets sent to the node B and the node C need to pass through node R1. The node D may encapsulate the bit string information 100 in a packet (denoted as a multicast packet 2), and send the multicast packet 2 through a port corresponding to the node R2. The node D may encapsulate the bit string information 0011 in each of two packets (denoted as a multicast packet 3 and a multicast packet 4), and send the multicast packet 3 and the multicast packet 4 through a port corresponding to the node R1.

In Manner 12, the first forwarding table may record a correspondence among the bit sequence of the second node, the bit string information, and a neighboring device. The second node may search the first forwarding table based on the bit sequence of the second node, to determine corresponding bit string information and a corresponding neighboring device. The second node may encapsulate, in the packet, the fourth header including the bit string information, to obtain the first packet. The second node may send the first packet to the first node through an egress port corresponding to the neighboring device.

For example, based on the example shown in FIG. 20, an example of a first forwarding table of the node D may be shown in Table 20.

**Table 20**

| Bit sequence | Bit string information | Neighboring device |
|---|---|---|
| 111 | 100 | R2 |
| | 011 | R1 |
| | 011 | R1 |

The bit sequence of the node D is 111. The node D searches Table 20 based on the bit sequence 111, to determine that the corresponding bit string information includes the bit string information 100 and the bit string information 011. The node D may encapsulate the bit string information 100 in a packet (denoted as a multicast packet 2), and send the multicast packet 2 through a port corresponding to the node R2. The node D may encapsulate the bit string information 011 in each of two packets (denoted as a multicast packet 3 and a multicast packet 4), and send the multicast packet 3 and the multicast packet 4 through a port corresponding to the node R1.

In Manner 13, the first forwarding table may record a correspondence among the group identifier, the bit string information, and a neighboring device. The second node may search the first forwarding table based on the first group identifier in the multicast routing identifier of the second node, to determine corresponding bit string information and a corresponding neighboring device. The second node may encapsulate, in the packet, the fourth header including the bit string information, to obtain the first packet. The second node may send the first packet to the first node through an egress port corresponding to the neighboring device.

For example, based on the example shown in FIG. 20, an example of a first forwarding table of the node E may be shown in Table 21.

**Table 21**

| Group identifier | Bit string information | Neighboring device |
|---|---|---|
| Identifier 4 | 100 | R2 |
| | 011 | R1 |
| | 011 | R1 |
| Identifier 5 | 011 | R1 |
| | 011 | R1 |

The group identifier in the multicast routing identifier of the node D is the identifier 4. The node D searches Table 21 based on the identifier 4, to determine that the corresponding bit string information includes the bit string information 100 and the bit string information 011. The node D may encapsulate the bit string information 100 in a packet (denoted as a multicast packet 2), and send the multicast packet 2 through a port corresponding to the node R2. The node D may encapsulate the bit string information 011 in each of two packets (denoted as a multicast packet 3 and a multicast packet 4), and send the multicast packet 3 and the multicast packet 4 through a port corresponding to the node R1.

It may be understood that Table 19 to Table 21 are merely examples, and are not intended as limitations. For example, the item of neighboring device in Table 19 to Table 21 may be configured as a corresponding egress port. To be specific, the node E may not perceive or configure a topology relationship of an ordinary node, and directly send the multicast packet through the egress port.

With reference to Manner 31 to the Manner 34, it may be learned that, from a perspective of packet forwarding, cross-network forwarding of the first packet may be implemented by encapsulating the unicast/multicast information, so that forwarding is no longer restricted. From a perspective of device deployment, new multicast nodes: the first node and the second node, and ordinary nodes may be deployed in a mixed manner. For example, a small quantity of new multicast nodes may be deployed in the ordinary nodes in a scattered manner, so that a quantity of new multicast nodes to be deployed can be reduced, to reduce deployment difficulty and deployment costs.

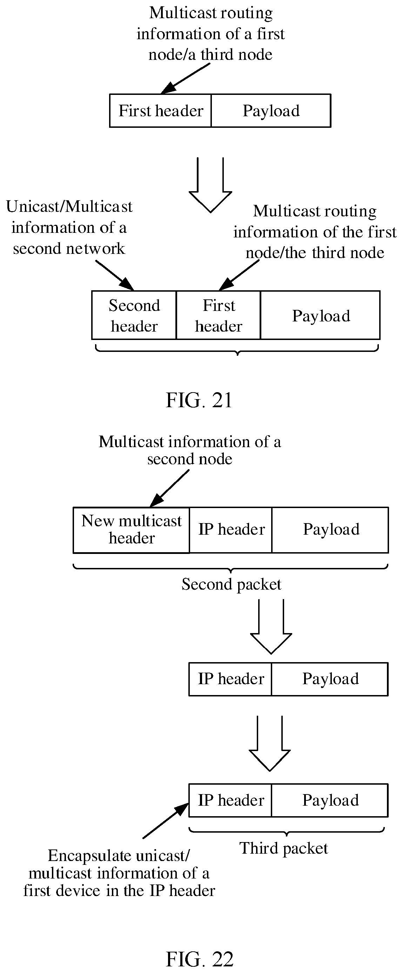

Optionally, with reference to the foregoing embodiments, in a second application scenario, as shown in FIG. 21, the first node and the third node are nodes in a first network, the second packet may further include a first header and a second header, the first header includes the multicast routing information of the third node or the multicast routing information of the first node, and the second header includes unicast/multicast information of a second network. The unicast/multicast information of the second network may include any one of the following: IP unicast/multicast information, MPLS label information, or bit string information. This is not limited. To be specific, when the second packet sent by the first node to the third node is not directly sent to the third node, but needs to be forwarded via an ordinary node, the first node needs to encapsulate, in the second packet, a header of unicast/multicast information supported by a network in which the ordinary node is located, that is, the second header including the unicast/multicast information of the second network. The second header may be an outermost header of the second packet, so that the ordinary node identifies and forwards the second packet. The second network may be the same as or different from the third network. The second network or the third network may be a complete network, or may be a sub-network in the complete network. This is not limited. For specific implementations of the second network and the third network, refer to the related descriptions in "6. Network". Details are not described herein again. The first node encapsulates the unicast/multicast information of the second network in an outer layer of the first header, continues to encapsulate the second header including the unicast/multicast information of the second network, and does not remove the first header. The first node can understand or identify the unicast/multicast information of the second network, or cannot understand the unicast/multicast information of the second network. This is not limited. Whether the first node can understand the unicast/multicast information of the second network does not affect encapsulation of the unicast/multicast information of the second network by the first node.

Optionally, the first node and/or the third node may alternatively be nodes/a node in the second network, and may be edge nodes/an edge node in the second network. To be specific, the first node and/or the third node are each/is both a new multicast node that supports forwarding of the multicast routing information and an ordinary node that supports forwarding of the unicast/multicast information. Therefore, during deployment, new multicast may be enabled on an ordinary node, so that the ordinary node becomes a new multicast node that supports forwarding of the multicast routing information. Therefore, a new multicast node does not need to be independently deployed, to further reduce deployment costs. It should be noted that, if the first node is both a node in the second network and a node in the third network, when the second network is different from the third network, the first node is a node belonging to a plurality of networks, and may be referred to as a shared node. If the first node is a node in the second network or in the third network, when the second network is different from the third network, the first node is a node belonging to a single network, and may be referred to as an exclusive node.

For example, the first node stores a second forwarding table, and the second forwarding table records a correspondence between the multicast routing identifier of the first node and the unicast/multicast information of the second network. The first node may encapsulate the second header in the second packet based on the second forwarding table. An implementation principle for the first node to encapsulate the second header in the second packet based on the second forwarding table is similar to Manner 31 to Manner 34. For understanding, refer to Manner 31 to Manner 34. Details are not described herein again.

For example, based on the example shown in FIG. 20, there is further one ordinary node between the node A and the node E. The ordinary node is a node R5, and is a node in a network 3. There is further one ordinary node between the node A and the node F. The ordinary node is a node R6, and is a node in a network 4. There is further one ordinary node between the node B and the node H. The ordinary node is a node R7 and is a node in a network 5. The network 2, the network 3, the network 4, and the network 5 may be a same network, or may be different networks. This is not limited. The node A and the node E may be nodes in the network 3, or may not be nodes in the network 3. The node A and the node F may be nodes in the network 4, or may not be nodes in the network 4. The node B and the node H may be nodes in the network 5, or may not be nodes in the network 5. This is not limited. In this case, the implementation principles for the node A to forward the packet to the node E and the node F and for the node B to forward the packet to the node H are similar to that for the node D. For understanding, refer to Manner 31 to Manner 34. Details are not described again.

Optionally, with reference to the foregoing embodiments, in a third application scenario, the first node may alternatively be a leaf child node of the second node. In this case, the first node may further generate a third packet based on the first packet, and send the third packet to a first device. The third packet includes unicast/multicast information of the first device. In other words, the third packet may be a unicast packet or may be a multicast packet. The unicast/multicast information of the first device may include any one of the following: IP unicast/multicast information, MPLS label information, or bit string information. That is, the first device is not a node in the multicast tree. If the first node wants to send the packet to the first device, the first node needs to encapsulate, in the packet, unicast/multicast information supported by a network in which the first device is located, to implement cross-network forwarding. The packet is sent from the network in which the first node and the second node are located to the network in which the first device is located, and is finally sent to the first device. The first node can understand or identify the unicast/multicast information supported by the network in which the first device is located, or cannot understand the unicast/multicast information supported by the network in which the first device is located. Whether the first node can understand the unicast/multicast information supported by the network in which the first device is located does not affect encapsulation, by the first node, of the unicast/multicast information supported by the network in which the first device is located. There are two manners in which the first node encapsulates, in the packet, the unicast/multicast information supported by the network in which the first device is located: Manner 41 and Manner 42, which are described in detail below.

Manner 41:

In the first packet, the multicast routing information of the second node includes the multicast routing identifier of the first node. The first node stores a third forwarding table. The third forwarding table records a correspondence between the multicast routing identifier of the first node and the unicast/multicast information of the first device. The first node may generate the third packet based on the third forwarding table.

In a first implementation, the unicast/multicast information of the first device is IP unicast information, and the third forwarding table records a correspondence between the multicast routing identifier of the first node and the IP unicast information. It may be understood that there are three implementations of the multicast routing identifier of the first node: Manner 11, Manner 12, and Manner 13. Descriptions are provided below with reference to the three implementations.

In Manner 11, a multicast routing identifier of a node includes a Cnt field and X Idx fields. In this case, for a leaf child node, a Cnt field in a multicast routing identifier of the leaf child node may indicate a quantity of downstream devices of the leaf child node, and an Idx field in the multicast routing identifier of the leaf child node indicates an identifier of a corresponding device. The Idx field and the X Cnt fields indicate that the packet needs to be sent to the X downstream devices. The first node is used as an example. The Cnt field in the multicast routing identifier of the first node indicates a quantity of first devices, and an Idx field in the multicast routing identifier of the first node indicates an identifier of a corresponding first device. The Idx field and the X Cnt fields indicate that the third packet needs to be sent to the X first devices. On this basis, the third forwarding table may record a correspondence among the Cnt field, the IP unicast information of the first device, and an egress port. The first node may search the third forwarding table based on the multicast routing identifier of the first node, to determine corresponding X pieces of IP unicast information and a corresponding egress port. As shown in FIG. 22, the first node may remove the multicast information of the second node from the second packet, to obtain a removed packet. The first node may duplicate a removed packet into X, and encapsulate each piece of IP unicast information in an IP header of a corresponding packet, to obtain X third packets. In this way, the first node may send a corresponding third packet to each first device through an egress port corresponding to the third packet.

For example, based on the example shown in FIG. 20, an example of a third forwarding table of the node C may be shown in Table 22.

**Table 22**

| Idx field | IP unicast information | Port |
|-----------|----------------------|--------|
| 1 | 10.1.1.4 | Port 1 |
| 0 | 10.1.1.5 | Port 2 |

The multicast routing identifier of the node C is 110. In the multicast routing identifier of the node C, a value of the Cnt field is 1, a value of the 1st Idx field is 1, and a value of the 2nd Idx field is 0. The node C determines, based on the value 1 of the Cnt field, that Table 22 needs to be searched. The node C searches Table 22 based on the value 1 of the 1st Idx field, to determine that the IP unicast information corresponding to the 1st Idx field is the IP unicast address 10.1.1.4, and the corresponding port is the port 1. The node C may remove the multicast information of the node D in the packet, encapsulate the IP unicast address 10.1.1.4 in an IP header of the packet (denoted as a unicast packet 4), and send the unicast packet 4 to a device 1 through the port 1. The node C searches Table 22 based on the value 0 of the 2nd Idx field, to determine that the IP unicast information corresponding to the 2nd Idx field is the IP unicast address 10.1.1.5, and the corresponding port is the port 2. The node C may remove the multicast information of the node D from the packet, encapsulate the IP unicast address 10.1.1.5 in an IP header of the packet (denoted as a unicast packet 5), and send the unicast packet 5 to a device 2 through the port 2. In addition, the device 1 and the device 2 are devices in a network 9, and the node C may be or may not be a node in the network 9.

In Manner 12, a bit sequence of a node includes N first fields, and N is a quantity of nodes in a node set corresponding to the node. In this case, for a leaf child node, a node set corresponding to the leaf child node may include some or all potential child nodes of the leaf child node, that is, may include an upstream node of the leaf child node and all downstream devices of the leaf child node. A first field indicates whether the leaf child node needs to send a packet to a potential child node corresponding to the first field. For example, a value of the first field is 1, indicating that the leaf child node needs to send the packet to the potential child node corresponding to the first field; or a value of the first field is 0, indicating that the leaf child node does not need to send the packet to the potential child node corresponding to the first field. The first node is used as an example. A first field indicates whether the first node needs to send the third packet to a first device corresponding to the first field. On this basis, the third forwarding table may record a correspondence among the first field, the IP unicast information of the first device, and an egress port. The first node may search the third forwarding table based on the bit sequence of the first node, to determine corresponding IP unicast information and a corresponding egress port. As shown in FIG. 22, the first node may remove the multicast information of the second node from the second packet, to obtain a removed packet. The first node duplicates a removed packet into a corresponding quantity of copies based on a quantity of pieces of the IP unicast information, and encapsulates each piece of IP unicast information in an encapsulated IP header of a corresponding packet, to obtain the third packet. In this way, the first node may send the corresponding third packet to the first device through the egress port corresponding to the third packet.

For example, based on the example shown in FIG. 20, an example of a third forwarding table of the node E may be shown in Table 23.

**Table 23**

| Index (bit) | IP unicast information | Port |
|-------------|----------------------|--------|
| 1 | 10.1.1.1 | Port 0 |
| 2 | 10.1.1.6 | Port 1 |
| 3 | 10.1.1.7 | Port 1 |
| 4 | 10.1.1.8 | Port 2 |

The bit sequence of the node E is 0111. A first field corresponding to the node A is the 1st bit in the bit sequence 0111, that is, a bit whose index is 1 in Table 23. A first field corresponding to a device 3 is the 2nd bit in the bit sequence 0111, that is, a bit whose index is 2 in Table 11. A first field corresponding to a device 4 is the 3rd bit in the bit sequence 0111, that is, a bit whose index is 3 in Table 11. A first field corresponding to a device 5 is the 4th bit in the bit sequence 0111, that is, a bit whose index is 4 in Table 11. For the node E, because a value of the 1st bit in the bit sequence 0111 is 0, the node E skips the bit and searches for the 2nd bit in the bit sequence 0111. Because a value of the 2nd bit in the bit sequence 0111 is 1, the node E searches Table 23 based on the 2nd bit, to determine that the IP unicast information corresponding to the 2nd bit is the IP unicast address 10.1.1.6, and the corresponding port is the port 1. The node E may remove the multicast information of the node A in the packet, encapsulate the IP unicast address 10.1.1.6 in an IP header of the packet (denoted as a unicast packet 6), and send the unicast packet 6 to the device 3 through the port 1. Because a value of the 3rd bit in the bit sequence 0111 is 1, the node E searches Table 23 based on the 3rd bit, to determine that the IP unicast information corresponding to the 3rd bit is the IP unicast address 10.1.1.7, and the corresponding port is the port 1. The node E may remove the multicast information of the node A in the packet, encapsulate the IP unicast address 10.1.1.7 in an IP header of the packet (denoted as a unicast packet 7), and send the unicast packet 7 to the device 4 through the port 1. Because a value of the 4th bit in the multicast routing identifier 0111 is 1, the node E searches Table 23 based on the 4th bit, to determine that the IP unicast information corresponding to the 4th bit is the IP unicast address 10.1.1.8, and the corresponding port is the port 2. The node E may remove the multicast information of the node A in the packet, encapsulate the IP unicast address 10.1.1.8 in an IP header of the packet (denoted as a unicast packet 8), and send the unicast packet 8 to the device 5 through the port 2. In addition, the device 3, the device 4, and the device 5 are devices in a network 6, and the node E may or may not be a node in the network 6.

In Manner 13, a multicast routing identifier of a node includes a group identifier, and the group identifier indicates a node group corresponding to the node. In this case, for a leaf child node, all nodes in a node group corresponding to the leaf child node are downstream devices of the leaf child node, and the packet needs to be sent to these downstream devices. The first node is used as an example. A second group identifier in the multicast routing identifier of the first node indicates a second node group, that is, indicates that the third packet needs to be sent to the second node group. On this basis, the third forwarding table may record a correspondence between the group identifier, IP unicast information of each device in the node group, and an egress port. The first node may search the third forwarding table based on the second group identifier in the multicast routing identifier of the first node, to determine corresponding IP unicast information and a corresponding egress port. As shown in FIG. 22, the first node may remove the multicast information of the second node from the second packet, to obtain a removed packet. The first node duplicates a removed packet into a corresponding quantity of copies based on a quantity of pieces of the IP unicast information, and encapsulates each piece of IP unicast information in an encapsulated IP header of a corresponding packet, to obtain the third packet. In this way, the first node may send the corresponding third packet to the first device through the egress port corresponding to the third packet.

For example, based on the example shown in FIG. 20, an example of a third forwarding table of the node E may be shown in Table 24.

**Table 24**

| Group identifier | IP unicast information | Port |
|---|---|---|
| Identifier 6 | 10.1.1.6 | Port 1 |
| | 10.1.1.7 | Port 1 |
| | 10.1.1.8 | Port 2 |
| Identifier 7 | 10.1.1.6 | Port 1 |
| | 10.1.1.7 | Port 1 |

The group identifier in the multicast routing identifier of the node E is the identifier 6. The node E searches Table 24 based on the identifier 6, to determine that the IP unicast information corresponding to the identifier 6 includes the IP unicast address 10.1.1.6, the IP unicast address 10.1.1.7, and the IP unicast address 10.1.1.8, and the corresponding ports include the port 1 and the port 2. The node E may remove the multicast information of the node A in the packet, encapsulate the IP unicast address 10.1.1.6 in an IP header of the packet (denoted as a unicast packet 6), and send the unicast packet 6 to a device 3 through the port 1. The node E may remove the multicast information of the node A in the packet, encapsulate the IP unicast address 10.1.1.7 in an IP header of the packet (denoted as a unicast packet 7), and send the unicast packet 7 to a device 4 through the port 1. The node E may remove the multicast information of the node A in the packet, encapsulate the IP unicast address 10.1.1.8 in an IP header of the packet (denoted as a unicast packet 8), and send the unicast packet 8 to a device 5 through the port 2.

In a second implementation, the unicast/multicast information of the first device is IP multicast information, that is, the first device is a device in a multicast group, and the third forwarding table records a correspondence between the multicast routing identifier of the first node and the IP multicast information. It may be understood that there are three implementations of the multicast routing identifier of the first node: Manner 11, Manner 12, and Manner 13. Descriptions are provided below with reference to the three implementations.

In Manner 11, a multicast routing identifier of a node includes a Cnt field and X Idx fields. The first node is used as an example. The multicast routing identifier of the first node also includes a Cnt field and X Idx fields. On this basis, the third forwarding table may record a correspondence among the entire multicast routing identifier, including the Cnt field and the X Idx fields, the IP multicast information, and an egress port, to indicate that the packet needs to be sent to the multicast group corresponding to the IP multicast information. The first node may search the third forwarding table based on the multicast routing identifier of the first node, to determine corresponding IP multicast information and a corresponding egress port. As shown in FIG. 22, the first node may remove the multicast information of the second node in the second packet to obtain a removed packet, and encapsulate the IP multicast information in an IP header of the removed packet to obtain the third packet. In this way, the first node may send the third packet to the corresponding multicast group (including the first device) through the egress port corresponding to the third packet.

For example, based on the example shown in FIG. 20, an example of a third forwarding table of the node F may be shown in Table 25.

**Table 25**

| Idx field+X Idx fields | IP multicast information | Port |
|---|---|---|
| 11 | 224.1.1.3 | Port 1 |

The multicast routing identifier of the node F is 11. In the multicast routing identifier of the node F, a value of the Cnt field is 1, and a value of the Idx field is 1. The node F searches Table 25 based on the multicast routing identifier 11, to determine that the corresponding IP multicast information is the IP multicast address 224.1.1.3 and the corresponding port is the port 1. The node F may remove the multicast information of the node A in the packet, encapsulate the IP multicast address 224.1.1.3 in an IP header of the packet (denoted as a multicast packet 5), and send the multicast packet 5 to a device 6 in the multicast group through the port 1. In addition, the device 6 is a device in a network 7, and the node F may be or may not be a node in the network 7.

In Manner 12, a bit sequence of a node includes N first fields. The first node is used as an example. The bit sequence of the first node also includes N first fields. On this basis, the third forwarding table may record a correspondence among the bit sequence, the IP multicast information, and an egress port, to indicate that the third packet needs to be sent to a multicast group corresponding to the IP multicast information. The first node may search the third forwarding table based on the bit sequence of the first node, to determine corresponding IP multicast information and a corresponding egress port. The first node may remove the multicast information of the second node in the second packet to obtain a removed packet, and encapsulate the IP multicast information in an IP header of the removed packet to obtain the third packet. In this way, the first node may send the third packet to the corresponding multicast group (including the first device) through the egress port corresponding to the third packet.

For example, based on the example shown in FIG. 20, an example of a third forwarding table of the node F may be shown in Table 26.

**Table 26**

| Bit sequence | IP multicast information | Port |
|---|---|---|
| 01 | 224.1.1.3 | Port 1 |

The bit sequence of the node F is 01. The node F searches Table 26 based on the bit sequence 01, to determine that the corresponding IP multicast information is the IP multicast address 224.1.1.3 and the corresponding port is the port 1. The node F may remove the multicast information of the node A in the packet, encapsulate the IP multicast address 224.1.1.3 in an IP header of the packet (denoted as a multicast packet 5), and send the multicast packet 5 to a device 6 in the multicast group through the port 1.

In Manner 13, a multicast routing identifier of a node includes a group identifier. The first node is used as an example. The multicast routing identifier of the first node includes a second group identifier. On this basis, the third forwarding table may record a correspondence among the group identifier in the multicast routing identifier, the IP multicast information, and an egress port, to indicate that the packet needs to be sent to a multicast group corresponding to the IP multicast information. The first node may search the third forwarding table based on the second group identifier in the multicast routing identifier of the first node, to determine corresponding IP multicast information and a corresponding egress port. As shown in FIG. 22, the first node may remove the multicast information of the second node in the second packet to obtain a removed packet, and encapsulate the IP multicast information in an IP header of the removed packet to obtain the third packet. In this way, the first node may send the third packet to the corresponding multicast group (including the first device) through the egress port corresponding to the third packet.

For example, based on the example shown in FIG. 20, an example of a third forwarding table of the node F may be shown in Table 27.

**Table 27**

| Group identifier | IP multicast information | Port |
|---|---|---|
| Identifier 8 | 224.1.1.3 | Port 1 |

The group identifier in the multicast routing identifier of the node F is the identifier 8. The node F searches Table 27 based on the identifier 8, to determine that the corresponding IP multicast information is the IP multicast address 224.1.1.3 and the corresponding port is the port 1. The node F may remove the multicast information of the node A in the packet, encapsulate the IP multicast address 224.1.1.3 in an IP header of the packet (denoted as a multicast packet 5), and send the multicast packet 5 to a device 6 in the multicast group through the port 1.

In a third implementation, the unicast/multicast information of the first device is MPLS label information, and the third forwarding table records a correspondence between the multicast routing identifier of the first node and the MPLS label information. It may be understood that there are three implementations of the multicast routing identifier of the first node: Manner 11, Manner 12, and Manner 13. Descriptions are provided below with reference to the three implementations.

In Manner 11, the third forwarding table may record a correspondence among the entire multicast routing identifier of the first node, including the Cnt field and the X Idx fields, the MPLS label information, and an egress port. A specific implementation is similar to that in the foregoing second implementation. Refer to the second implementation for understanding. Details are not described again.

For example, based on the example shown in FIG. 20, an example of a third forwarding table of the node H may be shown in Table 28.

**Table 28**

| Idx field+X Idx fields | Label list | Port |
|---|---|---|
| 110 | 100 | Port 1 |
| | 101 | Port 1 |

The multicast routing identifier of the node H is 110. The node H searches Table 28 based on the multicast routing identifier 110, to determine that the corresponding MPLS label information includes the MPLS label 100 and the MPLS label 101 and the corresponding port is the port 1. The node H may remove the multicast information of the node B from the packet, encapsulate the MPLS label 100 in an IP header of the packet (denoted as a tunnel packet 4), and send the tunnel packet 4 to a device 7 through the port 1. The node H may remove the multicast information of the node B from the packet, encapsulate the MPLS label 101 in an IP header of the packet (denoted as a tunnel packet 5), and send the tunnel packet 5 to a device 8 through the port 1. In addition, the device 7 and the device 8 are devices in a network 8, and the node H may be or may not be a node in the network 8.

In Manner 12, the third forwarding table may record a correspondence among the bit sequence of the first node, the MPLS label information, and an egress port. A specific implementation is similar to that in the foregoing second implementation. Refer to the second implementation for understanding. Details are not described again.

For example, based on the example shown in FIG. 20, an example of a third forwarding table of the node H may be shown in Table 29.

**Table 29**

| Bit sequence | Label list | Port |
|---|---|---|
| 011 | 100 | Port 1 |
| | 101 | Port 1 |

The bit sequence of the node H is 011. The node H searches Table 29 based on the bit sequence 011, to determine that the corresponding MPLS label information includes the MPLS label 100 and the MPLS label 101 and the corresponding port is the port 1. The node H may remove the multicast information of the node B from the packet, encapsulate the MPLS label 100 in an IP header of the packet (denoted as a tunnel packet 4), and send the tunnel packet 4 to a device 7 through the port 1. The node H may remove the multicast information of the node B from the packet, encapsulate the MPLS label 101 in an IP header of the packet (denoted as a tunnel packet 5), and send the tunnel packet 5 to a device 8 through the port 1.

In Manner 13, the third forwarding table may record a correspondence among the group identifier in the multicast routing identifier, the MPLS label information, and an egress port. A specific implementation is similar to that in the foregoing second implementation. Refer to the second implementation for understanding. Details are not described again.

For example, based on the example shown in FIG. 20, an example of a third forwarding table of the node H may be shown in Table 30.

**Table 30**

| Group identifier | Label list | Port |
|---|---|---|
| Identifier 9 | 100 | Port 1 |
| | 101 | Port 1 |

The group identifier in the multicast routing identifier of the node H is the identifier 9. The node H searches Table 30 based on the identifier 9, to determine that the corresponding MPLS label information includes the MPLS label 100 and the MPLS label 101 and the corresponding port is the port 1. The node H may remove the multicast information of the node B from the packet, encapsulate the MPLS label 100 in an IP header of the packet (denoted as a tunnel packet 4), and send the tunnel packet 4 to a device 7 through the port 1. The node H may remove the multicast information of the node B from the packet, encapsulate the MPLS label 101 in an IP header of the packet (denoted as a tunnel packet 5), and send the tunnel packet 5 to a device 8 through the port 1.

In a fourth implementation, the unicast/multicast information of the first device is bit string information, that is, the first device is a device in a BIER multicast group, and the third forwarding table records a correspondence between the multicast routing identifier of the first node and the bit string information. It may be understood that there are three implementations of the multicast routing identifier of the first node: Manner 11, Manner 12, and Manner 13. Descriptions are provided below with reference to the three implementations.

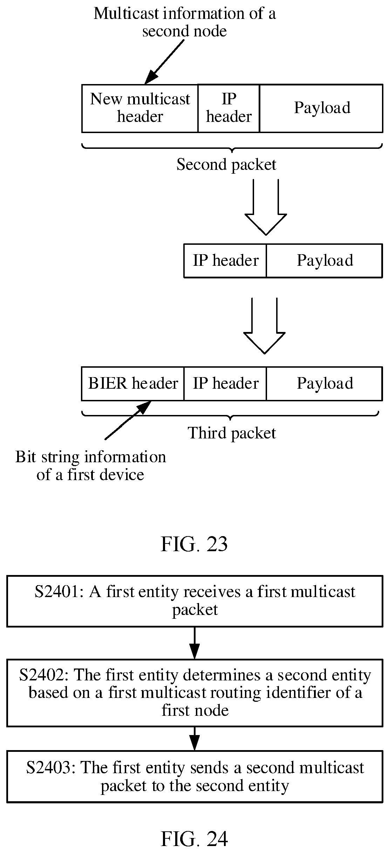

In Manner 11, the third forwarding table may record a correspondence among the entire multicast routing identifier, including the Cnt field and the X Idx fields, the bit string information, and a neighboring device. The first node may search the third forwarding table based on the multicast routing identifier of the first node, to determine corresponding bit string information and a corresponding neighboring device. As shown in FIG. 23, the first node may remove the multicast information of the second node from the second packet to obtain a removed packet, and encapsulate, in the removed packet, an outer header including the bit string information, to obtain the third packet. In this way, the first node may send the third packet to the BIER multicast group (including the first device) through the egress port corresponding to the neighboring device.

For example, based on the example shown in FIG. 20, there are further four ordinary nodes between the node E and the device 3 to the device 5, that is, nodes that are not in the multicast tree and are respectively a node R8, a node R9, a node R10, and a node R11. The node R8, the node R9, the node R10, and the node R11 are nodes in the network 6, and an example of the third forwarding table of the node E may be shown in Table 31.

**Table 31**

| Idx field+X Idx fields | Bit string information | Neighboring device |
|---|---|---|
| 11101101 | 0100 | R9 |
| | 0011 | R8 |
| | 0011 | R8 |

The multicast routing identifier of the node E is 11101101. In the multicast routing identifier of the node E, a value of the Cnt field is 11, indicating that there are three downstream devices of the node E. A value of the 1st Idx field is 10, indicating the device 3. A value of the 2nd Idx field is 11, indicating the device 4. A value of the 3rd Idx field is 01, indicating the device 5. The node E searches Table 31 based on the multicast routing identifier 11101101, to determine that the corresponding bit string information includes the bit string information 0100 and the bit string information 0011. The neighboring device corresponding to the bit string information 0100 is the node R9, indicating that the multicast packet sent to the device 3 needs to pass through the node R9. The neighboring device corresponding to the bit string information 0011 is the node R8, indicating that multicast packets sent to the device 4 and the device 5 need to pass through node R8. The node E may remove the multicast information of the node A from the packet, encapsulate an outer header including the bit string information 0100 in the packet (denoted as a multicast packet 6), and send the multicast packet 6 through a port corresponding to the node R9. The node E may remove the multicast information of the node A from the packet, duplicate a packet into two copies, encapsulate outer headers including the bit string information 0011 in the two copies of packets (denoted as a multicast packet 7 and a multicast packet 8), and the multicast packet 7 and the multicast packet 8 are sent through a port corresponding to the node R8.

In Manner 12, the third forwarding table may record a correspondence among the bit sequence of the first node, the bit string information, and a neighboring device. The first node may search the third forwarding table based on the bit sequence of the first node, to determine corresponding bit string information and a corresponding neighboring device. As shown in FIG. 23, the first node may remove the multicast information of the second node from the second packet to obtain a removed packet, and encapsulate, in the removed packet, an outer header including the bit string information, to obtain the third packet. In this way, the first node may send the third packet to the BIER multicast group (including the first device) through the egress port corresponding to the neighboring device.

For example, based on the example shown in FIG. 20, an example of a third forwarding table of the node E may be shown in Table 32.

**Table 32**

| Bit sequence | Bit string information | Neighboring device |
|---|---|---|
| 0111 | 0100 | R9 |
| | 0011 | R8 |
| | 0011 | R8 |

The bit sequence of the node E is 0111. A value of the $1^{st}$ bit is 0, indicating that the node A is not a potential child node of the node E. Values of the $2^{nd}$ bit to the $4^{th}$ bit are 1, indicating that the device 3 to the device 5 are all potential child nodes of the node E. The node E searches Table 32 based on the bit sequence 0111, to determine that the corresponding bit string information includes the bit string information 0100 and the bit string information 0011. The node E may remove the multicast information of the node A from the packet, encapsulate an outer header including the bit string information 0100 in the packet (denoted as a multicast packet 6), and send the multicast packet 6 through a port corresponding to the node R9. The node E may remove the multicast information of the node A from the packet, duplicate a packet into two copies, encapsulate outer headers including the bit string information 0011 in the two copies of packets (denoted as a multicast packet 7 and a multicast packet 8), and the multicast packet 7 and the multicast packet 8 are sent through a port corresponding to the node R8.

In Manner 13, the third forwarding table may record a correspondence among the group identifier in the multicast routing identifier, the bit string information, and a neighboring device. The first node may search the third forwarding table based on the group identifier in the multicast routing identifier of the first node, to determine corresponding bit string information and a corresponding neighboring device. As shown in FIG. 23, the first node may remove the multicast information of the second node from the second packet to obtain a removed packet, and encapsulate, in the removed packet, an outer header including the bit string information, to obtain the third packet. In this way, the first node may send the third packet to the BIER multicast group (including the first device) through the egress port corresponding to the neighboring device.

For example, based on the example shown in FIG. 20, an example of a third forwarding table of the node E may be shown in Table 33.

**Table 33**

| Group identifier | Bit string information | Neighboring device |
|---|---|---|
| Identifier 6 | 0100 | R9 |
| | 0011 | R8 |
| | 0011 | R8 |
| Identifier 7 | 0011 | R8 |
| | 0011 | R8 |

The group identifier in the multicast routing identifier of the node E is the identifier 6. The node E searches Table 33 based on the identifier 6, to determine that the corresponding bit string information includes the bit string information 0100 and the bit string information 0011. The node E may remove the multicast information of the node A from the packet, encapsulate an outer header including the bit string information 0100 in the packet (denoted as a multicast packet 6), and send the multicast packet 6 through a port corresponding to the node R9. The node E may remove the multicast information of the node A from the packet, duplicate a packet into two copies, encapsulate outer headers including the bit string information 0011 in the two copies of packets (denoted as a multicast packet 7 and a multicast packet 8), and the multicast packet 7 and the multicast packet 8 are sent through a port corresponding to the node R8.

It may be understood that Table 19 to Table 21 are merely examples, and are not intended as limitations. For example, the item of neighboring device in Table 31 to Table 33 may be configured as a corresponding egress port. To be specific, the node E may not perceive or configure a topology relationship of an ordinary node, and directly send the multicast packet through the egress port. In addition, the network 2 to the network 9 may be a same network or different networks, and may be independent networks or sub-networks in a network. This is not limited. For related descriptions of the networks, refer to the related descriptions in "6. Network". Details are not described herein again.

Manner 42:

In the second packet, the multicast routing information of the second node does not include the multicast routing identifier of the first node. In this case, the first node may search, based on an IP address in the IP header of the second packet, a second forwarding table dynamically maintained by the first node. The second forwarding table records unicast/multicast information corresponding to the IP address, for example, 5-tuple information or 2-tuple information. As shown in FIG. 22, after removing the multicast information of the second node from the second packet, the first node may encapsulate, in an IP header of a removed packet, the unicast/multicast information corresponding to the 5-tuple information or the 2-tuple information, to obtain the third packet, and send the third packet to a first device.

With reference to Manner 31 and Manner 32, it may be learned that when the multicast routing information of the second node includes the multicast routing identifier of the first node, the multicast routing identifier of the first node may indicate that a destination device is the first device, so that the first node may determine, based on only the multicast routing identifier of the first node, that the third packet needs to be sent to the first device. An inner header: the IP header, of the first packet does not need to be decapsulated. Therefore, processing efficiency may be improved.

Optionally, with reference to the foregoing embodiments, in a fourth application scenario, a node may include a plurality of entities. After receiving the multicast packet, an entity in a node may process the multicast packet by using a method shown in FIG. 24. The method is applied to a first entity, and the first entity belongs to the first node. The method specifically includes the following steps.

S2401: The first entity receives a first multicast packet.

The first multicast packet includes first multicast routing information of the first node. The first multicast routing information of the first node includes a first multicast routing identifier of the first node and multicast routing information of a non-leaf child node corresponding to the first multicast routing identifier of the first node. The first multicast routing identifier of the first node is the same as the multicast routing identifier of the first node, or is obtained by updating the multicast routing identifier of the first node. For related descriptions of the multicast routing information of the node, refer to the foregoing descriptions. Details are not described again.

It may be learned from the foregoing function and descriptions of the multicast routing identifier that if the multicast routing identifier is a bit sequence or includes a Cnt field and an Idx field, the multicast routing identifier of the node includes a bit or an Idx field corresponding to each child node (including a non-leaf child node and a leaf child node). Because the first multicast routing identifier is derived from the multicast routing identifier, the non-leaf child node corresponding to the first multicast routing identifier of the first node refers to a non-leaf child node in child nodes corresponding to bits or Idx fields in the first multicast routing identifier.

The first entity is an entity in the first node. The first entity may receive the first multicast packet from another node other than the first node, or may receive the first multicast packet from another entity in the first node. This is not limited in this application. If the first entity receives the first multicast packet from the another node other than the first node, the first multicast routing information of the first node is the same as the multicast routing information of the first node. If the first entity receives the first multicast packet from the another entity in the first node, the first multicast routing identifier of the first node may be the same as the multicast routing identifier of the first node, or may be obtained by updating the multicast routing identifier of the first node. Specifically, details of the first multicast routing information may be obtained through calculation based on a method for processing a multicast packet between the first entity and the second entity. For a specific example, refer to the following descriptions. Details are not described again.

S2402: The first entity determines a second entity based on the first multicast routing identifier of the first node.

The second entity is an entity in the first node. During specific implementation, S2402 may include: The first entity searches a multicast forwarding table based on the first multicast routing identifier of the first node to obtain the second entity. It should be noted that the first entity may obtain a plurality of second entities based on the first multicast routing identifier of the first node. The second entity herein may be any second entity. In this application, an example in which the first entity forwards the multicast packet to a second entity is used for description. When actually processing the multicast packet, the first node may forward the multicast packet to each second entity.

For example, if the first multicast routing identifier is a bit sequence, a next hop corresponding to a bit whose value is 1 in the first multicast routing identifier in the multicast forwarding table is the second entity; or if the first multicast routing identifier includes a Cnt field and an Idx field, a next hop corresponding to a value of the Idx field in the multicast forwarding table is the second entity.

S2403: The first entity sends a second multicast packet to the second entity.

The second multicast packet includes second multicast routing information of the first node. The second multicast routing information of the first node includes a second multicast routing identifier of the first node and multicast routing information of some or all non-leaf child nodes corresponding to a third multicast routing identifier of the first node. The third multicast routing identifier of the first node is the same as the first multicast routing identifier of the first node, or is obtained by updating the first multicast routing identifier of the first node. The second multicast routing identifier of the first node is the same as the third multicast routing identifier of the first node, or is obtained by updating the third multicast routing identifier of the first node.

Specifically, in the following cases 1 and 2, the first entity needs to update the first multicast routing identifier of the first node to obtain the third multicast routing identifier of the first node; and in another case, the third multicast routing identifier of the first node is the same as the first multicast routing identifier of the first node. The following describes the case 1, the case 2, and an update method by using examples.

Case 1: The first entity belongs to a child node (which is assumed to be a child node 1) of the first node. If the first multicast routing identifier is a bit sequence, the first entity sets a bit corresponding to the child node 1 to 0, to obtain the third multicast routing identifier. If the first multicast routing identifier includes a Cnt field and Idx fields, the first entity deletes an Idx field corresponding to the child node 1, and subtracts 1 from a value of the Cnt field to obtain the third multicast routing identifier.

Case 2: The first entity does not belong to any child node of the first node, but the multicast packet can arrive at one or more child nodes of the first node (which are assumed to be Q child nodes) only after multicast forwarding of the packet by the first entity. If the first multicast routing identifier is a bit sequence, the first entity sets bits corresponding to the Q child nodes to 0 to obtain the third multicast routing identifier. If the first multicast routing identifier includes a Cnt field and Idx fields, the first entity deletes Idx fields corresponding to the Q child nodes, and subtracts Q from a value of the Cnt field to obtain the third multicast routing identifier.

Specifically, in the following case 3, the first entity needs to update the third multicast routing identifier of the first node to obtain the second multicast routing identifier of the first node; and in another case, the second multicast routing identifier of the first node is the same as the third multicast routing identifier of the first node. The following describes the case 3 and an update method by using examples.

Case 3: The first entity needs to forward the multicast packet to a plurality of second entities. For any second entity, if the third multicast routing identifier is a bit sequence, the first entity needs to set a bit corresponding to another child node other than P child nodes in the third multicast routing identifier of the first node to 0, to obtain the second multicast routing identifier. If the third multicast routing identifier includes a Cnt field and Idx fields, the first entity deletes an Idx field corresponding to the another child node other than the P child nodes, and subtracts P from a value of the Cnt field to obtain the second multicast routing identifier. The P child nodes are one or more child nodes of the first node, and these child nodes can receive the multicast packet only after multicast forwarding of the packet by the second entity.

In conclusion, compared with the PIM-SM, the method provided in the foregoing embodiments of this application has the following advantages:

1. A quantity of entries in a multicast forwarding table of a node does not increase as a quantity of multicast flows increases. Therefore, even if there is a large quantity of multicast flows, there is no need to expand more tablespace in a router to support forwarding of a multicast packet. Therefore, scalability is good.

2. The multicast packet is generated from a source node, and the multicast packet includes multicast routing information of a non-leaf child node. Therefore, a forwarding path may be actively controlled by adjusting the multicast packet. For example, if there are a plurality of paths, a controller or the source node may select an optimal path by using a control plane algorithm.

3. The multicast packet is generated from the source node. Therefore, when a node joins or leaves a multicast tree, the source node learns of the joining or the leaving. Manageability is high. For example, the source node may collect user preferences by using an application layer, and adjust data in the multicast packet based on the preferences.

4. The node does not need to send join signaling. Therefore, the node does not need to process a large amount of periodic signaling, to avoid increasing computing load, power consumption, and processing resources of the node.

Compared with the BIER, the method provided in the foregoing embodiments of this application has the following advantages:

1. A multicast packet includes multicast routing information of a non-leaf child node, and the non-leaf child node may forward the multicast packet based on the multicast routing information of the non-leaf child node. Therefore, there is no excessively large quantity of packets, and multicast efficiency is high.

2. The multicast packet is generated from a source node, and the multicast packet includes the multicast routing information of the non-leaf child node. Therefore, a forwarding path may be actively controlled by adjusting the multicast packet. For example, if there are a plurality of paths, a controller or the source node may select an optimal path by using a control plane algorithm.

In addition, the method provided in the foregoing embodiments of this application further has the following advantages:

1. A tree recursive structure in a packet sent by a node to each child node is the same, for example, a tree recursive structure of the multicast routing information of the second node, so that the node may send only one packet at each corresponding egress port, to avoid a redundant packet and improve communication efficiency.
2. Multicast routing information of each non-leaf child node does not need to be determined by an upstream node, for example, the second node, but may be determined by the non-leaf child node, to save processing resources of the upstream node and improve operation efficiency.

To make embodiments of this application clearer, the following uses an example in which the multicast routing identifier of the node is implemented in Manner 12 as an example to describe the method provided in the foregoing embodiments with reference to a scenario shown in FIG. 20.

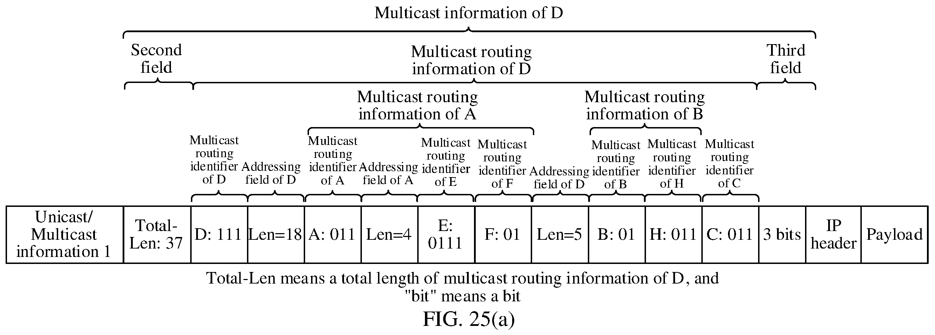

In the multicast tree shown in FIG. 20, a node set corresponding to the node D includes three nodes: the node A, the node B, and the node C. A bit width of a bit sequence of the node D is 3, the $1^{st}$ bit corresponds to the node A, the $2^{nd}$ bit corresponds to the node B, and the $3^{rd}$ bit corresponds to the node C. The node A is a non-leaf child node of the node D. A node set corresponding to the node A includes three nodes: the node D, the node E, and the node F. A bit width of a bit sequence of the node A is 3, the $1^{st}$ bit corresponds to the node D, the $2^{nd}$ bit corresponds to the node E, and the $3^{rd}$ bit corresponds to the node F. The node E is a leaf child node of the node A. A node set corresponding to the node E includes four nodes: the node A, the device 3, the device 4, and the device 5. A bit width of a bit sequence of the node A is 4, the $1^{st}$ bit corresponds to the node A, the $2^{nd}$ bit corresponds to the device 3, the $3^{rd}$ bit corresponds to the device 4, and the $4^{th}$ bit corresponds to the device 5. The node F is a leaf child node of the node A. A node set corresponding to the node F includes two nodes: the node A and the device 6. A bit width of a bit sequence of the node A is 2, the $1^{st}$ bit corresponds to the node A, and the $2^{nd}$ bit corresponds to the device 6. The node B is a non-leaf child node of the node D. A node set corresponding to the node B includes two nodes: the node D and the node H. A bit width of a bit sequence of the node B is 2, the $1^{st}$ bit corresponds to the node D, and the $2^{nd}$ bit corresponds to the node H. The node H is a leaf child node of the node B. A node set corresponding to the node H includes three nodes: the node B, the device 7, and the device 8. A bit width of a bit sequence of the node H is 3, the $1^{st}$ bit corresponds to the node B, the $2^{nd}$ bit corresponds to the device 7, and the $3^{rd}$ bit corresponds to the device 8. The node C is a leaf child node of the node D. A node set corresponding to the node C includes three nodes: the node D, the device 1, and the device 2. A bit width of a bit sequence of the node C is 3, the $1^{st}$ bit corresponds to the node D, the $2^{nd}$ bit corresponds to the device 1, and the $3^{rd}$ third bit corresponds to the device 2. In FIG. 25(a) to FIG. 25(f), excluding the first field, the second field, and the addressing field, a letter before ":" indicates a node corresponding to the field, and a value after ":" indicates a bit sequence corresponding to the field. In the addressing field, "Len" before ":" indicates a length of multicast routing information of the node, and a value after ":" indicates a value of the field. A bit width of the addressing field is 1 byte.

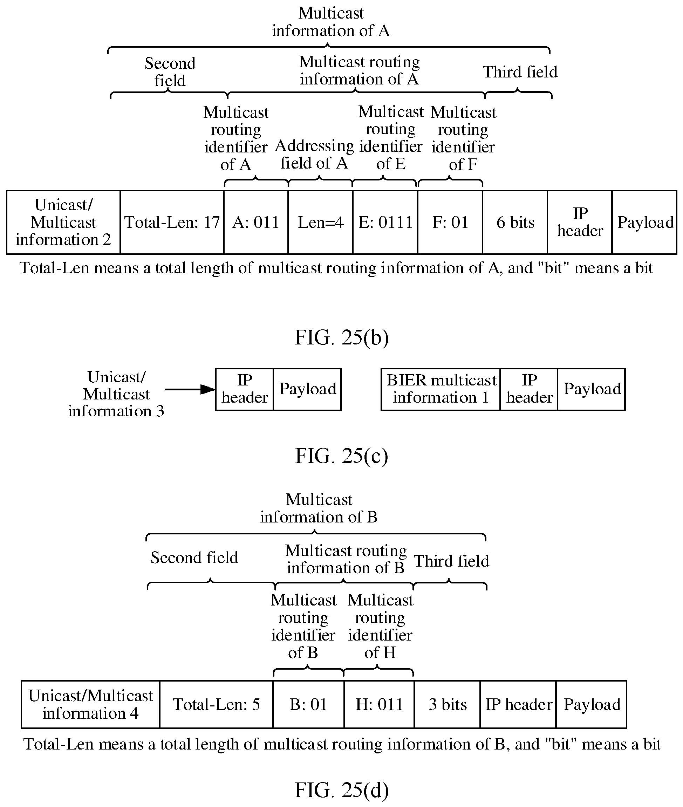

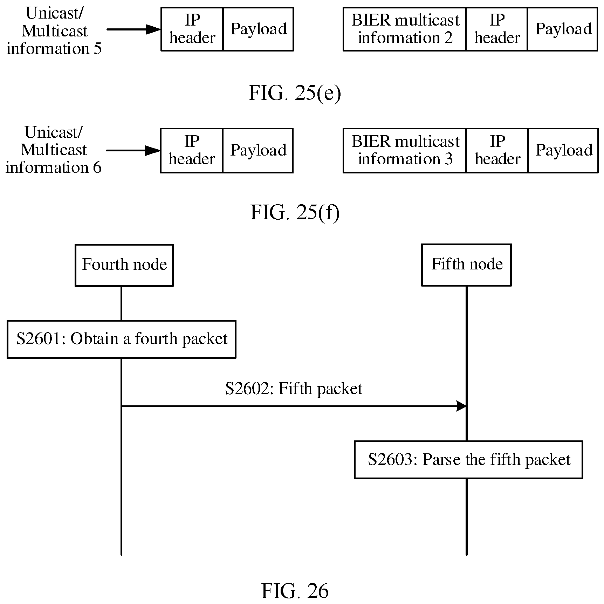

The node D may generate a packet 1 shown in FIG. 25(a). Unicast/multicast information 1 supported by the network 2 is encapsulated in an outer header of the packet 1. The node D may separately send the packet 1 to the node A, the node B, and the node C across the network 2. After the node A receives the packet 1, the node A may determine the multicast routing information of the node A in the multicast routing information of the node D based on the addressing field, and encapsulate the multicast routing information of the node A to generate a packet 2 shown in FIG. 25(b). Unicast/-multicast information 2 supported by the network 3 and the network 4 is encapsulated in an outer header of the packet 2. The node A may send the packet 2 to the node E across the network 3, and send the packet 2 to the node E across the network 4. After receiving the packet 2, the node E may remove the multicast information of A from the packet 2. In this case, if the network 6 supports IP unicast/multicast or an MPLS label, the node E may encapsulate unicast/multicast information 3 in an IP header to generate a packet 3 shown on the left in FIG. 25(c). The unicast/multicast information 3 includes IP unicast/multicast information or MPLS label information. If the network 6 supports BIER multicast, the node E may encapsulate, in an outer layer of the IP header, a header including BIER multicast information 1, to generate a packet 3 shown on the right in FIG. 25(c). The node E may separately send the packet 3 to the device 3, the device 4, and the device 5 across the network 6. After the node B receives the packet 1, the node B may determine the multicast routing information of the node B in the multicast routing information of the node D based on the addressing field, and encapsulate the multicast routing information of the node B to generate a packet 4 shown in FIG. 25(d). Unicast/multicast information 4 supported by the network 5 is encapsulated in an outer header of the packet 4. The node B may send the packet 4 to the node H across the network 5. After receiving the packet 4, the node H may remove the multicast information of B from the packet 4. In this case, if the network 8 supports IP unicast/multicast or an MPLS label, the node H may encapsulate unicast/multicast information 5 in an IP header to generate a packet 5 shown on the left in FIG. 25(e). The unicast/multicast information 5 includes IP unicast/multicast information or MPLS label information. If the network 8 supports BIER multicast, the node E may encapsulate, in an outer layer of the IP header, a header including BIER multicast information 2, to generate a packet 5 shown on the right in FIG. 25(e). In this way, the node H may separately send the packet 5 to the device 7 and the device 8 across the network 8. After receiving the packet 1, the node C may remove the multicast information of D from the packet 1. In this case, if the network 9 supports IP unicast/multicast or an MPLS label, the node C may encapsulate unicast/multicast information 6 in an IP header to generate a packet 6 shown on the left in FIG. 25(f). The unicast/multicast information 6 includes IP unicast/multicast information or MPLS label information. If the network 9 supports BIER multicast, the node C may encapsulate, in an outer layer of the IP header, a header including BIER multicast information 3, to generate a packet 6 shown on the right in FIG. 25(f). In this way, the node C may separately send the packet 6 to the device 1 and the device 2 across the network 9.

In the foregoing embodiments, the method provided in this application is described by using examples in which the multicast packet does not include the type field. If a current node supports a plurality of types of multicast routing identifiers, and a multicast packet may include a type field, the node may parse the type field to obtain a type of a multicast routing identifier, and identify the multicast routing identifier based on the type of the multicast routing identifier.

In the foregoing embodiments, a bit width of any field in the multicast packet is an example. During actual implementation, the bit width of any field may be or may not be byte-aligned (where for example, the fields are all 1 byte, 2 byte, or more bytes). This is not limited in this application.

In the foregoing embodiments, after receiving a multicast packet, a node (or an entity in the node) may determine, based on an indication of a field in outer encapsulation, whether a packet header of the multicast packet includes multicast encapsulation. If a destination address in the outer encapsulation is an address of the node (or the entity), and it is determined that the packet header of the multicast packet includes the multicast encapsulation, the node (or the entity) may remove the outer encapsulation to obtain the multicast encapsulation, and perform corresponding processing on the multicast packet based on the multicast encapsulation.

In the foregoing embodiments, before sending a multicast packet to a plurality of nodes (or entities), a node (or an entity) may duplicate a received multicast packet, and duplicate the packet into N-1 copies if the multicast packets are sent to N nodes (or entities). The duplicated multicast packets and the received packet are edited to obtain multicast packets needing to be sent. If the multicast packet is sent to only one node (or entity), the multicast packet may not be duplicated, and the received multicast packet may be directly edited. When replicating the multicast packet, the node (or the entity) may duplicate all the multicast packets at a time, and edit and send the multicast packets in parallel. Alternatively, one multicast packet is duplicated at a time, and the multicast packet is edited and sent.

It should be noted that, in descriptions of embodiments of this application, that a node (or an entity) sends a multicast packet to another node (or another entity) means that a source address of the multicast packet is an address of the node (or the entity), and a destination address is an address of the another node (or the another entity). A meaning indicated when a value of any bit (which may be a single bit or a bit in a bit sequence) in the foregoing embodiments of this application is 1 may alternatively be indicated by 0, and a meaning indicated by 0 may alternatively be indicated by 1. This is not limited. For example, in the foregoing embodiments, when the value of the bit in the bit sequence is 1, it indicates that the bit is a child node of a node D1, and when the value is 0, it indicates that the bit is not a child node of the node D1. During actual implementation, the value of the bit in the bit sequence may be 0, it indicates that the bit is a child node of node D1; and if the value is 1, the bit is not a child node of node D1. Other bits are similar, and are not described one by one.

Refer to FIG. 26. A communication method provided in this application is applicable to communication between at least two nodes, for example, communication between a fourth node and a fifth node. The method includes the following steps.

S2601: The fourth node obtains a fourth packet.

The fourth node is a node in a fourth network, and may be an edge node or a non-edge node. This is not limited. The fourth packet includes a fifth header, and the fifth header includes bit string information of a fifth network. That is, the fourth packet is a BIER multicast packet. The fourth network and the fifth network are different networks, and both the fourth network and the fifth network may be considered as virtual nodes. In this case, the fourth node and a node in the fifth network may be considered as entities in the virtual nodes. In addition, for specific implementations of the fourth network and the fifth network, refer to the related descriptions in "6. Network". Details are not described herein again. The fourth node may receive a packet from an upstream node, to generate the fourth packet based on the packet. Alternatively, the fourth node may receive the fourth packet from an upstream node. Alternatively, the fourth node may generate the fourth packet based on a service. This is not limited. Optionally, the fourth node stores a BIFT of the fifth network. If needing to generate the fourth packet, the fourth node may search the BIFT of the fifth network to determine the bit string information of the fifth network, and encapsulate a fifth packet including the bit string information of the fifth network in the packet, to generate the fifth packet.

S2602: The fourth node sends the fifth packet to the fifth node based on the fourth packet. Correspondingly, the fifth node receives the fifth packet from the fourth node.

The fifth node is a node in the fourth network, and may be an edge node in the fourth network. The fifth node may be considered as an entity in the virtual node. The fifth packet includes the fifth header and a sixth header, the sixth header is located at an outer layer of the fifth header, and the sixth header includes bit string information of the fifth node. It may be learned that, when the fifth node is an edge node in the fourth network, if the fifth packet needs to be sent to the fifth network, the bit string information of the fifth node needs to be encapsulated in the fifth packet, so that the fifth packet can be sent to the fifth node and sent to the fourth network via the fifth node, to implement cross-domain forwarding. The fourth node stores a second mapping relationship table, and the second mapping relationship table may record a correspondence between the fifth node and the fifth network. The fourth node searches the second mapping relationship table, to determine that the fifth packet needs to be sent to the fifth node. On this basis, the fourth node stores a BIFT of the fourth network. The fourth node may search the BIFT of the fourth network to determine the bit string information of the fifth node, so that the fourth node encapsulates, in the fourth packet, the sixth header including the bit string information of the fifth node, to obtain the fifth packet, and send the fifth packet to the fifth node.

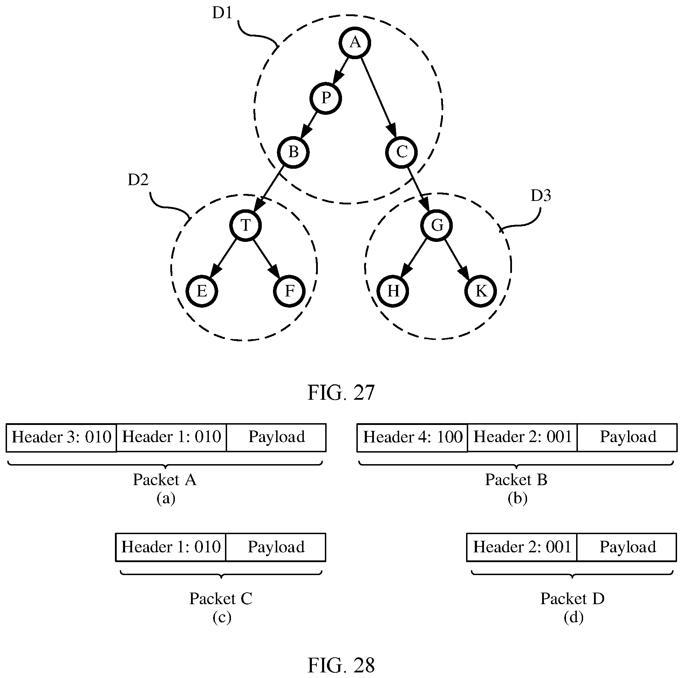

For example, it is assumed that a network structure of BIER multicast is shown in FIG. 27. A node A, a node P, a node B, and a node C are nodes in a same network, for example, a network 1. The node A, the node B, and the node C form a BIER set 1. Bit string information of the node A may be 001, bit string information of the node B may be 010, and bit string information of the node C may be 100. In addition, a node T, a node E, and a node F are nodes in a same network, for example, a network 2. A node G, a node H, and a node K are nodes in a same network, for example, a network 3. The network 1 serves as a virtual node D1, the network 2 serves as a virtual node D2, and the network 3 serves as a virtual node D3. The virtual node D1, the virtual node D2, and the virtual node D3 may form a BIER set 2. In this way, bit string information of the virtual node D1 may be 100, bit string information of the virtual node D2 may be 010, and bit string information of the virtual node D3 may be 001. The node A, the node B, the node P, and the node C may serve as entities in the virtual node D1, the node T, the node E, and the node F may serve as entities in the virtual node D2, and the node G, the node H, and the node K may serve as entities in the virtual node D3.

When the virtual node D1 needs to send a packet to the virtual node D2 and the virtual node D3, an entity in the virtual node D1, for example, the node A, generates the packet. The node A stores a BIFT 1 of the BIER set 1, a mapping relationship table 1, and a BIFT 2 of the BIER set 2. An example of the BIFT 1 may be shown in Table 34, an example of the mapping relationship table 1 may be shown in Table 35, and an example of the BIFT 2 may be shown in Table 36.

**Table 34**

| Identifier | Forwarding bit mask | Neighboring device |
|---|---|---|
| 010 | 010 | D2 |
| 001 | 001 | D3 |

**Table 35**

| Node | Node | Neighboring device |
|---|---|---|
| D2 | B | 010 |
| D3 | C | 100 |

**Table 36**

| Identifier | Forwarding bit mask | Neighboring device |
|---|---|---|
| 010 | 010 | P |
| 100 | 100 | C |

The forwarding bit mask (forwarding bit mask, F-BM) in Table 34 indicates a subset in the BIER set 1. There are two subsets. A node in one subset is D2, and a node in the other subset is D3. The F-BM in Table 36 indicates a subset in the BIER set 2. There are two subsets. A node in one subset is B, and a node in the other subset is C. The node A searches Table 34 to determine that the forwarding bit mask corresponding to the virtual node D2 is 010, that is, the bit string information is 010, and the forwarding bit mask corresponding to the virtual node D3 is 001, that is, the bit string information is 001. As shown in (a) in FIG. 28, the node may encapsulate, in a packet A, a header (denoted as a header 1) including the bit string information 010, and encapsulate, in a packet B, a header (denoted as a header 2) including the bit string information 001. The node A searches Table 35 to determine that Table 36 further needs to be searched. The node A searches Table 36 to determine that the forwarding bit mask corresponding to the node P is 010, that is, the bit string information is 010, and the forwarding bit mask corresponding to the node C is 100, that is, the bit string information is 100. As shown in (b) in FIG. 28, the node may encapsulate, in the packet A, a header (denoted as a header 3) including the bit string information 010, and encapsulate, in the packet B, a header (denoted as a header 4) including the bit string information 001. In the packet A, the header 3 is located in the outer layer of the header 1. Similarly, in the packet B, the header 4 is located in the outer layer of the header 2, to facilitate forwarding of the packet A and the packet B. The node A may send the packet A to the node P, and send the packet B to the node C, so that the node B can receive the packet A and the node C can receive the packet C.

It should be noted that, if the node A receives a packet (denoted as a packet X) from another node, and the packet X needs to be sent to the virtual node D2 and the virtual node D3, bit string information in the packet X may include the forwarding bit mask 001 and the forwarding bit mask 010, that is, 011. The node A searches Table 34 based on the bit string information 011, to determine that the forwarding bit mask corresponding to the virtual node D2 is 010, and the forwarding bit mask corresponding to the virtual node D3 is 001. The node A may remove the bit string information 011 from the packet X, and duplicate a removed packet into two copies. In this way, by searching Table 35 and Table 36, the node A may encapsulate the header 1 and the header 3 in one packet to obtain the packet A, and encapsulate the header 2 and the header 4 in the other packet to obtain the packet B. That is, the node A may generate the packet A and the packet B based on the packet X from the upstream node.

S2603: The fifth node parses the fifth packet.

The fifth node stores the BIFT of the fifth network. The fifth node parses the fifth packet to obtain the bit string information of the fifth node and the bit string information of the fifth network. The fifth node may search the BIFT of the fifth network, to determine that the BIFT of the fifth network records the bit string information of the fifth network, but the BIFT of the fifth network does not record the bit string information of the fifth node. In this way, the fifth node may remove the sixth header from the fifth packet, to obtain the fourth packet, and send the fourth packet to the fifth network, to implement cross-network forwarding of the packet, so that forwarding is no longer restricted.

For example, it is assumed that the network structure of the BIER multicast is shown in FIG. 27, and the node B stores Table 34. After the node B receives the packet A from the node P, the node B may remove the header 3 from the packet A by searching Table 34, to obtain a packet C (as shown in (c) in FIG. 28). In this way, the node B may send the packet C to the virtual node D2, to implement cross-network forwarding of the packet C. The node C stores Table 34. After the node C receives the packet B, the node C may remove the header 4 from the packet B by searching Table 34, to obtain a packet D (as shown in (d) in FIG. 28). In this way, the node C may send the packet D to the virtual node D3, to implement cross-network forwarding of the packet D.

In conclusion, it may be learned from the method provided in the foregoing embodiments that, because the bit string information of the fifth node is encapsulated in the fifth packet, before being sent to the fifth network, the fifth packet may be first forwarded across a network, for example, forwarded to the fifth node across the fourth network, so that forwarding is no longer restricted.

In this application, a part before ":" shown in the foregoing accompanying drawings is a mnemonic symbol. Actually, no mnemonic system or ":" exists in a packet. In the accompanying drawings of this application, locations of fields are merely examples. During actual implementation, locations of some fields may be different from those in the figures. This is not limited in this application.

The foregoing mainly describes the solutions of embodiments of this application from a perspective of a method. It may be understood that, to implement the foregoing functions, network elements, for example, nodes or entities, each include at least one of a corresponding hardware structure or software module for performing the functions. A person skilled in the art should be easily aware that the units and algorithm steps in the examples described with reference to embodiments disclosed in this specification can be implemented in a form of hardware or a combination of the hardware and computer software in this application. Whether a function is performed by hardware or hardware driven by computer software depends on particular applications and design constraints of the technical solutions. A person skilled in the art may use different methods to implement the described functions of each particular application.

In embodiments of this application, the node or the entity may be divided into functional units based on the foregoing method examples. For example, the functional units may be obtained through division based on corresponding functions, or two or more functions may be integrated into one processing unit. The integrated unit may be implemented in a form of hardware, or may be implemented in a form of a software functional unit. It should be noted that, in embodiments of this application, unit division is an example, and is merely logical function division. During actual implementation, another division manner may be used.

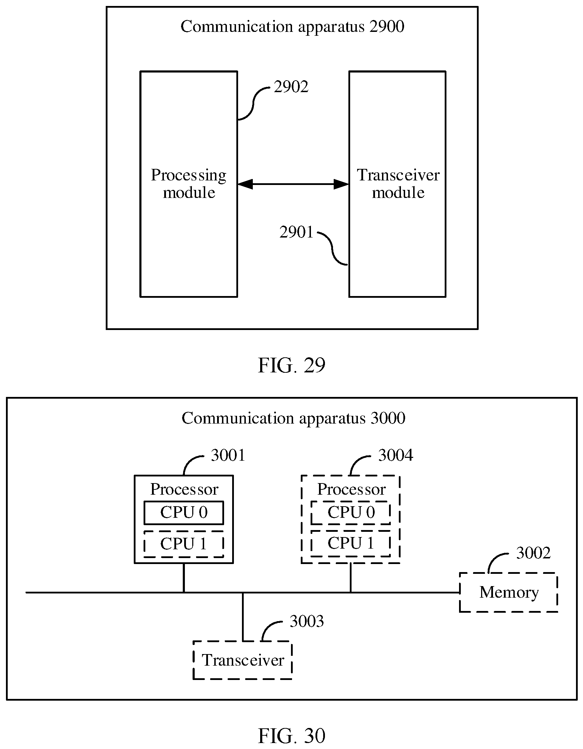

The communication method provided in embodiments of this application is described in detail above with reference to FIG. 8 to FIG. 28. A communication apparatus configured to perform the communication method provided in embodiments of this application is described in detail below with reference to FIG. 29 and FIG. 30.

For example, FIG. 29 is a schematic diagram 1 of a structure of a communication apparatus according to an embodiment of this application. As shown in FIG. 29, the communication apparatus 2900 includes a transceiver module 2901 and a processing module 2902. For ease of description, FIG. 29 shows only main components of the communication apparatus.

In some embodiments, the communication apparatus 2900 may be the first node in the method shown in FIG. 8.

The transceiver module 2901 is configured to receive a first packet from a second node. The processing module 2902 is configured to parse the first packet. The first packet includes multicast routing information of the second node, the first node is a child node of the second node in a multicast tree, a multicast routing identifier of a node is used by a non-leaf child node of the node in the multicast tree to determine multicast routing information of the non-leaf child node, and multicast routing information of a node includes a multicast routing identifier of the node and multicast routing information of a non-leaf child node of the node in the multicast tree.

In a possible design solution, the first node is a non-leaf child node of the second node. The processing module 2902 is further configured to generate a second packet based on the first packet. The transceiver module 2901 is further configured to send the second packet to a third node. The second packet includes multicast routing information of the first node or multicast routing information of the third node, and the multicast routing information of the first node includes any one of the following: a multicast routing identifier of the first node and the multicast routing information of the third node, the multicast routing identifier of the first node, or the multicast routing identifier of the first node and a multicast routing identifier of the third node.

Optionally, the processing module 2902 is further configured to: determine the multicast routing information of the first node based on a multicast routing identifier of the second node, and perform packet encapsulation based on the multicast routing information of the second node, to obtain the second packet. Alternatively, the processing module 2902 is further configured to: determine, the multicast routing information of the first node based on a multicast routing identifier of the second node; determine the multicast routing information of the third node based on the multicast routing identifier of the first node in the multicast routing information of the first node; and perform packet encapsulation based on the multicast routing information of the third node, to obtain the second packet.

Further, the processing module 2902 is further configured to: determine a location of the first node in a first node set based on the multicast routing identifier of the second node, and determine the multicast routing information of the first node based on the location of the first node in the first node set. The first node set is a node set corresponding to the second node, and the first node set includes some or all potential child nodes of the second node.

Further, the multicast routing identifier of the second node includes N first fields, where N is a quantity of nodes in the first node set. The processing module 2902 is further configured to determine a location of a first field corresponding to the first node in the N first fields. The location of the first field corresponding to the first node indicates the location of the first node in the first node set.

Further, the multicast routing information of the second node further includes an addressing field of the second node. The processing module 2902 is further configured to determine the multicast routing information of the first node based on the multicast routing identifier of the second node and the addressing field of the second node.

Further, the addressing field of the second node indicates lengths of multicast routing information of child nodes of the second node. Alternatively, the addressing field of the second node indicates start locations or end locations of multicast routing information of child nodes of the second node. Alternatively, the addressing field of the second node includes a plurality of delimitation fields, and multicast routing information of child nodes of the second node is separated by the plurality of delimitation fields.

Optionally, the first node and the third node are nodes in a first network. The second packet further includes a first header and a second header, the first header includes the multicast routing information of the third node or the multicast routing information of the first node, and the second header includes unicast/multicast information of a second network.

Further, the first node has a correspondence between the multicast routing identifier of the first node or the multicast routing identifier of the third node and the unicast/multicast information of the second network.

Further, the first node is a node in the second network.

In another possible design solution, the first node is a leaf child node of the second node. The processing module 2902 is further configured to generate a third packet based on the first packet. The transceiver module 2901 is further configured to send the third packet to a first device. The third packet includes unicast/multicast information of the first device.

Optionally, the first packet includes a multicast routing identifier of the first node, and the multicast routing identifier of the first node indicates that a destination device is the first device.

In a possible design solution, the first node and the second node are nodes in a first network, the first packet further includes a third header and a fourth header, the third header includes the multicast routing information of the second node, and the fourth header includes unicast/multicast information of a third network.

Optionally, the second node is a node in the third network.

In a possible design solution, the unicast/multicast information includes any one of the following: internet protocol IP unicast/multicast information, multi-protocol label switching MPLS label information, or bit string information.

Optionally, the transceiver module 2901 may alternatively include a sending module and a receiving module. The sending module is configured to implement a sending function of the communication apparatus 2900, and the receiving module is configured to implement a receiving function of the communication apparatus 2900.

Optionally, the communication apparatus 2900 may further include a storage module (not shown in FIG. 29). The storage module stores a program or instructions. When the processing module 2902 executes the program or the instructions, the communication apparatus 2900 is enabled to perform a function of the first node in the method shown in FIG. 8.

It should be understood that the processing module 2902 in the communication apparatus 2900 may be implemented by a processor or a circuit component related to the processor, and may be a processor or a processing unit. The transceiver module 2901 may be implemented by a transceiver or a circuit component related to the transceiver, or may be a transceiver or a transceiver unit.

It should be noted that, the communication apparatus 2900 may be specifically a terminal or a network device, may be a chip (system) or another part or component that may be disposed in the terminal or the network device, or may be an apparatus including the terminal or the network device. This is not limited in this application.

In addition, for a technical effect of the communication apparatus 2900, refer to a technical effect corresponding to the first node in the method shown in FIG. 8. Details are not described herein again.

In some other embodiments, the communication apparatus 2900 may be the second node in the method shown in FIG. 8.

The processing module 2902 is configured to obtain a first packet. The transceiver module 2901 is configured to send the first packet to a first node. The first node is a child node of the second node in a multicast tree. The first packet includes multicast routing information of the second node, a multicast routing identifier of a node is used by a non-leaf child node of the node in the multicast tree to determine multicast routing information of the non-leaf child node, and multicast routing information of a node includes a multicast routing identifier of the node and multicast routing information of a non-leaf child node of the node in the multicast tree.

In a possible design solution, the first node and the second node are nodes in a first network, the first packet further includes a third header and a fourth header, the third header includes the multicast routing information of the second node, and the fourth header includes unicast/multicast information of a third network.

Optionally, the second node is a node in the third network.

Optionally, the unicast/multicast information includes any one of the following: internet protocol IP unicast/multicast information, multi-protocol label switching MPLS label information, or bit string information.

Optionally, the transceiver module 2901 may alternatively include a sending module and a receiving module. The sending module is configured to implement a sending function of the communication apparatus 2900, and the receiving module is configured to implement a receiving function of the communication apparatus 2900.

Optionally, the communication apparatus 2900 may further include a storage module (not shown in FIG. 29). The storage module stores a program or instructions. When the processing module 2902 executes the program or the instructions, the communication apparatus 2900 is enabled to perform a function of the second node in the method shown in FIG. 8.

It should be understood that the processing module 2902 in the communication apparatus 2900 may be implemented by a processor or a circuit component related to the processor, and may be a processor or a processing unit. The transceiver module 2901 may be implemented by a transceiver or a circuit component related to the transceiver, or may be a transceiver or a transceiver unit.

It should be noted that, the communication apparatus 2900 may be specifically a terminal or a network device, may be a chip (system) or another part or component that may be disposed in the terminal or the network device, or may be an apparatus including the terminal or the network device. This is not limited in this application.

In addition, for a technical effect of the communication apparatus 2900, refer to a technical effect corresponding to the second node in the method shown in FIG. 8. Details are not described herein again.

In still some embodiments, the communication apparatus 2900 may be the fourth node in the method shown in FIG. 26.

The transceiver module 2901 is configured to obtain a fourth packet. The processing module 2902 is configured to control, based on the fourth packet, the transceiver module 2901 to send a fifth packet to a fifth node. The fourth node is a node in a fourth network, the fourth packet includes a fifth header, and the fifth header includes bit string information of a fifth network. The fifth node is a node in the fourth network, the fifth packet includes the fifth header and a sixth header, and the sixth header includes bit string information of the fifth node.

In a possible design solution, the fourth node is configured with a first entry and a second entry. The first entry includes the bit string information of the fifth network. The second entry includes the bit string information of the fifth node.

In a possible design solution, the processing module 2902 is further configured to encapsulate the sixth header in the fourth packet, to obtain the fifth packet, so as to control the transceiver module 2901 to send the fifth packet to the fifth node.

Optionally, the transceiver module 2901 may alternatively include a sending module and a receiving module. The sending module is configured to implement a sending function of the communication apparatus 2900, and the receiving module is configured to implement a receiving function of the communication apparatus 2900.

Optionally, the communication apparatus 2900 may further include a storage module (not shown in FIG. 29). The storage module stores a program or instructions. When the processing module 2902 executes the program or the instructions, the communication apparatus 2900 is enabled to perform a function of the fourth node in the method shown in FIG. 26.

It should be understood that the processing module 2902 in the communication apparatus 2900 may be implemented by a processor or a circuit component related to the processor, and may be a processor or a processing unit. The transceiver module 2901 may be implemented by a transceiver or a circuit component related to the transceiver, or may be a transceiver or a transceiver unit.

It should be noted that, the communication apparatus 2900 may be specifically a terminal or a network device, may be a chip (system) or another part or component that may be disposed in the terminal or the network device, or may be an apparatus including the terminal or the network device. This is not limited in this application.

In addition, for a technical effect of the communication apparatus 2900, refer to a technical effect corresponding to the fourth node in the method shown in FIG. 26. Details are not described herein again.

In yet some embodiments, the communication apparatus 2900 may be the fifth node in the method shown in FIG. 26.

The transceiver module 2901 is configured to receive a fifth packet from a fourth node. The processing module 2902 is configured to parse the fifth packet. The fourth node and the fifth node are nodes in a fourth network, a fourth packet includes a fifth header and a sixth header, the fifth header includes bit string information of a fifth network, and the sixth header includes bit string information of the fifth node.

In a possible design solution, the processing module 2902 is further configured to: after parsing the fifth packet, remove the sixth header from the fifth packet, to obtain the fourth packet, so as to control the transceiver module 2901 to send the fourth packet to the fifth network.

Optionally, the transceiver module 2901 may alternatively include a sending module and a receiving module. The sending module is configured to implement a sending function of the communication apparatus 2900, and the receiving module is configured to implement a receiving function of the communication apparatus 2900.

Optionally, the communication apparatus 2900 may further include a storage module (not shown in FIG. 29). The storage module stores a program or instructions. When the processing module 2902 executes the program or the instructions, the communication apparatus 2900 is enabled to perform a function of the fifth node in the method shown in FIG. 26.

It should be understood that the processing module 2902 in the communication apparatus 2900 may be implemented by a processor or a circuit component related to the processor, and may be a processor or a processing unit. The transceiver module 2901 may be implemented by a transceiver or a circuit component related to the transceiver, or may be a transceiver or a transceiver unit.

It should be noted that, the communication apparatus 2900 may be specifically a terminal or a network device, may be a chip (system) or another part or component that may be disposed in the terminal or the network device, or may be an apparatus including the terminal or the network device. This is not limited in this application.

In addition, for a technical effect of the communication apparatus 2900, refer to a technical effect corresponding to the fifth node in the method shown in FIG. 26. Details are not described herein again.

For example, FIG. 30 is a schematic diagram 2 of a structure of a communication apparatus according to an embodiment of this application. The communication apparatus may be a terminal or a network device, or may be a chip (system) or another part or component that may be disposed in the terminal or the network device. As shown in FIG. 30, the communication apparatus 3000 may include a processor 3001. Optionally, the communication apparatus 3000 may further include a memory 3002 and/or a transceiver 3003. The processor 3001 is coupled to the memory 3002 and the transceiver 3003, for example, may be connected to the memory 3002 and the transceiver 3003 through a communication bus.

The following describes the parts of the communication apparatus 3000 in detail with reference to FIG. 30.

The processor 3001 is a control center of the communication apparatus 3000, and may be a processor or may be a general term of a plurality of processing elements. For example, the processor 3001 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate arrays, FPGAs). In addition, the processor 3001 may alternatively be a logic circuit.

Optionally, the processor 3001 may perform the method shown in FIG. 8 or FIG. 26 by running or executing a software program stored in the memory 3002 and invoking data stored in the memory 3002.

During specific implementation, in an embodiment, the processor 3001 may include one or more CPUs, for example, a CPU 0 and a CPU 1 in FIG. 30.

During specific implementation, in an embodiment, the communication apparatus 3000 may alternatively include a plurality of processors, for example, the processor 3001 and a processor 3004 that are shown in FIG. 30. Each of the processors may be a single-core processor (single-CPU) or may be a multi-core processor (multi-CPU). The processor herein may refer to one or more devices, circuits, and/or processing cores configured to process data (for example, computer program instructions).

The memory 3002 is configured to store a software program for executing the solutions in this application, and the processor 3001 controls the execution. For a specific implementation, refer to the foregoing method embodiments. Details are not described herein again.

Optionally, the memory 3002 may be a read-only memory (read-only memory, ROM), another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, any other medium that can be used to carry or store expected program code in a form of an instruction or a data structure and that can be accessed by a computer. The memory 3002 is not limited thereto. The memory 3002 may be integrated with the processor 3001, or may exist independently, and is coupled to the processor 3001 through an interface circuit (not shown in FIG. 30) of the communication apparatus 3000. This is not specifically limited in this embodiment of this application.

The transceiver 3003 is configured to communicate with another communication apparatus. For example, the communication apparatus 3000 is a terminal device, and the transceiver 3003 may be configured to communicate with a network device or communicate with another terminal device. For another example, the communication apparatus 3000 is a network device, and the transceiver 3003 may be configured to communicate with a terminal device or communicate with another network device.

Optionally, the transceiver 3003 may include a receiver and a transmitter (which are not separately shown in FIG. 30). The receiver is configured to implement a receiving function, and the transmitter is configured to implement a sending function.

Optionally, the transceiver 3003 may be integrated with the processor 3001, or may exist independently, and is coupled to the processor 3001 through an interface circuit (not shown in FIG. 30) of the communication apparatus 3000. This is not specifically limited in this embodiment of this application. In addition, the interface circuit may alternatively be an input/output interface.

It should be noted that the structure of the communication apparatus 3000 shown in FIG. 30 does not constitute a limitation on the communication apparatus. An actual communication apparatus may include more or fewer parts than those shown in the figure, or combine some parts, or have different part arrangements.

In addition, for a technical effect of the communication apparatus 3000, refer to the technical effect of the communication method in the foregoing method embodiments. Details are not described herein again.

An embodiment of this application provides a communication system. The communication system includes one or more terminals described above or one or more network devices described above. The terminal or the network device is configured to perform the method in FIG. 8 or FIG. 26.

It should be understood that, in embodiments of this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

All or a part of the foregoing embodiments may be implemented by using software, hardware (for example, a circuit), firmware, or any combination thereof. When being implemented by using the software, all or some of the foregoing embodiments may be implemented in a form of a computer program product. The computer program product includes one or more computer instructions or computer programs. When the computer instructions or the computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from the computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one (item) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and the electronic hardware. Whether the functions are performed by hardware or software depends on particular applications and design constraints of the technical solutions. A person skilled in the art may use different methods to implement the described functions of each particular application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, the unit division is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to an existing technology, or all or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

**Claims**

1. A communication method, wherein the method comprises:

   receiving (S802), by a first node, a first packet from a second node, wherein the first packet comprises multicast routing information of the second node, the first node is a child node of the second node in a multicast tree, a multicast routing identifier of a node is used by a non-leaf child node of the node in the multicast tree to determine multicast routing information of the non-leaf child node, and multicast routing information of a node comprises a multicast routing identifier of the node and multicast routing information of a non-leaf child node of the node in the multicast tree; and
   parsing (S803), by the first node, the first packet.

2. The method according to claim 1, wherein the first node is a non-leaf child node of the second node, a third node is a child node of the first node, and the parsing (S803), by the first node, the first packet comprises:

   generating, by the first node, a second packet based on the first packet, wherein the second packet comprises multicast routing information of the first node or multicast routing information of the third node, and the multicast routing information of the first node comprises any one of the following: a multicast routing identifier of the first node and the multicast routing information of the third node, the multicast routing identifier of the first node, or the multicast routing identifier of the first node and a multicast routing identifier of the third node; and
   after the parsing (S803), by the first node, the first packet, the method further comprises:
   sending, by the first node, the second packet to the third node.

3. The method according to claim 2, wherein the generating, by the first node, a second packet based on the first packet comprises:

   determining, by the first node, the multicast routing information of the first node based on a multicast routing identifier of the second node; and
   performing, by the first node, packet encapsulation based on the multicast routing information of the second node, to obtain the second packet; or
   the generating, by the first node, a second packet based on the first packet comprises:

      determining, by the first node, the multicast routing information of the first node based on a multicast routing identifier of the second node;
      determining, by the first node, the multicast routing information of the third node based on the multicast routing identifier of the first node in the multicast routing information of the first node; and
      performing, by the first node, packet encapsulation based on the multicast routing information of the third node, to obtain the second packet.

4. The method according to claim 3, wherein the determining, by the first node, the multicast routing information of the first node based on a multicast routing identifier of the second node comprises:

   determining, by the first node, a location of the first node in a first node set based on the multicast routing identifier of the second node, wherein the first node set is a node set corresponding to the second node, and the first node set comprises some or all potential child nodes of the second node; and
   determining, by the first node, the multicast routing information of the first node based on the location of the first node in the first node set.

5. The method according to claim 4, wherein the multicast routing identifier of the second node comprises N first fields, N is a quantity of nodes in the first node set, and the determining, by the first node, a location of the first node in a first node set based on the multicast routing identifier of the second node comprises:
   determining, by the first node, a location of a first field corresponding to the first node in the N first fields, wherein the location of the first field corresponding to the first node indicates the location of the first node in the first node set.

6. The method according to claim 3, wherein the multicast routing information of the second node further comprises an addressing field of the second node, and the determining, by the first node, the multicast routing information of the first node based on a multicast routing identifier of the second node comprises:
   determining, by the first node, the multicast routing information of the first node based on the multicast routing identifier of the second node and the addressing field of the second node.

7. The method according to claim 6, wherein the addressing field of the second node indicates lengths of multicast routing information of child nodes of the second node; the addressing field of the second node indicates start locations or end locations of multicast routing information of child nodes of the second node; or the addressing field of the second node comprises a plurality of delimitation fields, and multicast routing information of child nodes of the second node is separated by the plurality of delimitation fields.

8. The method according to any one of claims 2 to 7, wherein the first node and the third node are nodes in a first network, the second packet further comprises a first header and a second header, the first header comprises the multicast routing information of the third node or the multicast routing information of the first node, and the second header comprises unicast/multicast information of a second network.

9. The method according to claim 8, wherein the first node has a correspondence between the multicast routing identifier of the first node or the multicast routing identifier of the third node and the unicast/multicast information of the second network.

10. The method according to claim 8 or 9, wherein the first node is a node in the second network.

11. The method according to claim 1, wherein the first node is a leaf child node of the second node, and the parsing, by the first node, the first packet comprises:

    generating, by the first node, a third packet based on the first packet, wherein the third packet comprises unicast/multicast information of a first device; and
    after the parsing, by the first node, the first packet, the method further comprises:
    sending, by the first node, the third packet to the first device.

12. The method according to claim 11, wherein the first packet comprises a multicast routing identifier of the first node, and the multicast routing identifier of the first node indicates that a destination device is the first device.

13. A communication method, wherein the method comprises:

    obtaining (S801), by a second node, a first packet, wherein the first packet comprises multicast routing information of the second node, a multicast routing identifier of a node is used by a non-leaf child node of the node in a multicast tree to determine multicast routing information of the non-leaf child node, and multicast routing information of a node comprises a multicast routing identifier of the node and multicast routing information of a non-leaf child node of the node in the multicast tree; and
    sending (S802), by the second node, the first packet to a first node, wherein the first node is a child node of the second node in the multicast tree.

14. The method according to claim 13, wherein the first node and the second node are nodes in a first network, the first packet further comprises a third header and a fourth header, the third header comprises the multicast routing information of the second node, and the fourth header comprises unicast/multicast information of a third network.

15. A communication apparatus, wherein the apparatus comprises a processor and a memory, the memory is configured to store a computer program, and when the processor executes the program, the method according to any one of claims 1 to 12 is performed or the method according to any one of claims 13 and 14 is performed.

**Patentansprüche**

1. Kommunikationsverfahren, wobei das Verfahren Folgendes umfasst:

    Empfangen (S802), durch einen ersten Knoten, eines ersten Pakets von einem zweiten Knoten, wobei das erste Paket Multicast-Routing-Informationen des zweiten Knotens umfasst, der erste Knoten ein untergeordneter Knoten des zweiten Knotens in einem Multicast-Baum ist, eine Multicast-Routing-Kennung eines Knotens durch einen untergeordneten Nichtblatt-Knoten des Knotens in dem Multicast-Baum verwendet wird, um Multicast-Routing-Informationen des untergeordneten Nichtblatt-Knotens zu bestimmen, und die Multicast-Routing-Informationen eines Knotens eine Multicast-Routing-Kennung des Knotens und Multicast-Routing-Informationen eines untergeordneten Nichtblatt-Knotens des Knotens in dem Multicast-Baum umfassen; und

Parsen (S803), durch den ersten Knoten, des ersten Pakets.

2. Verfahren nach Anspruch 1, wobei der erste Knoten ein untergeordneter Nichtblatt-Knoten des zweiten Knotens ist, ein dritter Knoten ein untergeordneter Knoten des ersten Knotens ist und das Parsen (S803), durch den ersten Knoten, des ersten Pakets Folgendes umfasst:

Generieren, durch den ersten Knoten, eines zweiten Pakets basierend auf dem ersten Paket, wobei das zweite Paket Multicast-Routing-Informationen des ersten Knotens oder Multicast-Routing-Informationen des dritten Knotens umfasst und die Multicast-Routing-Informationen des ersten Knotens beliebiges der Folgenden umfassen: eine Multicast-Routing-Kennung des ersten Knotens und die Multicast-Routing-Informationen des dritten Knotens, die Multicast-Routing-Kennung des ersten Knotens oder die Multicast-Routing-Kennung des ersten Knotens und eine Multicast-Routing-Kennung des dritten Knotens; und

das Verfahren nach dem Parsen (S803), durch den ersten Knoten, des ersten Pakets ferner Folgendes umfasst: Senden, durch den ersten Knoten, des zweiten Pakets an den dritten Knoten.

3. Verfahren nach Anspruch 2, wobei das Generieren, durch den ersten Knoten, eines zweiten Pakets basierend auf dem ersten Paket Folgendes umfasst:

Bestimmen, durch den ersten Knoten, der Multicast-Routing-Informationen des ersten Knotens basierend auf einer Multicast-Routing-Kennung des zweiten Knotens; und
Durchführen, durch den ersten Knoten, von Paketkapselung basierend auf den Multicast-Routing-Informationen des zweiten Knotens, um das zweite Paket zu erlangen; oder

das Generieren, durch den ersten Knoten, eines zweiten Pakets basierend auf dem ersten Paket Folgendes umfasst:

Bestimmen, durch den ersten Knoten, der Multicast-Routing-Informationen des ersten Knotens basierend auf einer Multicast-Routing-Kennung des zweiten Knotens;
Bestimmen, durch den ersten Knoten, der Multicast-Routing-Informationen des dritten Knotens basierend auf der Multicast-Routing-Kennung des ersten Knotens in den Multicast-Routing-Informationen des ersten Knotens; und
Durchführen, durch den ersten Knoten, von Paketkapselung basierend auf den Multicast-Routing-Informationen des dritten Knotens, um das zweite Paket zu erlangen.

4. Verfahren nach Anspruch 3, wobei das Bestimmen, durch den ersten Knoten, der Multicast-Routing-Informationen des ersten Knotens basierend auf einer Multicast-Routing-Kennung des zweiten Knotens Folgendes umfasst:

Bestimmen, durch den ersten Knoten, einer Position des ersten Knotens in einem ersten Knotensatz basierend auf der Multicast-Routing-Kennung des zweiten Knotens, wobei der erste Knotensatz ein Knotensatz ist, der dem zweiten Knoten entspricht, und der erste Knotensatz einige oder alle potenziellen untergeordneten Knoten des zweiten Knotens umfasst; und
Bestimmen, durch den ersten Knoten, der Multicast-Routing-Informationen des ersten Knotens basierend auf der Position des ersten Knotens in dem ersten Knotensatz.

5. Verfahren nach Anspruch 4, wobei die Multicast-Routing-Kennung des zweiten Knotens N erste Felder umfasst, N eine Menge von Knoten in dem ersten Knotensatz ist und das Bestimmen, durch den ersten Knoten, einer Position des ersten Knotens in dem ersten Knotensatz basierend auf der Multicast-Routing-Kennung des zweiten Knotens Folgendes umfasst:
Bestimmen, durch den ersten Knoten, einer Position eines ersten Felds, das dem ersten Knoten in den N ersten Feldern entspricht, wobei die Position des ersten Felds, das dem ersten Knoten entspricht, die Position des ersten Knotens in dem ersten Knotensatz angibt.

6. Verfahren nach Anspruch 3, wobei die Multicast-Routing-Informationen des zweiten Knotens ferner ein Adressierungsfeld des zweiten Knotens umfassen und das Bestimmen, durch den ersten Knoten, der Multicast-Routing-Informationen des ersten Knotens basierend auf einer Multicast-Routing-Kennung des zweiten Knotens Folgendes umfasst:
Bestimmen, durch den ersten Knoten, der Multicast-Routing-Informationen des ersten Knotens basierend auf der Multicast-Routing-Kennung des zweiten Knotens und dem Adressierungsfeld des zweiten Knotens.

7. Verfahren nach Anspruch 6, wobei das Adressierungsfeld des zweiten Knotens die Längen der Multicast-Routing-Informationen von untergeordneten Knoten des zweiten Knotens angibt; das Adressierungsfeld des zweiten Knotens Startpositionen oder Endpositionen der Multicast-Routing-Informationen von untergeordneten Knoten des zweiten Knotens angibt; oder das Adressierungsfeld des zweiten Knotens eine Vielzahl von Begrenzungsfeldern umfasst und die Multicast-Routing-Informationen von untergeordneten Knoten des zweiten Knotens durch die Vielzahl von Begrenzungsfeldern getrennt sind.

8. Verfahren nach einem der Ansprüche 2 bis 7, wobei der erste Knoten und der dritte Knoten Knoten in einem ersten Netzwerk sind, das zweite Paket ferner einen ersten Header und einen zweiten Header umfasst, der erste Header die Multicast-Routing-Informationen des dritten Knotens oder die Multicast-Routing-Informationen des ersten Knotens umfasst und der zweite Header Unicast/Multicast-Informationen eines zweiten Netzwerks umfasst.

9. Verfahren nach Anspruch 8, wobei der erste Knoten eine Entsprechung zwischen der Multicast-Routing-Kennung des ersten Knotens oder der Multicast-Routing-Kennung des dritten Knotens und den Unicast/Multicast-Informationen des zweiten Netzwerks aufweist.

10. Verfahren nach Anspruch 8 oder 9, wobei der erste Knoten ein Knoten in dem zweiten Netzwerk ist.

11. Verfahren nach Anspruch 1, wobei der erste Knoten ein untergeordneter Blattknoten des zweiten Knotens ist und das Parsen, durch den ersten Knoten, des ersten Pakets Folgendes umfasst:

Generieren, durch den ersten Knoten, eines dritten Pakets basierend auf dem ersten Paket, wobei das dritte Paket Unicast/Multicast-Informationen einer ersten Vorrichtung umfasst; und das Verfahren nach dem Parsen, durch den ersten Knoten, des ersten Pakets ferner Folgendes umfasst: Senden, durch den ersten Knoten, des dritten Pakets an die erste Vorrichtung.

12. Verfahren nach Anspruch 11, wobei das erste Paket eine Multicast-Routing-Kennung des ersten Knotens umfasst und die Multicast-Routing-Kennung des ersten Knotens angibt, dass eine Zielvorrichtung die erste Vorrichtung ist.

13. Kommunikationsverfahren, wobei das Verfahren Folgendes umfasst:

Erlangen (S801), durch einen zweiten Knoten, eines ersten Pakets, wobei das erste Paket Multicast-Routing-Informationen des zweiten Knotens umfasst, eine Multicast-Routing-Kennung eines Knotens durch einen untergeordneten Nichtblatt-Knoten des Knotens in einem Multicast-Baum verwendet wird, um Multicast-Routing-Informationen des untergeordneten Nichtblatt-Knotens zu bestimmen, und die Multicast-Routing-Informationen eines Knotens eine Multicast-Routing-Kennung des Knotens und Multicast-Routing-Informationen eines untergeordneten Nichtblatt-Knotens des Knotens in dem Multicast-Baum umfassen; und Senden (S802), durch den zweiten Knoten, des ersten Pakets an einen ersten Knoten, wobei der erste Knoten ein untergeordneter Knoten des zweiten Knotens in dem Multicast-Baum ist.

14. Verfahren nach Anspruch 13, wobei der erste Knoten und der zweite Knoten Knoten in einem ersten Netzwerk sind, das erste Paket ferner einen dritten Header und einen vierten Header umfasst, der dritte Header die Multicast-Routing-Informationen des zweiten Knotens umfasst und der vierte Header Unicast/Multicast-Informationen eines dritten Netzwerks umfasst.

15. Kommunikationsgerät, wobei das Gerät einen Prozessor und einen Speicher umfasst, der Speicher dazu konfiguriert ist, ein Computerprogramm zu speichern, und, wenn der Prozessor das Programm ausführt, das Verfahren nach einem der Ansprüche 1 bis 12 durchgeführt wird oder das Verfahren nach einem der Ansprüche 13 und 14 durchgeführt wird.

**Revendications**

1. Procédé de communication, dans lequel le procédé comprend :

la réception (S802), par un premier nœud, d'un premier paquet provenant d'un deuxième nœud, dans lequel le premier paquet comprend des informations de routage multidiffusion du deuxième nœud, le premier nœud est un nœud enfant du deuxième nœud dans une arborescence de multidiffusion, un identifiant de routage multidiffusion d'un nœud est utilisé par un nœud enfant non-feuille du nœud dans l'arborescence de multidiffusion pour déterminer les informations de routage multidiffusion du nœud enfant non-feuille, et les informations de routage multidiffusion d'un nœud comprennent un identifiant de routage multidiffusion du nœud et des informations de routage multidiffusion d'un nœud enfant non-feuille du nœud dans l'arborescence de multidiffusion ; et l'analyse (S803), par le premier nœud, du premier paquet.

2. Procédé selon la revendication 1, dans lequel le premier nœud est un nœud enfant non-feuille du deuxième nœud, un troisième nœud est un nœud enfant du premier nœud, et l'analyse (S803), par le premier nœud, du premier paquet comprend :

la génération, par le premier nœud, d'un deuxième paquet basé sur le premier paquet, dans lequel le deuxième paquet comprend des informations de routage multidiffusion du premier nœud ou des informations de routage multidiffusion du troisième nœud, et les informations de routage multidiffusion du premier nœud comprennent l'un des éléments suivants : un identifiant de routage multidiffusion du premier nœud et les informations de routage multidiffusion du troisième nœud, l'identifiant de routage multidiffusion du premier nœud, ou l'identifiant de routage multidiffusion du premier nœud et un identifiant de routage multidiffusion du troisième nœud ; et après l'analyse (S803), par le premier nœud, du premier paquet, le procédé comprend également : l'envoi, par le premier nœud, du deuxième paquet au troisième nœud.

3. Procédé selon la revendication 2, dans lequel la génération, par le premier nœud, d'un deuxième paquet basé sur le premier paquet comprend :

la détermination, par le premier nœud, des informations de routage multidiffusion du premier nœud basé sur un identifiant de routage multidiffusion du deuxième nœud ; et la réalisation, par le premier nœud, d'une encapsulation de paquets basée sur les informations de routage multidiffusion du deuxième nœud, pour obtenir le deuxième paquet ; ou la génération, par le premier nœud, d'un deuxième paquet basé sur le premier paquet comprend :

la détermination, par le premier nœud, des informations de routage multidiffusion du premier nœud basé sur un identifiant de routage multidiffusion du deuxième nœud ; la détermination, par le premier nœud, des informations de routage multidiffusion du troisième nœud basé sur l'identifiant de routage multidiffusion du premier nœud dans les informations de routage multidiffusion du premier nœud ; et la réalisation, par le premier nœud, d'une encapsulation de paquets basée sur les informations de routage multidiffusion du troisième nœud, pour obtenir le deuxième paquet.

4. Procédé selon la revendication 3, dans lequel la détermination, par le premier nœud, des informations de routage multidiffusion du premier nœud basé sur un identifiant de routage multidiffusion du deuxième nœud comprend :

la détermination, par le premier nœud, d'un emplacement du premier nœud dans un premier ensemble de nœuds basé sur l'identifiant de routage multidiffusion du deuxième nœud, dans lequel le premier ensemble de nœuds est un ensemble de nœuds correspondant au deuxième nœud, et le premier ensemble de nœuds comprend certains ou tous les nœuds enfants potentiels du deuxième nœud ; et la détermination, par le premier nœud, des informations de routage multidiffusion du premier nœud basé sur l'emplacement du premier nœud dans le premier ensemble de nœuds.

5. Procédé selon la revendication 4, dans lequel l'identifiant de routage multidiffusion du deuxième nœud comprend N premiers champs, N est un nombre de nœuds dans le premier ensemble de nœuds, et la détermination, par le premier nœud, d'un emplacement du premier nœud dans un premier ensemble de nœuds basé sur l'identifiant de routage multidiffusion du deuxième nœud comprend : la détermination, par le premier nœud, d'un emplacement d'un premier champ correspondant au premier nœud dans les N premiers champs, dans lequel l'emplacement du premier champ correspondant au premier nœud indique l'emplacement du premier nœud dans le premier ensemble de nœuds.

6. Procédé selon la revendication 3, dans lequel les informations de routage multidiffusion du deuxième nœud comprennent également un champ d'adressage du deuxième nœud, et la détermination, par le premier nœud, des informations de routage multidiffusion du premier nœud basé sur un identifiant de routage multidiffusion du deuxième nœud comprend :

la détermination, par le premier nœud, des informations de routage multidiffusion du premier nœud basé sur l'identifiant de routage multidiffusion du deuxième nœud et le champ d'adressage du deuxième nœud.

7. Procédé selon la revendication 6, dans lequel le champ d'adressage du deuxième nœud indique des longueurs d'informations de routage multidiffusion de nœuds enfants du deuxième nœud ; le champ d'adressage du deuxième nœud indique des emplacements de début ou des emplacements de fin des informations de routage multidiffusion des nœuds enfants du deuxième nœud ; ou le champ d'adressage du deuxième nœud comprend une pluralité de champs de délimitation, et les informations de routage multidiffusion de nœuds enfants du deuxième nœud sont séparées par la pluralité de champs de délimitation.

8. Procédé selon l'une quelconque des revendications 2 à 7, dans lequel le premier nœud et le troisième nœud sont des nœuds dans un premier réseau, le deuxième paquet comprend également un premier en-tête et un deuxième en-tête, le premier en-tête comprend les informations de routage multidiffusion du troisième nœud ou les informations de routage multidiffusion du premier nœud, et le deuxième en-tête comprend les informations de monodiffusion/multidiffusion d'un deuxième réseau.

9. Procédé selon la revendication 8, dans lequel le premier nœud a une correspondance entre l'identifiant de routage multidiffusion du premier nœud ou l'identifiant de routage multidiffusion du troisième nœud et les informations de monodiffusion/multidiffusion du deuxième réseau.

10. Procédé selon la revendication 8 ou 9, dans lequel le premier nœud est un nœud dans le deuxième réseau.

11. Procédé selon la revendication 1, dans lequel le premier nœud est un nœud enfant feuille du deuxième nœud, et l'analyse, par le premier nœud, du premier paquet comprend :

la génération, par le premier nœud, d'un troisième paquet basé sur le premier paquet, dans lequel le troisième paquet comprend des informations de monodiffusion/multidiffusion d'un premier dispositif ; et
après l'analyse, par le premier nœud, du premier paquet, le procédé comprend également :
l'envoi, par le premier nœud, du troisième paquet au premier dispositif.

12. Procédé selon la revendication 11, dans lequel le premier paquet comprend un identifiant de routage multidiffusion du premier nœud, et l'identifiant de routage multidiffusion du premier nœud indique qu'un dispositif de destination est le premier dispositif.

13. Procédé de communication, dans lequel le procédé comprend :

l'obtention (S801), par un deuxième nœud, d'un premier paquet, dans lequel le premier paquet comprend des informations de routage multidiffusion du deuxième nœud, un identifiant de routage multidiffusion d'un nœud est utilisé par un nœud enfant non-feuille du nœud dans une arborescence de multidiffusion pour déterminer les informations de routage multidiffusion du nœud enfant non-feuille, et les informations de routage multidiffusion d'un nœud comprennent un identifiant de routage multidiffusion du nœud et des informations de routage multidiffusion d'un nœud enfant non-feuille du nœud dans l'arborescence de multidiffusion ; et
l'envoi (S802), par le deuxième nœud, du premier paquet à un premier nœud, dans lequel le premier nœud est un nœud enfant du deuxième nœud dans l'arborescence de multidiffusion.

14. Procédé selon la revendication 13, dans lequel le premier nœud et le deuxième nœud sont des nœuds dans un premier réseau, le premier paquet comprend également un troisième en-tête et un quatrième en-tête, le troisième en-tête comprend les informations de routage de multidiffusion du deuxième nœud, et le quatrième en-tête comprend les informations de monodiffusion/multidiffusion d'un troisième réseau.

15. Appareil de communication, dans lequel l'appareil comprend un processeur et une mémoire, la mémoire est configurée pour stocker un programme informatique, et lorsque le processeur exécute le programme, le procédé selon l'une quelconque des revendications 1 à 12 est réalisé ou le procédé selon l'une quelconque des revendications 13 et 14 est réalisé.

FIG. 1A

(a)

(b)

FIG. 1B

(a)                                    (b)

Node

FIG. 2

Router A                Multicast        Router B                Multicast        Router C
(supporting              packet          (not supporting         packet          (supporting
multicast)          ——————————→          multicast)          ——————————→          multicast)

FIG. 3A

Node

FIG. 3B

FIG. 4

(a)

(b)

(c)

FIG. 5

FIG. 6

EP 4 380 129 B1

FIG. 7

FIG. 8

63

| Multicast routing identifier of the node $2_0$ | Multicast routing information of the 1st non-leaf child node of the node $2_0$ | Multicast routing information of the 2nd non-leaf child node of the node $2_0$ | . . . | Multicast routing information of the (M2)th non-leaf child node of the node $2_0$ |
|---|---|---|---|---|

| Multicast routing identifier of the second node | Multicast routing information of the node $2_0$ | Multicast routing information of the node $2_1$ | . . . | Multicast routing information of the node $2_{M1-1}$ |
|---|---|---|---|---|

First packet →

| Multicast routing information of a second node | Payload |
|---|---|

Packet header

Node $2_0$: 1st non-leaf child node of the second node

Node $2_1$: 2nd non-leaf child node of the second node

Node $2_{M1-1}$: (M1)th non-leaf child node of the second node

FIG. 9

(a)

(b)

FIG. 10

| Multicast routing identifier of the node $2_0$ | Addressing field of the node $2_0$ | Multicast routing information of the 1st non-leaf child node of the node $2_0$ | Multicast routing information of the 2nd non-leaf child node of the node $2_0$ | $\cdots$ | Multicast routing information of the $(M2)^{th}$ non-leaf child node of the node $2_0$ |
|---|---|---|---|---|---|

| Second field | Multicast routing identifier of the second node | Addressing field of the second node | Multicast routing information of the node $2_0$ | Multicast routing information of the node $2_1$ | $\cdots$ | Multicast routing information of the node $2_{M1-1}$ | Third field |
|---|---|---|---|---|---|---|---|

First packet $\longrightarrow$

| Outer encapsulation | Multicast routing information of a second node | Inner encapsulation | Payload |
|---|---|---|---|

Packet header

Node $2_0$: 1st non-leaf child node of the second node    Node $2_1$: 2nd non-leaf child node of the second node    Node $2_{M1-1}$: $(M1)^{th}$ non-leaf child node of the second node

FIG. 11

| Multicast routing identifier of the node A | Addressing field of the node A | Multicast routing identifier of the node E | Multicast routing identifier of the node F |

| Multicast routing identifier of the node B | Addressing field of the node B | Multicast routing identifier of the node H |

| Second field | Multicast routing identifier of the node D | Addressing field of the node D | Multicast routing information of the node A | Multicast routing information of the node B | Multicast routing identifier of the node C | Third field |

Packet sent by a node D to a node A, a node B, and a node C →

| Multicast routing information of the node D | Payload |

Packet header

FIG. 12

Cnt: quantity          Idx: index

| Cnt | Idx$_1$ | Idx$_2$ | ... | Idx$_x$ |

Multicast routing identifier

(a)

Bit: bit

| Bit sequence |

Multicast routing identifier

(b)

GID: Group identifier

| GID |

Multicast routing identifier

(c)

FIG. 13

| 0 | 1 | 0 | 0 | 1 | 1 |
|---|---|---|---|---|---|

| Table index | Address of the next hop |
|---|---|
| 0 | Address of the node A |
| 1 | Address of the node B |
| 2 | Address of the node C |
| 3 | Address of the node D |
| 4 | Address of the node E |
| 5 | Address of the node F |

First case

| 0 | 1 | 0 | 0 | 1 | 1 |
|---|---|---|---|---|---|

| Table index | Address of the next hop |
|---|---|
| 0 | Address of the node A |
| 1 | Address of the node B |
| 2 | Address of the node C |
| 3 | Address of the node D |
| 4 | Address of the node E |
| 5 | Address of the node F |

Second case

| 0 | 1 | 0 | 0 | 1 | 1 |
|---|---|---|---|---|---|

| Table index | Address of the next hop |
|---|---|
| 1 | Address of the node A |
| 2 | Address of the node B |
| 3 | Address of the node C |
| 4 | Address of the node D |
| 5 | Address of the node E |
| 6 | Address of the node F |

Third case

| 0 | 1 | 0 | 0 | 1 | 1 |
|---|---|---|---|---|---|

| Table index | Address of the next hop |
|---|---|
| 1 | Address of the node A |
| 2 | Address of the node B |
| 3 | Address of the node C |
| 4 | Address of the node D |
| 5 | Address of the node E |
| 6 | Address of the node F |

Fourth case

FIG. 14

Type: type          Cnt: quantity          Idx: index

| Type | Cnt | $Idx_1$ | $Idx_2$ | ... | $Idx_x$ |
|------|-----|---------|---------|-----|---------|

Multicast routing identifier

(a)

Type: type          Bit: bit

| Type | Bit sequence |
|------|--------------|

Multicast routing identifier

(b)

Type: type          GID: Group identifier

| Type | GID |
|------|-----|

Multicast routing identifier

(c)

FIG. 15

First case: $L_0$, $L_1$, ..., and $L_{M-2}$
Second case: $L_0$, $L_1$, ..., and $L_{M-1}$

| Second field | Multicast routing identifier | Addressing field | Recursive unit 0 | Recursive unit 1 | ... | Recursive unit M−1 | Third field |
|--------------|------------------------------|------------------|------------------|------------------|-----|--------------------|-------------|

Multicast routing information

Multicast information

FIG. 16

$O_1, O_2, ..., and O_M$

| Seventh field | Multicast routing identifier | Addressing field | Recursive unit 0 | Recursive unit 1 | . . . | Recursive unit M–1 | Third field |
|---|---|---|---|---|---|---|---|

Multicast routing information

Multicast information

(a)

Addressing field

| Seventh field | Multicast routing identifier | ▨ | Recursive unit 0 | ▨ | Recursive unit 1 | ▨ | . . . | ▨ | Recursive unit M–1 | Third field |
|---|---|---|---|---|---|---|---|---|---|---|

Multicast routing information

Multicast information

(b)

$O_0, O_1, ..., and O_{M-1}$

| Seventh field | Multicast routing identifier | Addressing field | Recursive unit 0 | Recursive unit 1 | . . . | Recursive unit M–1 | Third field |
|---|---|---|---|---|---|---|---|

Multicast routing information

Multicast information

(c)

FIG. 17

Delimitation field

| Sixth field | Multicast routing identifier | Recursive unit 0 | ▨ | Recursive unit 1 | ▨ | . . . | ▨ | Recursive unit M–1 | Third field |
|---|---|---|---|---|---|---|---|---|---|

Multicast routing information

Multicast information

FIG. 18

Multicast routing information
of a second node

| Third header | Payload |

Unicast/Multicast
information of a
third network

Multicast routing
information of the
second node

| Fourth header | Third header | Payload |

First packet

FIG. 19

FIG. 20

Multicast routing
information of a first
node/a third node

| First header | Payload |
|---|---|

Unicast/Multicast
information of a
second network

Multicast routing
information of the first
node/the third node

| Second header | First header | Payload |
|---|---|---|

FIG. 21

Multicast information of a
second node

| New multicast header | IP header | Payload |
|---|---|---|

Second packet

| IP header | Payload |
|---|---|

| IP header | Payload |
|---|---|

Encapsulate unicast/
multicast information of a
first device in the IP header

Third packet

FIG. 22

Multicast information of a
second node

| New multicast header | IP header | Payload |
|---|---|---|

Second packet

| IP header | Payload |
|---|---|

| BIER header | IP header | Payload |
|---|---|---|

Third packet

Bit string information
of a first device

FIG. 23

| S2401: A first entity receives a first multicast packet |
|---|

| S2402: The first entity determines a second entity based on a first multicast routing identifier of a first node |
|---|

| S2403: The first entity sends a second multicast packet to the second entity |
|---|

FIG. 24

FIG. 25(a)

Total-Len means a total length of multicast routing information of D, and "bit" means a bit

| Unicast/ Multicast information 1 | Total-Len: 37 | D: 111 | Len=18 | A: 011 | Len=4 | E: 0111 | F: 01 | Len=5 | B: 01 | H: 011 | C: 011 | 3 bits | IP header | Payload |

| Unicast/ Multicast information 2 | Total-Len: 17 | A: 011 | Len=4 | E: 0111 | F: 01 | 6 bits | IP header | Payload |
|---|---|---|---|---|---|---|---|---|

Total-Len means a total length of multicast routing information of A, and "bit" means a bit

FIG. 25(b)

Unicast/ Multicast information 3 →

| IP header | Payload |
|---|---|

| BIER multicast information 1 | IP header | Payload |
|---|---|---|

FIG. 25(c)

| Unicast/Multicast information 4 | Total-Len: 5 | B: 01 | H: 011 | 3 bits | IP header | Payload |
|---|---|---|---|---|---|---|

Total-Len means a total length of multicast routing information of B, and "bit" means a bit

FIG. 25(d)

Unicast/
Multicast
information 5

→

| IP header | Payload |
|---|---|

| BIER multicast information 2 | IP header | Payload |
|---|---|---|

FIG. 25(e)

Unicast/
Multicast
information 6

→

| IP header | Payload |
|---|---|

| BIER multicast information 3 | IP header | Payload |
|---|---|---|

FIG. 25(f)

| Fourth node | | Fifth node |
|---|---|---|

S2601: Obtain a fourth packet

S2602: Fifth packet →

S2603: Parse the fifth packet

FIG. 26

FIG. 27

| Header 3: 010 | Header 1: 010 | Payload |
|---|---|---|

Packet A
(a)

| Header 4: 100 | Header 2: 001 | Payload |
|---|---|---|

Packet B
(b)

| Header 1: 010 | Payload |
|---|---|

Packet C
(c)

| Header 2: 001 | Payload |
|---|---|

Packet D
(d)

FIG. 28

Communication apparatus 2900

2902

Processing module ←→ Transceiver module

2901

## FIG. 29

Communication apparatus 3000

3001

Processor

CPU 0

CPU 1

3004

Processor

CPU 0

CPU 1

3002

Memory

3003

Transceiver

## FIG. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110977642
- EP 3751805 A1

- WO 2017168203 A1